# EUROPEAN PATENT SPECIFICATION

(11) **EP 4 231 627 B1**
(45) Date of publication and mention of the grant of the patent: **21.10.2026**
(21) Application number: 21880298.1
(22) Date of filing: 24.08.2021
(51) Int. Cl.: G03B 5/00, G03B 17/12, G03B 3/10, G03B 19/22, G03B 30/00, H04N 23/54, H04N 23/55

(54) **CAMERA DEVICE**
KAMERAVORRICHTUNG
DISPOSITIF DE CAMÉRA

(30) Priority: 14.10.2020 KR 20200132516; 04.01.2021 KR 20210000157
(43) Date of publication of application: 23.08.2023
(60) Divisional application: 26201821.1 / 4 823 103
(73) Proprietor: LG Innotek Co., Ltd., Seoul 07796 (KR)
(72) Inventor: LEE, Jun Taek, Seoul 07796 (KR); YOO, Kyoung Ho, Seoul 07796 (KR)
(74) Representative: Plasseraud IP
(86) International application number: PCT/KR2021/011310
(87) International publication number: WO 2022/080650

(56) References cited:
- WO-A1-2020/076029
- JP-A- 2017 009 998
- JP-A- 2017 015 772
- KR-A- 20180 023 172
- KR-A- 20180 023 172
- KR-A- 20190 136 270
- KR-A- 20200 076 377
- KR-A- 20200 111 508
- US-A1- 2018 188 474

## Description

### [Technical Field]

The present embodiment relates to a camera device.

### [Background Art]

As the spread of various portable terminals is widely generalized and wireless Internet services are commercialized, the demands of consumers related to portable terminals are also diversifying, so that various types of additional devices are being installed in the portable terminals.

Among them, a typical example is a camera module that photographs a picture or video of a subject. Meanwhile, an auto focus function for automatically adjusting a focus according to a distance of a subject is applied to a recent camera module. In addition, a handshake correction function for compensating the user's handshake is also applied.

However, in the prior art, when the portion for soldering the terminal of the lens driving device on the printed circuit board and the gyro sensor are being disposed adjacent to each other, since the soldering work becomes difficult, as the gyro sensor is displaced to be spaced apart from the lens actuator, there is a problem in that the size of the printed circuit board increases.

The document WO2020/076029A1 provides an example of camera module. The camera module may comprise a first camera module and a second camera module spaced apart from the first camera module, wherein: the first camera module includes a cover, a housing, a bobbin, a first coil, a first magnet, a second coil, a second magnet, and a first sensor; the first magnet includes a (1-1)th magnet disposed at a position corresponding to a second side plate, a (1-2)th magnet disposed at a position corresponding to a third side plate, and a (1-3)th magnet disposed at a position corresponding to a fourth side plate; and a first dummy member and the first sensor are disposed at a position corresponding to a first side plate of the cover.

The documents US 2018/188474A1 provides an example of lens drive device, camera module, and camera mounting device. Provided is a lens drive device for which, before the device itself is assembled, the operation by an OIS voice coil motor in a shake correcting actuator is confirmed, so as to reduce the production costs in case of an operation defect and to achieve good production. The device comprises: a mobile body configured so that a magnet is disposed in a frame-shaped retaining member in which an imaging module is installed; a fixed body which has a base member and which is configured so that a coil is disposed in the base member; a support part that tiltably supports the mobile body relative to the fixed body; and a main substrate to which the fixed body is fixed. The fixed body includes a coil substrate having a terminal to which the coil is connected, and the coil is connected to a circuit of the main substrate via the terminal.

The document KR 2020/0076377A provides an example of lens driving device and camera device. The lens driving device has an autofocus function of which a width size is reduced through upper and lower overlapping arrangement of a magnet and a coil. An embodiment relates to a lens driving device which comprises: a housing; a bobbin disposed in the housing; a magnet disposed in the housing; a coil disposed on the bobbin; and an elastic member connecting the housing and the bobbin, wherein the magnet overlaps a first portion of the coil in a direction parallel to an optical axis, and the housing includes a first protrusion and a second protrusion which are spaced apart by a second width smaller than a first width of the magnet at least partially in a direction corresponding to the first width is at least partially in a direction corresponding to the first width. The first portion of the coil is disposed between the first protrusion and the second protrusion.

### [Detailed Description of the Invention]

### [Technical Subject]

A first embodiment of the present embodiment is intended to provide a camera device securing a space for disposing a gyro sensor by driving a terminal at one side of a lens driving device to a corner at one side thereof.

A second embodiment of the present embodiment is intended to provide a camera device arranged so that the terminal of the lens driving device and the gyro sensor do not interfere.

### [Technical Solution]

A camera device is provided in the appended claims.

A camera device according to a first embodiment of present embodiment comprises: a printed circuit board; a gyro sensor being disposed on a first surface of the printed circuit board; and a first lens driving device being disposed on the first surface of the printed circuit board, wherein the first lens driving device comprises: a cover member comprising an upper plate and a lateral plate being extended from the upper plate; a bobbin being disposed inside the cover member; a magnet being disposed inside the cover member; a coil for moving the bobbin; and a substrate being electrically connected to the coil, wherein the lateral plate of the cover member comprises a first lateral plate and a second lateral plate being disposed at an opposite side to each other, and a third lateral plate and a fourth lateral plate being disposed at an opposite side to each other, wherein the gyro sensor is disposed closest to the first lateral plate among the first to fourth lateral plates, wherein the substrate comprises a first terminal unit and a plurality of terminals being disposed in the first terminal unit and electrically connected to the printed circuit board, and wherein the first terminal unit of the substrate is disposed at a position corresponding to the first lateral plate of the cover member.

The first lens driving device comprises a base being coupled to the lateral plate of the cover member and a housing being disposed between the bobbin and the cover member, wherein the substrate is disposed in the base.

The first terminal unit may not be overlapped with the gyro sensor in a direction in which the second lateral plate faces the first lateral plate.

The substrate may comprise a second terminal unit being disposed at an opposite side of the first terminal unit, and the second terminal unit of the substrate may be disposed at a position corresponding to the second lateral plate of the cover member.

The length of the first terminal unit may be shorter than the length of the second terminal unit in a direction in which the third lateral plate faces the fourth lateral plate.

Seven or less terminals are disposed in the first terminal unit, and ten or more terminals may be disposed in the second terminal unit.

The first lateral plate of the cover member comprises a first region close to one corner among corners at both sides, and a second region close to the other corner among corners at both sides, wherein the first terminal unit is disposed in a position corresponding to the first region of the first lateral plate, and wherein the gyro sensor is disposed at a position corresponding to the second region of the first lateral plate.

The gyro sensor may be spaced apart from the cover member, the base, and the substrate.

The first terminal unit of the substrate is disposed closest to the first lateral plate among the first to fourth lateral plates.

The coil may comprise a first coil for moving the bobbin in an optical axis direction and a second coil for moving the bobbin in a direction perpendicular to the optical axis direction.

It comprises a second lens driving device being disposed on the first surface of the printed circuit board is comprised, wherein the second lens driving device may be disposed closest to the third lateral plate among the first to fourth lateral plates.

The first lens driving device comprises a dummy member being disposed at a position corresponding to the third lateral plate, wherein the magnet comprises a first magnet being disposed at a position corresponding to the first lateral plate, a second magnet being disposed at a position corresponding to the second lateral plate, and a third magnet being disposed at a position corresponding to the fourth lateral plate, and wherein the dummy member has a weight corresponding to that of the third magnet and may have a magnetic force weaker than or no magnetic force.

The first terminal unit may be disposed between the gyro sensor and the second lens driving device.

The printed circuit board comprises: a first portion on which the first lens driving device is disposed; a second portion on which a connector is disposed; and a third portion connecting the first portion and the second portion, wherein the third portion may be disposed closest to the second lateral plate among the first to fourth lateral plates.

The camera device may comprise: an image sensor being disposed on the printed circuit board; and a lens being coupled to the bobbin.

An optical device according to a first embodiment of present embodiment comprises: a main body; the camera device of claim 1 being disposed in the main body; and a display being disposed in the main body and outputting an image by the camera device.

The camera device according to the first embodiment of the present embodiment comprises: a printed circuit board; an image sensor being disposed in the printed circuit board; a gyro sensor being disposed on a first surface of the printed circuit board; a first lens driving device being disposed on the first surface of the printed circuit board; and a second lens driving device being disposed on the first surface of the printed circuit board. wherein the first lens driving device comprises: a cover member comprising an upper plate and a lateral plate being extended from the upper plate; a magnet being disposed inside the cover member; a coil being disposed inside the cover member; and a substrate being electrically connected to the coil, wherein the lateral plate of the cover member may comprise a first lateral plate and a second lateral plate being disposed at an opposite side to each other, and a third lateral plate and a fourth lateral plate being disposed at an opposite side to each other, wherein the second lens driving device is disposed closest to the third lateral plate among the first to fourth lateral plates, wherein the gyro sensor is disposed closest to the first lateral plate among the first to fourth lateral plates, and wherein the substrate may comprise a first terminal unit being disposed closest to the first lateral plate among the first to fourth lateral plates.

The lens driving device according to the first embodiment of the present embodiment comprises: a cover member comprising an upper plate and a lateral plate being extended from the upper plate; a magnet being disposed inside the cover member; a coil being disposed inside the cover member; and a substrate being electrically connected to the coil, wherein the lateral plate of the cover member comprises a first lateral plate and a second lateral plate being disposed at an opposite to each other, wherein the substrate comprises a first terminal unit being disposed at a position corresponding to the first lateral plate and a second terminal unit being disposed at a position corresponding to the second lateral plate, wherein the width of the first terminal unit in the first direction is smaller than the width of the second terminal unit in the first direction, and wherein the first terminal unit may be disposed closer to one corner of both sides of the first lateral plate.

The camera device according to the second embodiment of the present embodiment comprises: a printed circuit board; a first lens driving device being disposed on the printed circuit board; and a second lens driving device being disposed on the printed circuit board, wherein the first lens driving device comprises a first cover, a first base being coupled to the first cover, and a first substrate being disposed in the first base, wherein the second lens driving device comprises a second cover, wherein the first lateral plate of the first cover is disposed facing the first lateral plate of the second cover, wherein the first substrate comprises a terminal unit comprising a terminal being coupled to the printed circuit board, and wherein the terminal unit of the first substrate may comprise a first terminal unit being disposed at a position corresponding to the first lateral plate of the first cover.

An outer side surface of the first terminal unit may face the second lens driving device.

The first base may comprise a first side surface being disposed at a position corresponding to the first lateral plate of the first cover, wherein the first terminal unit may be disposed on the first side surface of the first base.

The terminal unit of the first substrate may comprise a second terminal unit being disposed at an opposite side of the first terminal unit.

The second lens driving device comprises a second base coupled to the second cover, and a second substrate disposed on the second base, wherein the second substrate may comprise a first terminal unit being disposed to face the first terminal unit of the first substrate.

The second substrate may comprise a second terminal unit being disposed at an opposite side of the first terminal unit of the second substrate.

The first cover comprises a second lateral plate being disposed at an opposite side of the first lateral plate, and a third lateral plate and a fourth lateral plate being disposed at an opposite side to each other, wherein a gyro sensor may be disposed adjacent to the third lateral plate of the first cover.

The second lens driving device comprises a second base being coupled to the second cover and a second substrate being disposed in the second base, wherein the second cover comprises a first lateral plate and a second lateral plate disposed at an opposite side to each other, and a third lateral plate and a fourth lateral plate being disposed at an opposite side to each other, and wherein the second substrate may comprise a first terminal unit being disposed at a position corresponding to the third lateral plate of the second cover.

The second substrate may comprise a second terminal unit being disposed at a position corresponding to the fourth lateral plate of the second cover.

The second substrate may comprise a second terminal unit being disposed at a position corresponding to the second lateral plate of the second cover.

The first cover comprises: a second lateral plate being disposed at an opposite side of the first lateral plate; and a third lateral plate and a fourth lateral plate being disposed at an opposite side to each other, wherein the second lens driving device comprises a second base being coupled to the second cover and a second substrate being disposed in the second base, wherein the second cover comprises a first lateral plate and a second lateral plate disposed at an opposite side to each other, and a third lateral plate and a fourth lateral plate being disposed at an opposite side to each other, wherein the second substrate comprises a first terminal unit being disposed at a position corresponding to the third lateral plate of the second cover and a second terminal unit being disposed at a position corresponding to the fourth lateral plate of the second cover, and wherein a gyro sensor may be disposed to be adjacent to the second lateral plate of the second cover.

The gyro sensor may be disposed closer to the third lateral plate than to the fourth lateral plate of the second cover.

The first lens driving device comprises: a first bobbin being disposed inside the first cover; a first housing being disposed between the first bobbin and the first cover; a first coil being disposed on the first bobbin; a first magnet being disposed in the first housing; a second coil being disposed in the first substrate, wherein the second lens driving device may comprise: a second base being coupled to the second cover; a second substrate being disposed in the second base; a second bobbin being disposed inside the second cover; a second housing being disposed between the second bobbin and the second cover; a third coil being disposed on the second bobbin; a second magnet being disposed in the second housing; and a fourth coil disposed on the second substrate.

The first magnet is not disposed between the first bobbin and the first lateral plate of the first cover, and the second magnet may not be disposed between the second bobbin and the first lateral plate of the second cover.

The optical device according to the second embodiment of the present embodiment may comprise: a main body; the camera device of claim 1 being disposed in the main body; and a display being disposed in the main body and outputting an image photographed through the camera device.

The camera device according to the second embodiment of the present embodiment comprises: a printed circuit board; a first lens driving device being disposed on the printed circuit board; and a second lens driving device being disposed on the printed circuit board, wherein the first lens driving device comprises: a first cover; a first base being coupled to the first cover; a first substrate being disposed in the first base, wherein the second lens driving device comprises: a second cover; a second base being coupled to the second cover; a second substrate being disposed in the second base, wherein each of the first cover and the second cover comprises: a first lateral plate and a second lateral plate being disposed at an opposite side to each other; a third lateral plate and a fourth lateral plate being disposed at an opposite side to each other, wherein the first lateral plate of the first cover is disposed to face the first lateral plate of the second cover, wherein each of the first substrate and the second substrate comprises a terminal unit comprising a terminal being coupled to the printed circuit board, wherein the terminal unit of the first substrate comprises: a first terminal unit being disposed at a position corresponding to the second lateral plate of the first cover; a second terminal unit being disposed at a position corresponding to the third lateral plate of the first cover, and wherein the terminal unit of the second substrate may comprise a first terminal unit being disposed at a position corresponding to the third lateral plate of the second cover.

The terminal unit of the second substrate may comprise a second terminal unit being disposed at a position corresponding to the fourth lateral plate of the second cover.

The terminal unit of the second substrate may comprise a second terminal unit being disposed at a position corresponding to the second lateral plate of the second cover.

The first lens driving device comprises: a first bobbin being disposed inside the first cover; a first housing being disposed between the first bobbin and the first cover; a first coil being disposed on the first bobbin; a first magnet being disposed in the first housing; and a second coil being disposed in the first substrate, wherein the first magnet may not be disposed between the first bobbin and the first lateral plate of the first cover.

A camera device according to a second embodiment of the present embodiment comprises: a printed circuit board; a first lens driving device being disposed on the printed circuit board; and a second lens driving device being disposed on the printed circuit board, wherein the first lens driving device comprises: a first cover; a first base being coupled to the first cover; a magnet being disposed inside the first cover; a first substrate being disposed in the first base; a coil being disposed in the first substrate and facing the magnet, wherein the first substrate comprises: a body part in which the coil is disposed; a terminal unit being extended from an edge of the body part and comprising a terminal being electrically connected to the printed circuit board, wherein the coil comprises first to third coils, wherein the body part of the first substrate comprises: a first region in which the first coil is disposed; a second region in which the second coil is disposed; a third region in which the third coil is disposed; and a fourth region in which the coil is not disposed, and wherein the terminal unit of the first substrate may comprise a first terminal unit being extended from an edge of the fourth region.

### [Advantageous Effects]

Through the first embodiment of the present embodiment, the size of the printed circuit board can be reduced as the gyro sensor is disposed adjacent to the lens driving device. That is, the space for arranging a camera device inside a smartphone can be reduced.

Through the second embodiment of the present embodiment, workability can be improved when soldering the terminal of the lens driving device to a printed circuit board. Furthermore, since the lens driving device and the gyro sensor can be disposed adjacent to each other on the printed circuit board, the size of the printed circuit board can be reduced. That is, the space for arranging a camera device in a smartphone can be reduced.

### [Brief Description of Drawings]

FIG. 1 is a schematic diagram of a camera device according to a first embodiment of the present embodiment.
FIG. 2 is a perspective view of a camera device according to a first embodiment of the present embodiment.
FIG. 3 is a perspective view of a part of a camera device according to a first embodiment of the present embodiment.
FIG. 4 is a cross-sectional view viewed from A-A in FIG. 2.
FIG. 5 is a cross-sectional view viewed from line B-B of FIG. 2.
FIG. 6 is a cross-sectional view viewed from C-C in FIG. 2.
FIG. 7 is a perspective view of a first lens driving device according to a first embodiment of the present embodiment.
FIG. 8 is a perspective view of a first lens driving device according to a first embodiment of the present embodiment viewed from a direction different from FIG. 7.
FIG. 9 is an exploded perspective view of a first lens driving device according to a first embodiment of the present embodiment.
FIG. 10 is an exploded perspective view of a first mover of a first lens driving device according to a first embodiment of the present embodiment.
FIG. 11 is an exploded perspective view of a second mover of a first lens driving device according to a first embodiment of the present embodiment.
FIG. 12 is an exploded perspective view of a stator of a first lens driving device according to a first embodiment of the present embodiment.
FIG. 13 is an exploded perspective view of an elastic member and a support member of a first lens driving device according to a first embodiment of the present embodiment.
FIG. 14 is a schematic diagram of a modification of a camera device according to a first embodiment of the present embodiment.
FIG. 15 is a perspective view of an optical device according to a first embodiment of the present embodiment.
FIG. 16 is a schematic diagram of a camera device according to a second embodiment of the present embodiment.
FIG. 17 is a perspective view of a camera device according to a second embodiment of the present embodiment.
FIG. 18 is a perspective view of a part of a camera device according to a second embodiment of the present embodiment.
FIG. 19 is a cross-sectional view viewed from A-A in FIG. 2.
FIG. 20 is a cross-sectional view viewed from line B-B in FIG. 2.
FIG. 21 is a cross-sectional view viewed from C-C in FIG. 2.
FIG. 22 is a perspective view of a first lens driving device according to a second embodiment of present embodiment.
FIG. 23 is an exploded perspective view of a first lens driving device according to a second embodiment of present embodiment.
FIG. 24 is an exploded perspective view of a first mover of a first lens driving device according to a second embodiment of present embodiment.
FIG. 25 is an exploded perspective view of a second mover of a first lens driving device according to a second embodiment of present embodiment.
FIG. 26 is an exploded perspective view of a stator of a first lens driving device according to a second embodiment of present embodiment.
FIG. 27 is an exploded perspective view of an elastic member and a support member of a first lens driving device according to a second embodiment of the present embodiment.
FIG. 28 is a perspective view of a second lens driving device according to a second embodiment of present embodiment.
FIG. 29 is an exploded perspective view of a second lens driving device according to a second embodiment of present embodiment.
FIG. 30 is an exploded perspective view of a first mover of a second lens driving device according to a second embodiment of present embodiment.
FIG. 31 is an exploded perspective view of a second mover of a second lens driving device according to a second embodiment of present embodiment.
FIG. 32 is an exploded perspective view of a stator of a second lens driving device according to a second embodiment of present embodiment.
FIG. 33 is an exploded perspective view of an elastic member and a support member of a second lens driving device according to a second embodiment of the present embodiment.
FIG. 34 is a schematic diagram of a camera device according to a first modified embodiment.
FIG. 35 is a schematic diagram of a camera device according to a second modified embodiment.
FIG. 36 is a schematic diagram of a camera device according to a third modified embodiment.
FIG. 37 is a schematic diagram of a camera device according to a fourth modified embodiment.
FIG. 38 is a schematic diagram of a camera device according to a fifth modified embodiment.
FIG. 39 is a schematic diagram of a camera device according to a sixth modified embodiment.
FIG. 40 is a schematic diagram of a camera device according to a seventh modified embodiment.
FIG. 41 is a schematic diagram of a camera device according to an eighth modified embodiment.
FIGS. 42, 43 and 44 are schematic diagrams of camera devices according to other modified embodiments.
FIG. 45 is a perspective view of an optical device according to a second embodiment of the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction based on one component may be comprised.

An 'optical axis direction' used hereinafter is defined as an optical axis direction of a lens and/or an image sensor being coupled to a lens driving device.

The 'vertical direction' used hereinafter may be a direction parallel to the optical axis direction. The vertical direction may correspond to the 'z-axis direction'. The 'horizontal direction' used hereinafter may be a direction perpendicular to the vertical direction. That is, the horizontal direction may be a direction perpendicular to the optical axis. Accordingly, the horizontal direction may comprise an 'x-axis direction' and a 'y-axis direction'.

The 'auto focus (AF) function' used hereinafter is defined as a function that automatically focuses on a subject by adjusting the distance to the image sensor by moving the lens in an optical axis direction according to the distance of the subject so that a clear image of the subject can be obtained on the image sensor. In addition, 'closed-loop auto focus (CLAF) control' is defined as real-time feedback control of the position of the lens by detecting the distance between the image sensor and the lens to improve the accuracy of focusing.

The 'optical image stabilization (OIS) function' used hereinafter is defined as a function of offsetting the shaking by moving the lens in an opposite direction to the movement of the portable terminal detected by the gyro sensor. When the handshake correction function is driven, the lens may be moved or tilted in a direction perpendicular to the optical axis direction.

Hereinafter, a configuration of the camera device according to a first embodiment of the present embodiment will be described with reference to the drawings.

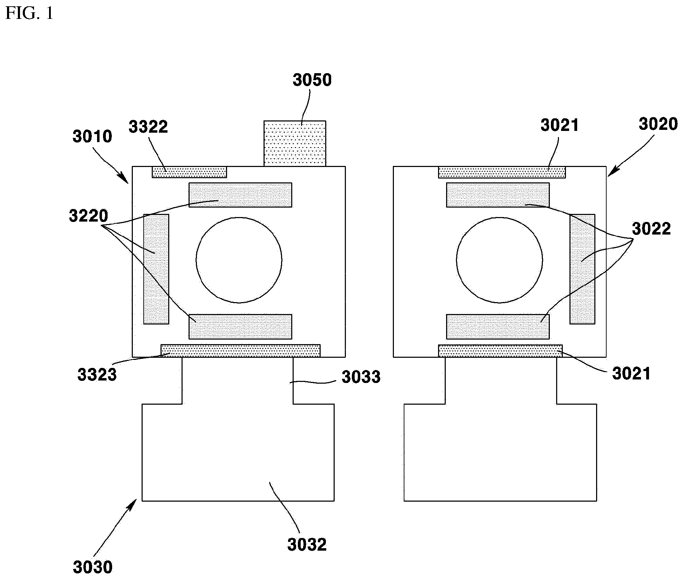

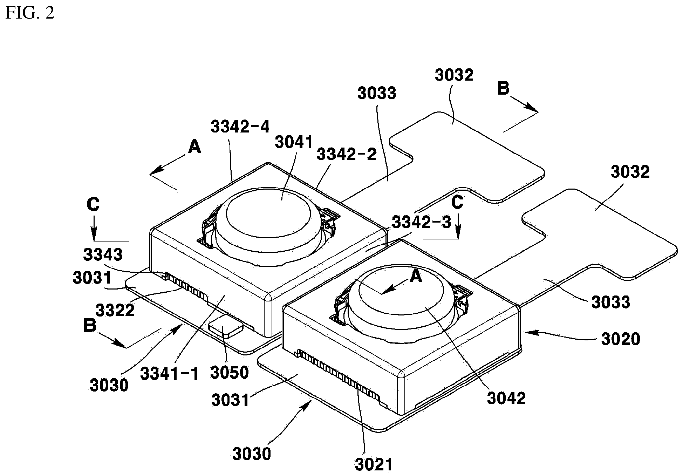

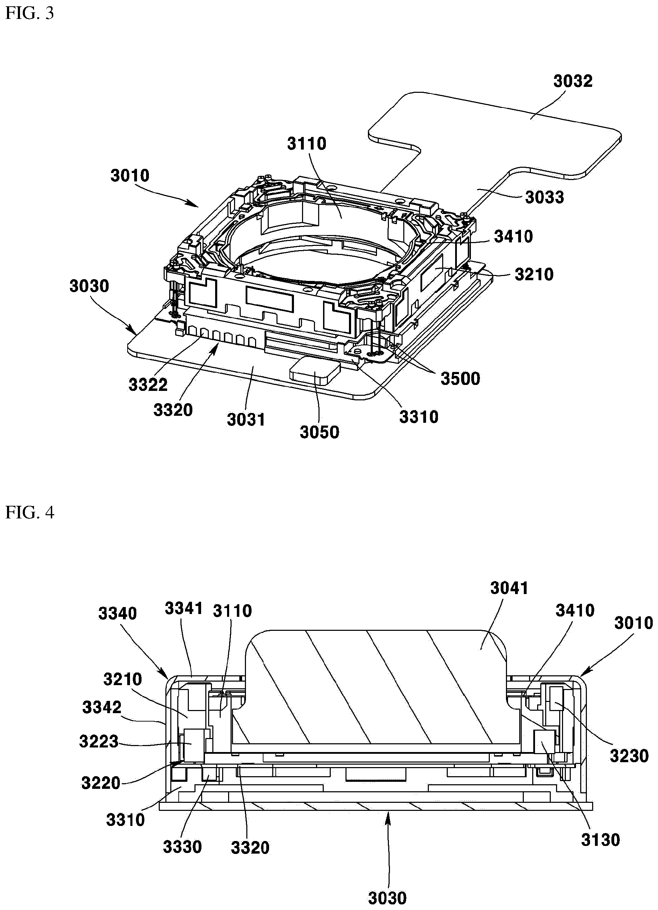

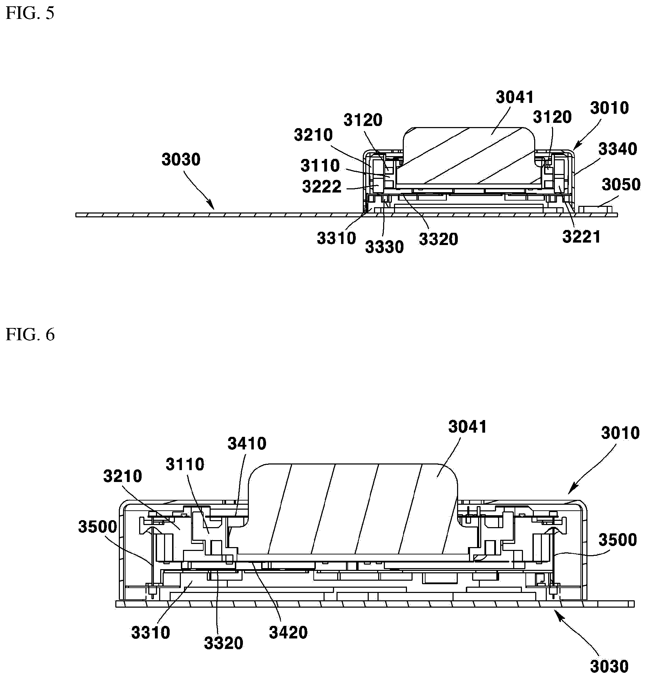

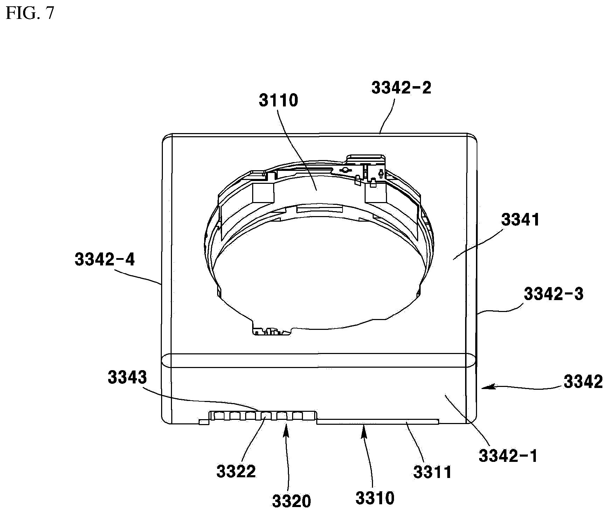

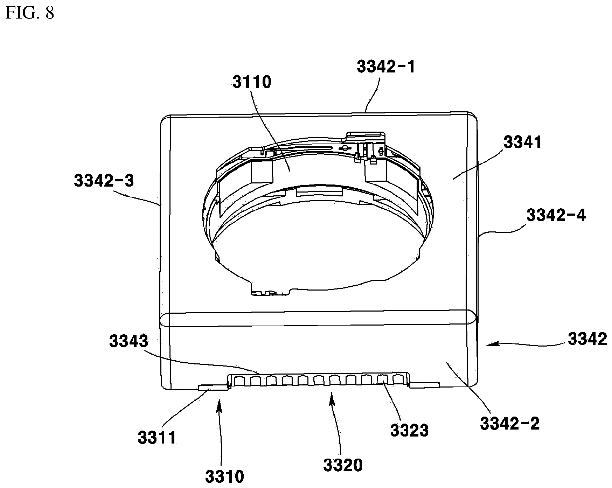

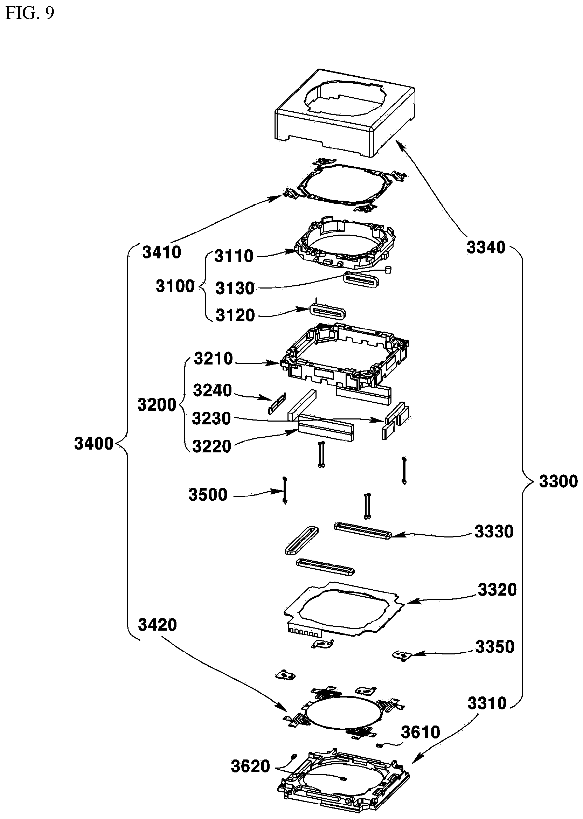

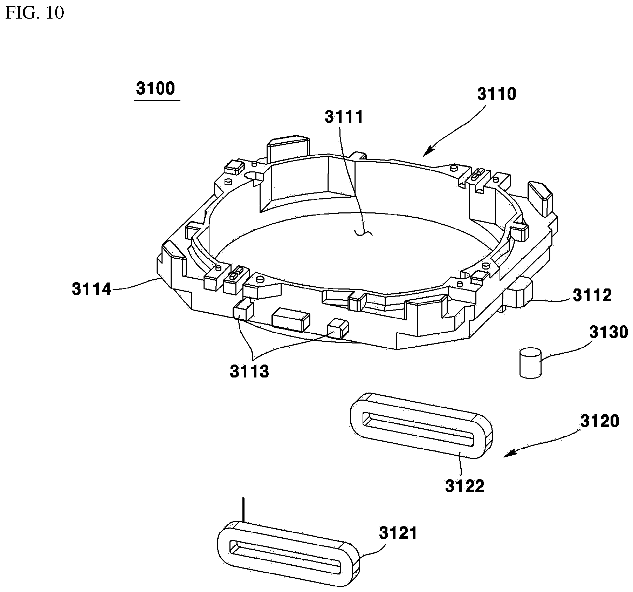

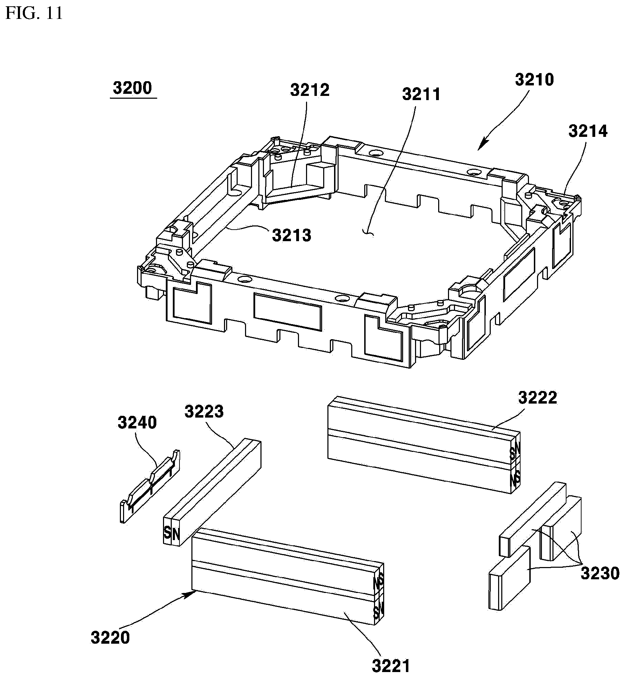

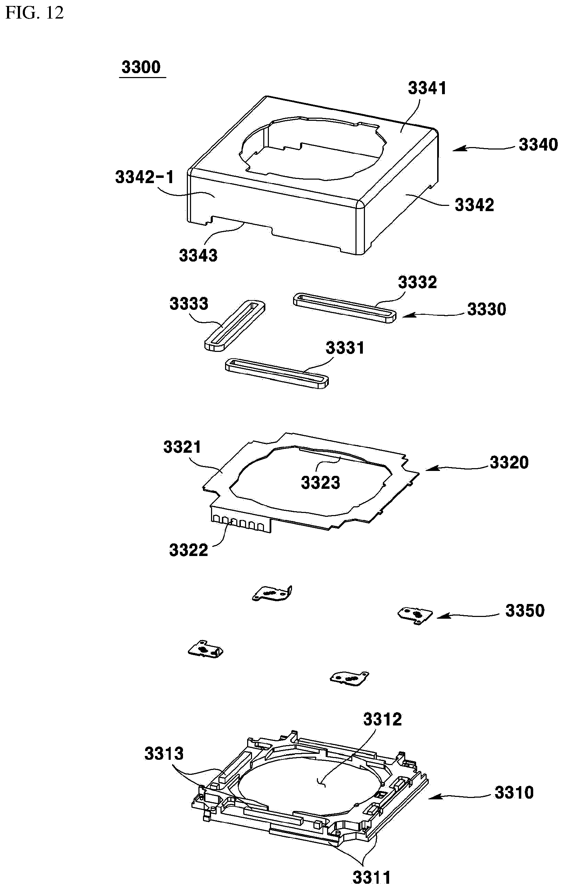

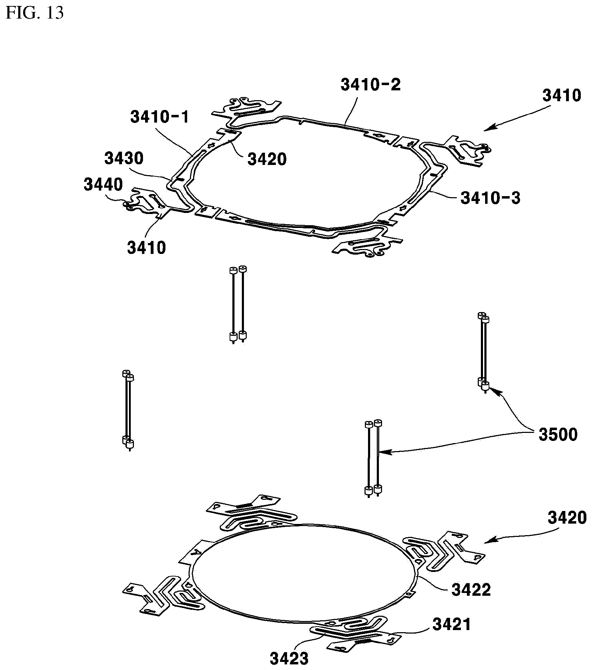

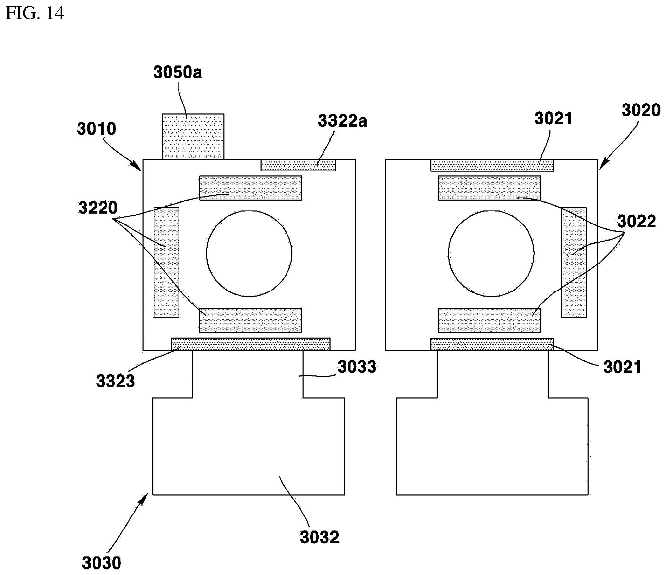

FIG. 1 is a schematic diagram of a camera device according to a first embodiment of the present embodiment; FIG. 2 is a perspective view of a camera device according to a first embodiment of the present embodiment; FIG. 3 is a perspective view of a part of a camera device according to a first embodiment of the present embodiment; FIG. 4 is a cross-sectional view viewed from A-A in FIG. 2; FIG. 5 is a cross-sectional view viewed from line B-B of FIG. 2; FIG. 6 is a cross-sectional view viewed from C-C in FIG. 2; FIG. 7 is a perspective view of a first lens driving device according to a first embodiment of the present embodiment; FIG. 8 is a perspective view of a first lens driving device according to a first embodiment of the present embodiment viewed from a direction different from FIG. 7; FIG. 9 is an exploded perspective view of a first lens driving device according to a first embodiment of the present embodiment; FIG. 10 is an exploded perspective view of a first mover of a first lens driving device according to a first embodiment of the present embodiment; FIG. 11 is an exploded perspective view of a second mover of a first lens driving device according to a first embodiment of the present embodiment; FIG. 12 is an exploded perspective view of a stator of a first lens driving device according to a first embodiment of the present embodiment; FIG. 13 is an exploded perspective view of an elastic member and a support member of a first lens driving device according to a first embodiment of the present embodiment; and FIG. 14 is a schematic diagram of a modification of a camera device according to a first embodiment of the present embodiment.

The camera device **3002** may comprise a camera module.

The camera device **3002** may comprise a lens driving device. The camera device **3002** may comprise a plurality of lens driving devices. The camera device **3002** may comprise two lens driving devices. The camera device **3002** may comprise first and second lens driving devices **3010** and **3020.**

The camera device **3002** may comprise a printed circuit board (PCB) **3030.** The printed circuit board **3030** may be a substrate or circuit substrate. A lens driving device may be disposed on the printed circuit board **3030.** A first and second lens driving devices **3010** and **3020** may be disposed on the printed circuit board **3030.** A sensor base may be disposed between the printed circuit board **3030** and the lens driving device **3010.** The printed circuit board **3030** may be electrically connected to the lens driving device. The printed circuit board **3030** may be electrically connected to the first and second lens driving devices **3010** and **3020.** An image sensor may be disposed in the printed circuit board **3030.** A gyro sensor **3050** may be disposed in the printed circuit board **3030.** The printed circuit board **3030** may comprise various circuits, elements, controllers, and the like in order to convert an image formed in the image sensor into an electrical signal and transmit it to an external device.

The printed circuit board **3030** may comprise: a first portion **3021** in which the first lens driving device **3010** is disposed; a second portion **3022** in which a connector is disposed; and a third portion **3023** connecting the first portion **3021** and the second portion **3022.** At this time, the third portion **3023** may be disposed closest to the second lateral plate **3342-2** among the first to fourth lateral plates **3342-1, 3342-2, 3342-3,** and **3342-4** of the cover member **3340** of the first lens driving device **3010.**

The camera device **3002** may comprise a lens module. The lens module may be coupled to the bobbin of the lens driving device. The lens module may be coupled to the bobbin by screw-coupling and/or an adhesive. The lens module may move integrally with the bobbin. The lens module may comprise a lens. The lens module may comprise a barrel and a plurality of lenses being disposed inside the barrel. The lens may be disposed at a position corresponding to the image sensor. The lens may comprise a first lens **3041** being coupled to the first lens driving device **3010.** The lens may comprise a second lens **3042** being coupled to a second lens driving device **3020.**

The camera device **3002** may comprise a filter. The filter may serve to block light of a specific frequency band among the light passing through the lens module from being incident on the image sensor. The filter may be disposed parallel to an x-y plane. The filter may be disposed between the lens module and the image sensor. A filter may be disposed in the sensor base. The filter may comprise an infrared filter. The infrared filter may block light in the infrared region from being incident on the image sensor. The infrared filter may comprise an infrared reflection filter or an infrared absorption filter.

The camera device **3002** may comprise a sensor base. The sensor base may be disposed between the lens driving device and the printed circuit board **3030.** An opening may be formed in a portion of the sensor base where the filter is disposed so that light passing through the filter may be incident on the image sensor.

The camera device **3002** may comprise an image sensor. The image sensor may be configured to form an image by incident light passing through a lens and a filter. The image sensor may be disposed on the printed circuit board **3030.** The image sensor may be mounted on the printed circuit board **3030.** The image sensor may be electrically connected to the printed circuit board **3030.** As an example, the image sensor may be coupled to the printed circuit board **3030** by a surface mounting technology (SMT). As another example, the image sensor may be coupled to the printed circuit board **3030 by** a flip chip technology. The image sensor may be disposed such that an optical axis coincides with a lens. That is, the optical axis of the image sensor and the optical axis of the lens may be aligned. The image sensor may convert light irradiated onto an effective image area of the image sensor into an electrical signal. The image sensor may be any one of a charge coupled device (CCD), a metal oxide semi-conductor (MOS), a CPD, and a CID.

The camera device **3002** may comprise a gyro sensor **3050.** The gyro sensor **3050** may be disposed in the printed circuit board **3030.** The gyro sensor **3050** may be disposed on an upper surface of the printed circuit board **3030.** The gyro sensor **3050** may be disposed on a first surface of the printed circuit board **3030.** The gyro sensor **3050** may be spaced apart from the cover member **3340,** the base **3310** and the substrate **3320.** The gyro sensor **3050** may be spaced apart from the first terminal unit **3322** of the substrate **3320.** In a modified embodiment, the gyro sensor **3050** may be disposed to be in contact with the base **3310.** The gyro sensor **3050** may be disposed closest to the first lateral plate **3342-1** among the first to fourth lateral plates **3342-1, 3342-2, 3342-3,** and **3342-4** of the cover member **3340.** The gyro sensor **3050** may output rotational angular velocity information due to the movement of the camera device **3002.** The gyro sensor **3050** may comprise a 2-axis or 3-axis gyro sensor.

As illustrated in FIG. 1, the gyro sensor **3050** may be disposed closer to the second lens driving device **3020** than to the first terminal unit **3322.** However, in a modified embodiment, the gyro sensor **350a** may be disposed farther from the second lens driving device **3020** than the first terminal unit **3322a,** as illustrated in FIG. 14. That is, the first terminal unit **3322a** may be disposed closer to the second lens driving device **3020** than the gyro sensor **350a.**

The camera device **3002** may comprise a connector. The connector may be electrically connected to the printed circuit board **3030.** The connector may comprise a port for electrically connecting with an external device. The connector may be disposed in the third portion **333** of the printed circuit board **3030.**

The camera device **3002** may comprise a first lens driving device **3010.** The first lens driving device **3010** may be a voice coil motor (VCM). The first lens driving device **3010** may be a lens driving motor. The first lens driving device **3010** may be a lens driving actuator. The first lens driving device **3010** may comprise an AF module. The first lens driving device **3010** may comprise an OIS module. The first lens driving device **3010** may be disposed on a first surface of the printed circuit board **3030.**

The first lens driving device **3010** may comprise a first mover **3100.** The first mover **3100** may be coupled to the first lens **3041.** The first mover **3100** may be connected to the second mover **3200** through a first elastic member **3410** and/or a second elastic member **3420.** The first mover **3100** may move through interaction with the second mover **3200.** At this time, the first mover **3100** may move integrally with the first lens **3041.** Meanwhile, the first mover **3100** may move during AF driving. At this time, the first mover **3100** may be referred to as an 'AF mover'. However, the first mover **3100** may move together with the second mover **3200** even during OIS driving.

The first lens driving device **3010** may comprise a bobbin **3110.** The first mover **3100** may comprise a bobbin **3110.** The bobbin **3110** may be disposed inside the housing **3210.** The bobbin **3110** may be disposed in a hole **3211** of the housing **3210.** The bobbin **3110** may be movably coupled to the housing **3210.** The bobbin **3110** may move against the housing **3210** in an optical axis direction. A first lens **3041** may be coupled to the bobbin **3110.** The bobbin **3110** and the first lens **3041** may be coupled by screw-coupling and/or adhesive. A first coil **3120** may be coupled to the bobbin **3110.** A first elastic member **3410** may be coupled to an upper portion or an upper surface of the bobbin **3110.** A second elastic member **3420** may be coupled to a lower portion or a lower surface of the bobbin **3110.** The bobbin **3110** may be coupled to the first elastic member **3410** and/or the second elastic member **3420** by thermal fusion and/or an adhesive. An adhesive coupling the bobbin **3110** and the first lens **3041** and the bobbin **3110** and the elastic member **3400** may be an epoxy being cured by at least one among ultraviolet (UV) light, heat, and laser.

The bobbin **3110** may comprise a hole **3111.** The hole **3111** may be hollow. The hole **3111** may penetrate through the bobbin **3110** in an optical axis direction. The first lens **3041** may be accommodated in the hole **3111.** For an example, a screw thread corresponding to a screw thread being formed on an outer circumferential surface of the first lens **3041** may be disposed on an inner circumferential surface of the hole **3111** of the bobbin **3110.**

The bobbin **3110** may comprise a groove **3112.** The groove **3112** may be a sensing magnet accommodating groove. The groove **3112** may be a recess. A sensing magnet **3130** may be disposed in the groove **3112.** The groove 3112 of the bobbin **3110** may be formed on an outer circumferential surface of the bobbin **3110.** At least a portion of the groove **3112** of the bobbin **3110** may be formed to correspond to the shape and size of the sensing magnet **3130.** The groove **3112** may be opened toward lower direction.

The bobbin 3110 may comprise a protrusion **3113.** A first coil 3120 may be disposed in the protrusion **3113.** The protrusion **3113** may be formed on an outer circumferential surface of the bobbin **3110.** The protrusion **3113** may be protruded from an outer circumferential surface of the bobbin **3110.** The first coil **3120** may be wound and fixed to the protrusion **3113.**

The bobbin **3110** may comprise a lower stopper **3114.** A lower stroke of the bobbin **3110** may be restricted through the lower stopper **3114.** The lower stopper **3114** may be formed on an outer circumferential surface of the bobbin **3110.** The lower stopper **3114** may come into contact with the housing **3210** when the bobbin **3110** moves downward.

The first lens driving device **3010** may comprise a first coil **3120.** The first mover **3100** may comprise a first coil **3120.** The first coil **3120** may be an 'AF driving coil' used for AF driving. The first coil **3120** may be disposed in the bobbin 3110. The first coil **3120** may move the bobbin **3110.** The first coil **3120** may be disposed between the bobbin **3110** and the housing **3210.** The first coil **3120** may be disposed on an outer side surface or an outer circumferential surface of the bobbin **3110.** The first coil **3120** may be directly wound around the bobbin **3110.** Or, the first coil **3120** may be coupled to the bobbin **3110** in a state being directly wound. The first coil **3120** may face the magnet **3220.** The first coil **3120** may be disposed to face the magnet **3220.** The first coil **3120** may interact with the magnet **3220** electromagnetically. In this case, when a current is supplied to the first coil **3120** and an electromagnetic field is formed around the first coil **3120,** the first coil **3120** can move against the magnet **3220** due to the electromagnetic interaction between the first coil **3120** and the magnet **3220.**

The first coil **3120** may comprise a plurality of coils. The first coil **3120** may comprise two coils. The first coil **3120** may comprise first-first and first-second coils **3121** and **3122.** The first-first coil **3121** may be disposed at a position corresponding to the first lateral plate **3342-1** of the cover member **3340.** The first-first coil **3121** may be disposed to face the first lateral plate **3342-1** of the cover member **3340.** The first-second coil **3122** may be disposed at a position corresponding to the second lateral plate **3342-2** of the cover member **3340.** The first-second coil **3122** may be disposed to face the second lateral plate **3342-2** of the cover member **3340.**

In a first embodiment of the present embodiment, the first coil **3120** and the magnet **3220** may move the bobbin **3110** against the housing **3210** in an optical axis direction. The first coil **3120** and the magnet **3220** may move the bobbin **3110** in an optical axis direction through electromagnetic interaction. The first coil **3120** and the magnet **3220** may be used for AF driving.

The first lens driving device **3010** may comprise a coil. The coil may move the bobbin **3110.** The coil may comprise a first coil **3120** that moves the bobbin **3110** in an optical axis direction and a second coil **3330** that moves the bobbin **3110** in a direction perpendicular to the optical axis direction.

The first lens driving device **3010** may comprise a sensing magnet **3130.** The first mover **3100** may comprise a sensing magnet **3130.** The sensing magnet **3130** may be disposed in the bobbin **3110.** The sensing magnet **3130** may be detected through the first sensor **3610.** In addition, the first lens driving device **3010** may comprise a compensation magnet. The first mover **3100** may comprise a compensation magnet. The compensation magnet may be disposed to balance the magnetic force with the sensing magnet **3130.** The compensation magnet may have a weight corresponding to that of the sensing magnet **3130.** The compensation magnet may be disposed symmetrically with the sensing magnet **3130** with respect to an optical axis.

The first lens driving device **3010** may comprise a second mover **3200.** The second mover **3200** may be movably coupled to the stator **3300** through a support member **3500.** The second mover **3200** may support the first mover **3100** through the first and second elastic members **3410** and **3420.** The second mover **3200** may move the first mover **3100** or may move together with the first mover **3100.** The second mover **3200** may move through interaction with the stator **3300.** The second mover **3200** may move during OIS driving. At this time, the second mover **3200** may be referred to as an 'OIS mover'. The second mover **3200** may move integrally with the first mover **3100** during OIS driving.

The first lens driving device **3010** may comprise a housing **3210.** The second mover **3200** may comprise a housing **3210.** The housing **3210** may be spaced apart from the base **3310.** The housing **3210** may be disposed outside the bobbin **3110.** The housing **3210** may accommodate at least a portion of the bobbin **3110.** The housing **3210** may be disposed inside the cover member **3340.** The housing **3210** may be disposed between the cover member **3340** and the bobbin **3110.** The housing **3210** may be formed of a material different from that of the cover member **3340.** The housing **3210** may be formed of an insulating material. The housing **3210** may be formed of an injection molding material. An outer side surface of the housing **3210** may be spaced apart from an inner surface of the lateral plate **3342** of the cover member **3340.** Through the separation space between the housing **3210** and the cover member **3340,** the housing **3210** may move for OIS driving. A magnet **3220** may be disposed in the housing **3210.** The housing **3210** and the magnet **3220** may be coupled by an adhesive. A first elastic member **3410** may be coupled to an upper portion or an upper surface of the housing **3210.** A second elastic member **3420** may be coupled to a lower portion or a lower surface of the housing **3210.** The housing **3210** may be coupled to an upper portion and second elastic members **3410** and **3420** by thermal fusion and/or an adhesive. The adhesive for coupling the housing **3210** and the magnet **3220** and the housing **3210** and the elastic member **3400** may be an epoxy cured by at least one among ultraviolet (UV) light, heat, and laser.

The housing **3210** may comprise four side portions and four corner portions being disposed between the four side portions. The side portion of the housing **3210** may comprise: a first side portion; a second side portion being disposed at an opposite side of the first side portion; a third side portion and a fourth side portion being disposed at an opposite side to each other between the first side portion and the second side portion. The corner portion of the housing **3210** may comprise: a first corner portion being disposed between the first side portion and the third side portion; a second corner portion being disposed between the first side portion and the fourth side portion; a third corner portion being disposed between the second side portion and the third side portion; and a fourth corner portion being disposed between the second side portion and the fourth side portion. A side portion of the housing **3210** may comprise a 'lateral wall'. The first side portion of the housing **3210** may be disposed at a position corresponding to the first lateral plate **3342-1** of the cover member **3340.** The second side portion of the housing **3210** may be disposed at a position corresponding to the second lateral plate **3342-2** of the cover member **3340.** The third side portion of the housing **3210** may be disposed at a position corresponding to a third lateral plate **3342-3** of the cover member **3340.** The fourth side portion of the housing **3210** may be disposed at a position corresponding to a fourth lateral plate **3342-4** of the cover member **3340.**

The housing **3210** may comprise a hole **3211.** The hole **3211** may be hollow. The hole **3211** may be formed in the housing **3210.** The hole **3211** may be formed to penetrate through the housing **3210** in an optical axis direction. A bobbin **3110** may be disposed in the hole **3211.** At least a portion of the hole **3211** may be formed in a shape corresponding to that of the bobbin **3110.** An inner circumferential surface or an inner circumferential surface of the housing **3210** forming the hole **3211** may be spaced apart from an outer circumferential surface of the bobbin **3110.** However, the housing **3210** and the bobbin **3110** may be at least partially overlapped in an optical axis direction, thereby restricting the distance of the moving stroke of the bobbin **3110** in an optical axis direction.

The housing **3210** may comprise a groove **3212.** The groove **3212** may accommodate at least a portion of the lower stopper **3114 of** the bobbin **3110.** The bottom surface of the groove **3212** may be overlapped with the lower stopper **3114** of the bobbin **3110** in an optical axis direction. When the bobbin **3110** moves downward, the lower stopper **3114** of the bobbin **3110** may be in contact with the bottom surface of the groove **3212** of the housing **3210.**

The housing **3210** may comprise a hole **3213.** The hole **3213** may be a magnet accommodating groove. A magnet **3220** may be coupled to the groove **3213.** The groove **3213** may be formed as a portion of an inner circumferential surface and/or a lower surface of the housing **3210** is being recessed. The groove **3213** may be formed in each of the three side portions of the housing **3210.** The groove **3213** may be formed in first, second and fourth side portions of the housing **3210.** The groove **3213** may be formed in a shape corresponding to the third side portion of the housing **3210,** but a dummy member **3230,** instead of the magnet **3220,** may be disposed in the groove **3213** being formed in a third side portion of the housing **3210.**

The housing **3210** may comprise a hole **3214.** The hole **3214** may be a hole through which a support member passes. The hole **3214** may be formed in a corner portion of the housing **3210.** The hole **3214** may be formed to penetrate through the housing **3210** in an optical axis direction. A support member **3500** may be disposed in the hole **3214** of the housing **3210.** The support member **3500** may pass through the hole **3214** of the housing **3210.**

The first lens driving device **3010** may comprise a magnet **3220.** The second mover **3200** may comprise a magnet **3220.** The magnet **3220** may be disposed in the housing **3210.** The magnet **3220** may be disposed inside the cover member **3340.** The magnet **3220** may be fixed to the housing **3210** by an adhesive. The magnet **3220** may be disposed between the bobbin **3110** and the housing **3210.** The magnet **3220** may face the first coil **3120.** The magnet **3220** may interact with the first coil **3120** electromagnetically. The magnet **3220** may move the bobbin **3110** in an optical axis direction through interaction with the first coil **3120.** The magnet **3220** may be used for AF driving. The magnet **3220** may face the second coil **3330.** The magnet **3220** may interact with the second coil **3330** electromagnetically. The magnet **3220** may move the bobbin **3110** and the housing **3210** in a direction perpendicular to the optical axis direction through interaction with the second coil **3330.** The magnet **3220** may be used for OIS driving. The magnet **3220** may be disposed in a plurality of side portions of the housing **3210.** The magnet **3220** may be a flat magnet having a flat plate shape.

The magnet **3220** may comprise a plurality of magnets. The magnet **3220** may comprise three magnets. The magnet **3220** may comprise first to third magnets **3221, 3222,** and **3223.** The first magnet **3221** may be disposed in a first side portion of the housing **3210.** The second magnet **3221** may be disposed in a second side portion of the housing **3210.** The third magnet **3221** may be disposed in a fourth side portion of the housing **3210.** A dummy member **3230** may be disposed in a third side portion of the housing **3210.**

The first magnet **3221** may face the first-first coil **3121.** The second magnet **3222** may face the first-second coil **3122.** The first and second magnets **3221** and **3222** may be used during AF driving. The magnet **3220** may comprise: a first magnet **3221** being disposed at a position corresponding to the first lateral plate **3342-1** of the cover member **3340;** a second magnet **3222** being disposed at a position corresponding to the second lateral plate **3342-2;** and a third magnet **3223** being disposed at a position corresponding to the fourth lateral plate **3342-4.**

The first magnet **3221** may face the second-first coil **3331.** The second magnet **3222** may face the second-second coil **3332.** The first and second magnets **3221** and **3222** may be used when driving in an OIS-x axis direction. The third magnet **3223** may face the second-third coil **3333.** The third magnet **3223** may be used when driving in an OIS-y axis direction. The area of a lower surface of the third magnet **3223** may be larger than that of each of the lower surfaces of the first magnet **3221** and the second magnet **3222.**

The first magnet **3221** and the second magnet **3222** may be 4-pole magnetized magnets. The first magnet **3221** and the second magnet **3222** may be 4-pole magnets. The 4-pole magnetized magnet may comprise a neutral portion being disposed in a horizontal direction at the central portion. Here, the neutral portion may be a void. The first magnet **3221** and the second magnet **3222** may be both-pole magnetized. As the first magnet **3221** and the second magnet **3222** are both-pole magnetized, the AF electromagnetic force can be maximized. Each of the first magnet **3221** and the second magnet **3222** may be a 4-pole magnet in which an upper portion of the inner surface has a different polarity than a lower portion of the inner surface and an upper portion of the outer surface, and the same polarity as a lower portion of the outer surface.

The third magnet **3223** may be a two-pole magnetized magnet. The third magnet **3223** may be a two-pole magnet. The third magnet **3223** may be a two-pole magnet having different inner and outer polarities. For example, an inner surface of the third magnet **3223** may have an N pole and an outer surface of the third magnet **3223** may have an S pole. Conversely, an inner surface of the third magnet **3223** may be an S pole and an outer surface of the third magnet **3223** may be an N pole. However, as a modified embodiment, the third magnet **3223** may be a 4-pole magnet. The third magnet **3223** may be larger than each of the first magnet **3221** and the second magnet **3222.**

The first lens driving device **3010** may comprise a dummy member **3230.** The second mover **3200** may comprise a dummy member **3230.** The dummy member **3230** may be disposed in the housing **3210.** The dummy member **3230** may be disposed in the third side portion of the housing **3210.** The dummy member **3230** may be disposed adjacent to the second lens driving device **3020.** Through this, magnetic force interference between the first lens driving device **3010** and the second lens driving device **3020** can be minimized. The dummy member **3230** may be disposed at a position corresponding to the third lateral plate **3342-3** of the cover member **3340.**

The dummy member **3230** may have a weight corresponding to that of the third magnet **3223.** The dummy member **3230** may have a weaker magnetic force than the third magnet **3223** or may not have magnetic force. The dummy member **3230** may be disposed at an opposite side of the third magnet **3223** in the housing **3210.** The weight of the dummy member **3230** may correspond to the weight of the third magnet **3223.** However, the dummy member **3230** may have a weight lighter than the weight of the third magnet **3223.** Or, the dummy member **3230** may have a weight heavier than the weight of the third magnet **3223.** The dummy member **3230** may be inside 80% of the weight of the third magnet **3223** to 120% of the weight of the third magnet **3223.** If the weight of the dummy member **3230** is less than the lower limit or exceeds the upper limit of the above-mentioned values, the weight balancing of the OIS driving unit may collapse.

The dummy member **3230** may be a non-magnetic material. The dummy member **3230** may comprise a non-magnetic material. The magnetic strength of the dummy member **3230** may be weaker than the magnetic strength of the third magnet **3223.** The dummy member **3230** may be disposed at an opposite side of the third magnet **3223** to align the center of gravity. The dummy member **3230** may be made from a material of 95% or more of tungsten. That is, the dummy member **3230** may be a tungsten alloy. For an example, the specific gravity of the dummy member **3230** may be **18000** or more. The dummy member **3230** may be disposed symmetrically with the third magnet **3223** with respect to a central axis of the housing **3210.** At this time, the central axis of the housing **3210** may correspond to an optical axis. The dummy member **3230** may have a thickness corresponding to the third magnet **3223** in a direction perpendicular to the optical axis.

The first lens driving device **3010** may comprise a yoke **3240.** The second mover **3200** may comprise a yoke **3240.** The yoke **3240** may be disposed in the housing **3210.** The yoke **3240** may be disposed on a third side portion of the housing **3210.** The yoke **3240** may be disposed adjacent to the second lens driving device **3020.** Through this, magnetic force interference between the first lens driving device **3010** and the second lens driving device **3020** can be minimized.

The first lens driving device **3010** may comprise a stator **3300.** The stator **3300** may be disposed below the first and second movers **3100** and **3200.** The stator **3300** may movably support the second mover **3200.** The stator **3300** may move the second mover **3200.** At this time, the first mover **3100** can also move together with the second mover **3200.**

The first lens driving device **3010** may comprise a base **3310.** The stator **3300** may comprise a base **3310.** The base **3310** may be disposed below the housing **3210.** The base **3310** may be disposed below the substrate **3320.** A substrate **3320** may be disposed on an upper surface of the base **3310.** The base **3310** may be coupled to the cover member **3340.** The base **3310** may be disposed on the printed circuit board **3030.**

The base **3310** may comprise a step **3311.** The step **3311** may be formed on a side surface of the base **3310.** The step **3311** may be formed around an outer circumferential surface of the base **3310.** The step **3311** may be formed as a portion of a side surface of the base **3310** is protruded or recessed. A lower end of the lateral plate **3342** of the cover member **3340** may be disposed at the step **3311.**

The base **3310** may comprise a hole **3312.** The hole **3312** may be hollow. The hole **3312** may penetrate through the base **3310** in an optical axis direction. A light passing through the first lens **3041** through the hole **3312** may be incident to the image sensor.

The base **3310** may comprise a protrusion **3313.** The protrusion **3313** may be formed on an upper surface of the base **3310.** The protrusion **3313** may be protruded from an upper surface of the base **3310.** A second coil **3330** may be disposed at the protrusion **3313.** A second coil **3330** may be wound around the protrusion **3313** and disposed.

The first lens driving device **3010** may comprise a substrate **3320.** The stator **3300** may comprise a substrate **3320.** The substrate **3320** may be disposed at one side of the housing **3210.** The substrate **3320** may be disposed between the base **3310** and the housing **3210.** The substrate **3320** may be disposed on an upper surface of the base **3310.** A support member **3500** may be coupled to the substrate **3320.** The substrate **3320** may be electrically connected to the support member **3500.** One end of the support member **3500** may be fixed to the substrate **3320.** The substrate **3320** may be coupled to the printed circuit board **3030** being disposed below the base **3310** by soldering. The substrate **3320** may comprise a flexible printed circuit board (FPCB). The substrate **3320** may be partially bent.

The substrate **3320** may comprise a body part **3321.** A hole may be formed in the body part **3321.** The hole may be hollow penetrating the substrate **3320** in an optical axis direction. The substrate **3320** may comprise a hole. A support member **3500** may be disposed in the hole of the substrate **3320.** The support member **3500** may be disposed to penetrate through the hole of the substrate **3320.**

The substrate **3320** may comprise a first terminal unit **3322.** The first terminal unit **3322** may be extended downward from the body part **3321** of the substrate **3320.** The first terminal unit **3322** may be formed as a portion of the substrate **3320** is being bent. At least a portion of the first terminal unit **3322** may be exposed to the outside. The first terminal unit **3322** may be coupled to the printed circuit board **3030** being disposed below the base **3310** by soldering. The first terminal unit **3322** may be disposed in a groove of the base **3310.** The first terminal unit **3322** may comprise a plurality of terminals. The first terminal unit **3322** may be disposed between the gyro sensor **3050** and the second lens driving device **3010.**

The substrate **3320** may comprise a first terminal unit **3322** and a plurality of terminals being disposed in the first terminal unit **3322** and electrically connected to the printed circuit board **3030.** The first terminal unit **3322** of the substrate **3320** may be disposed at a position corresponding to the first lateral plate **3342-1** of the cover member **3340.** The first terminal unit **3322** of the substrate **3320** may be disposed closest to the first lateral plate **3342-1** among the first to fourth lateral plates **3342-1, 3342-2, 3342-3,** and **3342-4** of the cover member **3340.** In a direction in which the second lateral plate **3342-2** faces the first lateral plate **3342-1,** the first terminal unit **3322** may not be overlapped with the gyro sensor **3050.**

The first terminal unit **3322** may be disposed closer to one corner among the corners on both sides of the first lateral plate **3342-1** of the cover member **3340.** The first lateral plate **3342-1** of the cover member **3340** may comprise: a first region close to one of the corners on both sides; and a second region close to the other corner among the corners on both sides. The first terminal unit **3322** may be disposed at a position corresponding to a first region of the first lateral plate **3342-1.** The gyro sensor **3050** may be disposed at a position corresponding to the second region of the first lateral plate **3342-1.**

In a direction in which the third lateral plate **3342-3** faces the fourth lateral plate **3342-4,** the length of the first terminal unit **3322** may be shorter than the length of the second terminal unit **3323.** The substrate **3320** may comprise: a first terminal unit **3322** being disposed at a position corresponding to the first lateral plate **3342-1;** and a second terminal unit **3323** being disposed at a position corresponding to the second lateral plate **3342-2.** The width of the first terminal unit **3322** in a first direction may be smaller than the width of the second terminal unit **3323** in a first direction. The first terminal unit **3322** of the substrate **3320** may be omitted at a position corresponding to the gyro sensor **3050.**

In a first embodiment of the present embodiment, the first terminal unit **3322** may be driven to one side of the first lens driving device **3010** to secure an arrangement space for the gyro sensor **3050.** The first lens driving device **3010** may comprise a plurality of terminals. The terminals of the first lens driving device **3010** may comprise 17 terminals. Due to size limitations, the first terminal unit **3322** may comprise 7 terminals, and the second terminal unit **3323** may comprise 10 terminal units. Seven or less terminals may be disposed in the first terminal unit **3322.** Ten or more terminals may be disposed in the second terminal unit **3323.** The plurality of terminals of the first lens driving device **3010** may comprise: two terminals for the first coil 3120; two terminals for the second-first and second-second coils **3331** and **3332;** two terminals for the second-third coil **3333;** four terminals for the first sensor **3610;** and eight terminals for the second sensor **3620.** At this time, when the ground terminal is commonly used among the eight terminals for the two second sensors **3620,** seven terminals may be required for the two second sensors **3620.**

The substrate **3320** may comprise a second terminal unit **3323.** The second terminal unit **3323** may be disposed at an opposite side of the first terminal unit **3322.** The second terminal unit **3323** of the substrate **3320** may be disposed at a position corresponding to the second lateral plate **3342-2** of the cover member **3340.**

The first lens driving device **3010** may comprise a second coil **3330.** The stator **3300** may comprise a second coil **3330.** The second coil **3330** may be an 'OIS coil'. The second coil **3330** may move the bobbin **3110.** The second coil **3330** may be disposed in the base **3310.** The second coil **3330** may be disposed in the substrate **3320.** The second coil **3330** may face the magnet **3220.** The second coil **3330** may interact with the magnet **3220** electromagnetically. In this case, when a current is supplied to the second coil **3330** and a magnetic field is formed around the second coil **3330,** the magnet **3220** may move against the second coil **3330** due to electromagnetic interaction between the second coil **3330** and the magnet **3220.** The second coil **3330** may move the housing **3210** and the bobbin **3110** in a direction perpendicular to the optical axis with respect to the base **3310** through electromagnetic interaction with the magnet **3220.** The substrate **3320** may comprise a second coil **3330.** That is, the second coil **3330** may be a configuration of the substrate **3320.** The second coil **3330** may be formed as a fine pattern coil (FP coil) in a substrate separate from the substrate **3320.**

The second coil **3330** may comprise a plurality of coils. The second coil **3330** may comprise a number of coils corresponding to those of the magnet **3220.** The second coil **3330** may comprise three coils. The second coil **3330** may comprise a second-first coil **3331,** a second-second coil **3332,** and a second-third coil **3333.** The second-first coil **3331** may face the first magnet **3221.** The second-second coil **3332** may face the second magnet **3222.** The second-third coil **3333** may face the third magnet **3223.**

The number of windings of the second-first coil **3331** may be greater than the number of windings of the second-second coil **3332** and the second-third coil **3333.** The number of windings of the second-second coil **3332** may correspond to the number of windings of the second-third coil **3333.** In a first embodiment of the present embodiment, the movement in an X-axis direction is performed through the second-first coil **3331** and the second-second coil **3332** during OIS driving, and the movement in a Y-axis direction can be performed through the second-third coil **3333.** Therefore, in a first embodiment of the present embodiment, in order to compensate for the insufficient driving force in a Y-axis direction, the number of turns of the second-third coil **3333** may be higher than the number of turns of the second-first coil **3331** and the second-second coil **3332.** For an example, the ratio of the number of turns of the second-third coil **3333** to the number of turns of the second-first and second-second coils **3331** and **3332** may be 1.5:2.0 to 1:1. Ideally, the ratio of the number of turns of the second-third coil **3333** to the number of turns of the second-first and second-second coils **3331** and **3332** is 1:1, but it can be disposed up to 1.5:2.0 due to the space constraint.

The first lens driving device **3010** may comprise a cover member **3340.** The stator **3300** may comprise a cover member **3340.** The cover member **3340** may comprise a 'cover can'. The cover member **3340** may comprise a yoke. The cover member **3340** may be disposed outside the housing **3210.** The cover member **3340** may be coupled to the base **3310.** The cover member **3340** may accommodate the housing **3210** therein. The cover member **3340** may form the outer appearance of the first lens driving device **3010.** The cover member **3340** may have a hexahedral shape with an open lower surface. The cover member **3340** may be a non-magnetic material. The cover member 3340 may be formed of a metal material. The cover member **3340** may be formed of a metal plate material. The cover member **3340** may be connected to the ground portion of the printed circuit board **3030.** Through this, the cover member **3340** may be grounded. The cover member **3340** may block electromagnetic interference (EMI). At this time, the cover member **3340** may be referred to as an 'EMI shield can'.

The cover member **3340** may comprise an upper plate **3341** and a lateral plate **3342.** The cover member **3340** may comprise an upper plate **3341** comprising a hole and a lateral plate **3342** being extended downward from an outer circumference or edge of the upper plate **3341.** The lower end of the lateral plate **3342** of the cover member **3340** may be disposed in the step **3311** of the base **3310.** An inner surface of the lateral plate **3342** of the cover member **3340** may be fixed to the base 3310 by an adhesive.

The lateral plate **3342** of the cover member 3340 may comprise a plurality of lateral plates. The lateral plate **3342** may comprise four lateral plates. The lateral plate **3342** of the cover member **3340** may comprise: a first lateral plate **3342-1** being disposed at an opposite side to each other; a second lateral plate **3342-2;** a third lateral plate **3342-3** being disposed at an opposite side to each other; and a fourth lateral plate **3342-4.** The gyro sensor **3050** may be disposed closest to the first lateral plate **3342-1** among the first to fourth lateral plates **3342-1, 3342-2, 3342-3,** and **3342-4.** The first terminal unit **3322** of the substrate **3320** may be disposed at a position corresponding to the first lateral plate **3342-1** of the cover member **3340.**

The cover member **3340** may comprise a groove **3343.** The groove **3343** may be formed in the lateral plate **3342** of the cover member **3340.** The groove **3343** may be formed at a lower end of the lateral plate **3342.** The groove **3343** may be formed at a position corresponding to the first terminal unit **3322.** The groove **3343** may be formed to expose the first terminal unit **3322** to the outside.

The first lens driving device **3010** may comprise a terminal **3350.** The stator **3300** may comprise a terminal **3350.** The terminal **3350** may be disposed in the base **3310.** The terminal **3350** may be electrically connected to the substrate **3320.** The terminal **3350** may be coupled to the support member **3500.** The terminal **3350** may electrically connect the support member **3500** and the substrate **3320.**

The first lens driving device **3010** may comprise an elastic member **3400.** The elastic member **3400** may be an 'AF support member'. At least portion of the elastic member **3400** may have elasticity. The elastic member **3400** may be formed of metal. The elastic member **3400** may be formed of a conductive material. The elastic member **3400** may connect the bobbin **3110** and the housing **3210.** The elastic member **3400** may elastically connect the bobbin **3110** and the housing **3210.** The elastic member **3400** may be coupled to the bobbin **3110** and the housing **3210.** The elastic member **3400** may elastically support the bobbin **3110.** The elastic member **3400** may movably support the bobbin **3110.** The elastic member **3400** may support the movement of the bobbin **3110** during AF driving.

The elastic member **3400** may comprise a first elastic member **3410.** The first elastic member **3410** may be an 'upper elastic member'. The first elastic member **3410** may connect the housing **3210** and the bobbin **3110.** The first elastic member **3410** may be coupled to an upper portion of the bobbin **3110** and an upper portion of the housing **3210.** The first elastic member **3410** may be coupled to an upper surface of the bobbin **3110.** The first elastic member **3410** may be coupled to an upper surface of the housing **3210.** The first elastic member **3410** may be coupled to the support member **3500.** The first elastic member **3410** may be formed of a leaf spring. The first elastic member **3410** may be separated and used as a power line for electrical or communication signal.

The first elastic member **3410** may comprise a plurality of elastic units. The first elastic member **3410** may comprise three elastic units. The first elastic member **3410** may comprise first to third elastic units **3410-1, 3410-2,** and **3410-3.** The first elastic unit **3410-1** may connect the support member **3500** and one end of the first-first coil **3121.** The second elastic unit **3410-2** may connect the other end of the first-first coil **3121** and one end of the first-second coil **3122.** The third elastic unit **3410-3** may connect the other end of the first-second coil **3122** and the support member **3500.** The first elastic member **3410** may be electrically connected to the first coil **3120.** The first elastic member **3410** may electrically connect the first coil **3120** and the support member **3500.**

The first elastic member **3410** may comprise an outer side portion **3411.** The outer side portion **3411** may be coupled to the housing **3210.** The outer side portion **3411** may be coupled to an upper surface of the housing **3210.** The outer side portion **3411** may comprise a hole or groove being coupled to the protrusion of the housing **3210.** The outer side portion **3411** may be fixed to the housing **3210** by an adhesive.

The first elastic member **3410** may comprise an inner side portion **3412.** The inner side portion **3412** may be coupled with the bobbin **3110.** The inner side portion **3412** may be coupled to an upper surface of the bobbin **3110.** The inner side portion **3412** may comprise a hole or groove being coupled to a protrusion of the bobbin **3110.** The inner side portion **3412** may be fixed to the bobbin **3110** by an adhesive.

The first elastic member **3410** may comprise a connecting portion 3413. The connecting portion **3413** may connect the inner side portion **3412** and the outer side portion **3411.** The connecting portion **3413** may have elasticity. At this time, the connecting portion **3413** may be referred to as an 'elastic portion'. The connecting portion **3413** may comprise a shape bent two or more times.

The first elastic member **3410** may comprise a connecting portion 3414. The connecting portion **3414** may be extended from an outer side portion 3411. The connecting portion **3414** may be coupled to the support member 3500. The connecting portion **3414** and the support member **3500** may be coupled by soldering.

The elastic member **3400** may comprise a second elastic member **3420.** The second elastic member **3420** may be a 'lower elastic member'. The second elastic member **3420** may be disposed below the first elastic member **3410.** The second elastic member **3420** may be disposed on one side of the first elastic member **3410.** The second elastic member **3420** may connect the housing **3210** and the bobbin **3110.** The second elastic member **3420** may be disposed below the bobbin **3110.** The second elastic member **3420** may be coupled to the bobbin **3110** and the housing **3210.** The second elastic member **3420** may be coupled to a lower surface of the bobbin **3110.** The second elastic member **3420** may be coupled to a lower surface of the housing **3210.** The second elastic member **3420** may be formed of a leaf spring. The second elastic member **3420** may be integrally formed.

The second elastic member 3420 may comprise an outer side portion 3421. The outer side portion 3421 may be coupled to the housing 3210. The outer side portion 3421 may be coupled to a lower surface of the housing 3210. The outer side portion 3421 may comprise a hole or groove being coupled to the protrusion of the housing 3210. The outer side portion 3421 may be fixed to the housing 3210 by an adhesive.

The second elastic member 3420 may comprise an inner side portion 3422. The inner side portion 3422 may be coupled to the bobbin 3110. The inner side portion 3422 may be coupled to a lower surface of the bobbin 3110. The inner side portion 3422 may comprise a hole or groove being coupled to a protrusion of the bobbin 3110. The inner side portion 3422 may be fixed to the bobbin 3110 by an adhesive.

The second elastic member 3420 may comprise a connecting portion 3423. The connecting portion 3423 may connect an inner side portion 3422 and an outer side portion 3421. The connecting portion 3423 may have elasticity. At this time, the connecting portion 3423 may be referred to as an 'elastic portion'. The connecting portion 3423 may comprise a shape bent two or more times.

The first lens driving device 3010 may comprise a support member 3500. The support member 3500 may be an 'OIS support member'. The support member 3500 may connect the first elastic member 3410 and the substrate 3320 or the first elastic member 3410 and the terminal 3350. The support member 3500 may be coupled to an upper surface of the first elastic member **3410** and the terminal **3350.** The support member **3500** may movably support the housing **3210.** The support member **3500** may elastically support the housing **3210.** At least a portion of the support member **3500** may have elasticity. The support member **3500** may elastically support the movement of the housing **3210** and the bobbin **3110** during OIS driving. One end of the support member **3500** may be coupled to the first elastic member **3410** by soldering. The other end of the support member **3500** may be coupled to the terminal **3350** by soldering.

The support member **3500** may comprise a plurality of wires. The support member **3500** may comprise four wires. The plurality of wires may comprise four wires connecting the three first elastic units **3410-1, 3410-2,** and **3410-3** and the substrate **3320.** As a modified example, the support member **3500** may be formed of a leaf spring.

The first lens driving device **3010** may comprise a first sensor **3610.** The first sensor **3610** may be disposed in the base **3310.** The first sensor **3610** may detect the sensing magnet **3130.** The first sensor **3610** may be disposed in the substrate **3320.** The first sensor **3610** may be coupled to a lower surface of the substrate **3320.** The first sensor **3610** may be spaced apart from the housing **3210.** The first sensor **3610** may be spaced apart from the bobbin **3110.** The first sensor **3610** may be overlapped with the sensing magnet **3130** in an optical axis direction. The first sensor **3610** may detect the position of the sensing magnet **3130** for AF feedback control. The first sensor **3610** may be a Hall IC, a Hall element, or a Hall sensor. The first sensor **3610** may detect the magnetic force of the sensing magnet **3130.**

The first lens driving device **3010** may comprise a second sensor **3620.** The second sensor **3620** may be disposed between the base **3310** and the substrate **3320.** The second sensor **3620** may detect the movement of the second mover **3300.** The second sensor **3620** may detect the movement of the housing **3210** and the magnet **3220** by detecting the magnetic force of the magnet **3220.** A detection value detected by the second sensor **3620** may be used for OIS feedback control. The second sensor **3620** may comprise a plurality of Hall sensors. The second sensor **3620** may comprise two Hall sensors. The second sensor **3620** may comprise a first Hall sensor for detecting the movement in an x-axis direction in the horizontal direction and a second Hall sensor for detecting the movement in a y-axis direction in the horizontal direction.

The first lens driving device **3010** may comprise a damper. The damper may be disposed in the support member **3500.** The damper may be disposed in the support member **3500** and the housing **3210.** The damper may be disposed in the elastic member. The damper may be disposed in the elastic member **3400** and/or the support member **3500** to prevent a resonance phenomenon generated in the elastic member **3400** and/or the support member **3500.**

The camera device **3002** may comprise a second lens driving device **3020.** The second lens driving device **3020** may be a voice coil motor (VCM). The second lens driving device **3020** may be a lens driving motor. The second lens driving device **3020** may be a lens driving actuator. The second lens driving device **3020** may comprise an AF module. The second lens driving device **3020** may comprise an OIS module. The second lens driving device **3020** may be disposed on a first surface of the printed circuit board **3030.** The second lens driving device **3020** may be disposed closest to the third lateral plate **3342-3** among the first to fourth lateral plates **3342-1, 3342-2, 3342-3,** and **3342-4** of the first lens driving device **3010.**

The second lens driving device **3020** may comprise a first mover. The first mover may be coupled to the second lens **3042.** The first mover may be connected to the second mover through the first elastic member and/or the second elastic member. The first mover may move through interaction with the second mover. At this time, the first mover can move integrally with the second lens **3042.** Meanwhile, the first mover may move during AF driving. At this time, the first mover may be referred to as an 'AF mover'. However, the first mover may move together with the second mover even during OIS driving.

The second lens driving device **3020** may comprise a bobbin. The first mover may comprise a bobbin. A bobbin may be disposed inside the housing. The bobbin may be disposed in a hole in the housing. The bobbin may be movably coupled to the housing. The bobbin is movable against the housing in an optical axis direction. A second lens **3042** may be coupled to the bobbin. The bobbin and the second lens **3042** may be coupled by screw-coupling and/or an adhesive. A first coil may be coupled to the bobbin. A first elastic member may be coupled to an upper portion or upper surface of the bobbin. A second elastic member may be coupled to a lower portion or lower surface of the bobbin. The bobbin may be coupled to the first elastic member and/or the second elastic member by thermal fusion and/or an adhesive. The adhesive for coupling the bobbin and the second lens **3042** and the bobbin and the elastic member may be an epoxy cured by at least one among ultraviolet (UV) light, heat, and laser.

The second lens driving device **3020** may comprise a first coil. The first mover may comprise a first coil. The first coil may be an 'AF driving coil' used for AF driving. The first coil may be disposed in the bobbin. The first coil may move the bobbin. The first coil may be disposed between the bobbin and the housing. The first coil may be disposed on an outer lateral surface or an outer circumferential surface of the bobbin. The first coil may be directly wound in the bobbin. Or, the first coil may be coupled to the bobbin in a directly wound state. The first coil may face the magnet **3022.** The first coil may be disposed to face the magnet **3022.** The first coil may interact electromagnetically with the magnet **3022.** In this case, when a current is supplied to the first coil and an electromagnetic field is formed around the first coil, the first coil may move against the magnet **3022** due to the electromagnetic interaction between the first coil and the magnet **3022.**

The first coil may comprise a plurality of coils. The first coil may comprise two coils. The first coil may comprise first-first and first-second coils. The first-first coil may be disposed at a position corresponding to the first lateral plate of the cover member. The first-first coil may be disposed to face the first lateral plate of the cover member. The first-second coil may be disposed at a position corresponding to the second lateral plate of the cover member. The first-second coil may be disposed to face the second lateral plate of the cover member.

In a first embodiment of the present embodiment, the first coil and the magnet **3022** may move the bobbin in an optical axis direction against the housing. The first coil and the magnet **3022** may move the bobbin in an optical axis direction through an electromagnetic interaction. The first coil and the magnet **3022** may be used for AF driving.

The second lens driving device **3020** may comprise a coil. The coil can move the bobbin. The coil may comprise a first coil for moving the bobbin in an optical axis direction and a second coil for moving the bobbin in a direction perpendicular to the optical axis direction.

The second lens driving device **3020** may comprise a sensing magnet. The first mover may comprise a sensing magnet. A sensing magnet may be disposed in the bobbin. The sensing magnet may be detected through the first sensor. In addition, the second lens driving device **3020** may comprise a compensation magnet. The first mover may comprise a compensation magnet. The compensation magnet may be disposed to achieve magnetic force balance with the sensing magnet. The compensation magnet may have a weight corresponding to that of the sensing magnet. The compensation magnet may be disposed symmetrically with the sensing magnet with respect to an optical axis.

The second lens driving device **3020** may comprise a second mover. The second mover may be movably coupled to the stator through a support member. The second mover may support the first mover through the first and second elastic members. The second mover may move the first mover or move together with the first mover. The second mover may move through the interaction with the stator. The second mover can move during OIS driving. At this time, the second mover may be referred to as an 'OIS mover'. The second mover can move integrally with the first mover during OIS driving.

The second lens driving device **3020** may comprise a housing. The second mover may comprise a housing. The housing may be spaced apart from the base. The housing may be disposed outside the bobbin. The housing can accommodate at least a portion of the bobbin. The housing may be disposed inside the cover member. The housing may be disposed between the cover member and the bobbin. The housing may be formed of a material different from that of the cover member. The housing may be formed of an insulating material. The housing may be formed through injection molding. An outer side surface of the housing may be spaced apart from an inner surface of a lateral plate of the cover member. The housing may be moved for OIS driving through the separation space between the housing and the cover member. A magnet **3022** may be disposed in the housing. The housing and the magnet **3022** may be coupled by an adhesive. A first elastic member may be coupled to an upper portion or upper surface of the housing. A second elastic member may be coupled to a lower portion or lower surface of the housing. The housing may be coupled to an upper portion and the second elastic member by thermal fusion and/or an adhesive. An adhesive coupling the housing and the magnet **3022** and the housing and the elastic member may be an epoxy cured by at least one among ultraviolet (UV) light, heat, and laser.

The housing may comprise four side portions and four corner portions being disposed between the four side portions. The side portion of the housing may comprise: a first side portion; a second side portion being disposed at an opposite side of the first side portion; and a third side portion and a fourth side being disposed at an opposite side to each other between the first side portion and the second side portion. The corner portion of the housing may comprise: a first corner portion being disposed between the first side portion and the third side portion; a second corner portion being disposed between the first side portion and the fourth side portion; a third corner portion being disposed between a second side portion and the third side portion; and a fourth corner portion being disposed between the second side portion and the fourth side portion. A side portion of the housing may comprise a 'lateral wall'. The first side portion of the housing may be disposed at a position corresponding to the first lateral plate of the cover member. The second side portion of the housing may be disposed at a position corresponding to the second lateral plate of the cover member. The third side portion of the housing may be disposed at a position corresponding to the third lateral plate of the cover member. The fourth side portion of the housing may be disposed at a position corresponding to the fourth lateral plate of the cover member.

The second lens driving device **3020** may comprise a magnet **3022.** The second mover may comprise a magnet **3022.** The magnet **3022** may be disposed in the housing. The magnet **3022** may be disposed inside the cover member. The magnet **3022** may be fixed to the housing by an adhesive. The magnet **3022** may be disposed between the bobbin and the housing. The magnet **3022** may face the first coil. The magnet **3022** may interact electromagnetically with the first coil. The magnet **3022** may move the bobbin in an optical axis direction through the interaction with the first coil. The magnet **3022** may be used for AF driving. The magnet **3022** may face the second coil. The magnet **3022** may interact electromagnetically with the second coil. The magnet **3022** may move the bobbin and the housing in a direction perpendicular to the optical axis direction through the interaction with the second coil. The magnet **3022** may be used for OIS driving. The magnet **3022** may be disposed in a plurality of side portions of the housing. The magnet **3022** may be a flat magnet having a flat plate shape.

The magnet **3022** may comprise a plurality of magnets. The magnet **3022** may comprise three magnets. The magnet **3022** may comprise first to third magnets. The first magnet may be disposed in a first side portion of the housing. The second magnet may be disposed in a second side portion of the housing. The third magnet may be disposed in a fourth side portion of the housing. A dummy member may be disposed in a third side portion of the housing.

The first magnet may face the first-first coil. The second magnet may face the first-second coil. The first and second magnets may be used during AF driving. The magnet may comprise: a first magnet being disposed at a position corresponding to the first lateral plate of the cover member; a second magnet being disposed at a position corresponding to the second lateral plate; and a third magnet being disposed at a position corresponding to the fourth lateral plate.

The first magnet may face the second-first coil. The second magnet may face the second-second coil. The first and second magnets may be used when driving in an OIS-x-axis direction. The third magnet may face the second-third coil. The third magnet may be used when driving in an OIS-y-axis direction. The area of the lower surface of the third magnet may be larger than that of each of the lower surfaces of the first and second magnets.

The second lens driving device **3020** may comprise a dummy member. The second mover may comprise a dummy member. The dummy member may be disposed in the housing. The dummy member may be disposed in the third side portion of the housing. The dummy member may be disposed adjacent to the second lens driving device 3020. Through this, magnetic force interference between the second lens driving device **3020** and the second lens driving device **3020** may be minimized. The dummy member may be disposed at a position corresponding to the third lateral plate of the cover member.

The dummy member may have a weight corresponding to that of the third magnet. The dummy member may have weaker magnetic force than the third magnet or may not have magnetic force. The dummy member may be disposed at an opposite side of the third magnet in the housing. The weight of the dummy member may correspond to the weight of the third magnet. However, the dummy member may have a weight lighter than that of the third magnet. Or, the dummy member may have a weight heavier than that of the third magnet. The dummy member may be within 80% of the weight of the third magnet to 120% of the weight of the third magnet. When the weight of the dummy member is less than the lower limit or exceeds the upper limit of the above-mentioned value, the weight balancing of the OIS driving unit may collapse.

The dummy member may be a non-magnetic material. The dummy member may comprise a non-magnetic material. The magnetic strength of the dummy member may be weaker than that of the third magnet. The dummy member may be disposed at an opposite side of the third magnet to align the center of gravity. The dummy member may be made of 95% or more of tungsten. That is, the dummy member may be a tungsten alloy. For example, the specific gravity of the dummy member may be 18000 or more. The dummy member may be disposed at a position symmetrical to the third magnet with respect to the central axis of the housing. At this time, the central axis of the housing may correspond with an optical axis. The dummy member may have a thickness corresponding to the third magnet and a direction perpendicular to the optical axis.

The second lens driving device **3020** may comprise a yoke. The second mover may comprise a yoke. The yoke may be disposed in the housing. The yoke may be disposed in the third side portion of the housing. The yoke may be disposed adjacent to the second lens driving device **3020.** Through this, magnetic force interference between the second lens driving device **3020** and the second lens driving device **3020** may be minimized.

The second lens driving device **20** may comprise a yoke **2240.** The second mover 2200 may comprise a yoke **2240.** The yoke **2240** may be disposed in the second housing **2210.** The yoke **2240** may be disposed in the first side portion of the second housing **2210.** The yoke **2240** may be disposed adjacent to the first lens driving device **10.** Through this, magnetic force interference between the first lens driving device **10** and the second lens driving device **20** can be minimized.

The second lens driving device **3020** may comprise a stator. The stator may be disposed below the first and second movers. The stator may movably support the second mover. The stator may move the second mover. At this time, the first mover can also move with the second mover.

The second lens driving device **3020** may comprise a base. The stator may comprise a base. The base may be disposed below the housing. The base can be disposed below the substrate. A substrate may be placed on an upper surface of the base. The base may be coupled with the cover member. The base may be disposed on the printed circuit board **3030.**

The second lens driving device **3020** may comprise a substrate. The stator may comprise a substrate. A substrate may be disposed at one side of the housing. A substrate may be disposed between the base and the housing. The substrate may be placed on an upper surface of the base. A support member may be coupled to the substrate. The substrate may be electrically connected to the support member. One end of the support member may be fixed to the substrate. The substrate may be coupled to the printed circuit board **3030** being disposed below the base by soldering. The substrate may comprise a flexible printed circuit board (FPCB). The substrate may be bent in part.

The substrates may comprise a body part. A hole may be formed in the body part. The hole may be hollow penetrating the substrate in an optical axis direction. The substrate may comprise a hole. A support member may be disposed in the hole of the substrate. The support member may be disposed to pass through the hole of the substrate.

The second lens driving device **3020** may comprise a terminal unit **3021.** The terminal unit **3021** may be extended from the body part. The terminal unit **3021** may be extended downward from the body part. The terminal unit **3021** may be bent from the body part. The terminal unit **3021** may comprise a plurality of terminal units. The terminal unit **3021** may comprise a first terminal unit and a second terminal unit being disposed at an opposite side of the first terminal unit. In the second lens driving device **3020,** the first terminal unit and the second terminal unit may have the same width. The first terminal unit may be disposed to correspond to the first lateral plate of the cover member, and the second terminal unit may be disposed to correspond to the second lateral plate of the cover member.

The second lens driving device **3020** may comprise a second coil. The stator may comprise a second coil. The second coil may be an 'OIS coil'. The second coil may move the bobbin. A second coil may be disposed in the base. A second coil may be disposed in the substrate. The second coil may face the magnet **3022.** The second coil may interact electromagnetically with the magnet **3022.** In this case, when a current is supplied to the second coil and a magnetic field is formed around the second coil, the magnet **3022** may move against the second coil due to electromagnetic interaction between the second coil and the magnet **3022.** The second coil may move the housing and the bobbin in a direction perpendicular to the optical axis with respect to the base through electromagnetic interaction with the magnet **3022.** The substrate may comprise a second coil. That is, the second coil may be a configuration of the substrate. The second coil may be formed as a fine pattern coil (FP coil) in a substrate separate from the substrate.

The second coil may comprise a plurality of coils. The second coil may comprise a number of coils corresponding to the magnet **3022.** The second coil may comprise three coils. The second coil may comprise a second-first coil, a second-second coil, and a second-third coil. The second-first coil may face the first magnet. The second-second coil may face the second magnet. The second-third coil may face the third magnet.

The second lens driving device **3020** may comprise a cover member. The stator may comprise a cover member. The cover member may comprise a 'cover can'. The cover member may comprise a yoke. The cover member may be disposed outside the housing. The cover member may be coupled to the base. The cover member can accommodate the housing therein. The cover member may form the outer appearance of the second lens driving device **3020.** The cover member may have a hexahedral shape with an open lower surface. The cover member may be a non-magnetic material. The cover member may be formed of a metal material. The cover member may be formed of a metal plate. The cover member may be connected to the ground portion of the printed circuit board **3030.** Through this, the cover member may be grounded. The cover member may block electromagnetic interference (EMI). At this time, the cover member may be referred to as an 'EMI shield can'.

The cover member may comprise an upper plate and a lateral plate. The cover member may comprise an upper plate comprising a hole and a lateral plate being extended downward from an outer circumference or edge of the upper plate. The lower end of the lateral plate of the cover member may be disposed in a step of the base. An inner surface of the lateral plate of the cover member may be fixed to the base by an adhesive.

The lateral plate of the cover member may comprise a plurality of lateral plates. The lateral plate may comprise four lateral plates. The lateral plates of the cover member may comprise a first lateral plate and a second lateral plate being disposed at an opposite side to each other, and a third lateral plate and a fourth lateral plate being disposed at an opposite side to each other. The third lateral plate of the second lens driving device **3020** may face the third lateral plate **3342-3** of the first lens driving device **3010.**

The second lens driving device **3020** may comprise a terminal. The stator may comprise a terminal. The terminals can be disposed in the base. The terminal may be electrically connected to a substrate. The terminal may be coupled to a support member. The terminal may electrically connect the support member and the substrate.

The second lens driving device **3020** may comprise an elastic member. The elastic member may be an 'AF support member'. The elastic member may have elasticity at least in part. The elastic member may be formed of metal. The elastic member may be formed of a conductive material. The elastic member may connect the bobbin and the housing. The elastic member may elastically connect the bobbin and the housing. The elastic member may be coupled to the bobbin and the housing. The elastic member may elastically support the bobbin. The elastic member may movably support the bobbin. The elastic member may support movement of the bobbin during AF driving.

The elastic member may comprise a first elastic member. The first elastic member may be an 'upper elastic member'. The first elastic member may connect the housing and the bobbin. The first elastic member may be coupled to an upper portion of the bobbin and an upper portion of the housing. The first elastic member may be coupled to an upper surface of the bobbin. The first elastic member may be coupled to an upper surface of the housing. The first elastic member may be coupled to the support member. The first elastic member may be formed as a leaf spring. The first elastic member may be separated and used as a power line for electrical or communication signal.

The first elastic member may comprise a plurality of elastic units. The first elastic member may comprise three elastic units. The first elastic member may comprise first to third elastic units. The first elastic unit may connect the support member and one end of the first-first coil. The second elastic unit may connect the other end of the first-first coil and one end of the first-second coil. The third elastic unit may connect the other end of the first-second coil to the support member. The first elastic member may be electrically connected to the first coil. The first elastic member may electrically connect the first coil and the support member.

The first elastic member may comprise an outer side portion. The outer side portion may be coupled to the housing. The outer side portion may be coupled to an upper surface of the housing. The outer side portion may comprise a hole or groove being coupled to a protrusion of the housing. The outer side portion may be fixed to the housing by an adhesive.

The first elastic member may comprise an inner side portion. The inner side portion may be coupled with the bobbin. The inner side portion may be coupled to an upper surface of the bobbin. The inner side portion may comprise a hole or groove being coupled to a protrusion of the bobbin. The inner side portion may be fixed to the bobbin by an adhesive.

The first elastic member may comprise a connecting portion. The connecting portion may connect an inner side portion and an outer side portion. The connecting portion may have elasticity. At this time, the connecting portion may be referred to as an 'elastic portion'. The connecting portion may comprise a shape bent two or more times.

The first elastic member may comprise a coupling portion. The coupling portion may be extended from an outer side portion. The coupling portion may be coupled to the support member. The coupling portion and the support member may be coupled by a solder.

The elastic member may comprise a second elastic member. The second elastic member may be a 'lower elastic member'. The second elastic member may be disposed below the first elastic member. The second elastic member may be disposed at one side of the first elastic member. The second elastic member may connect the housing and the bobbin. The second elastic member may be disposed below the bobbin. The second elastic member may be coupled to the bobbin and the housing. The second elastic member may be coupled to a lower surface of the bobbin. The second elastic member may be coupled to a lower surface of the housing. The second elastic member may be formed as a leaf spring. The second elastic member may be integrally formed.

The second elastic member may comprise an outer side portion. The outer side portion may be coupled to the housing. The outer side portion may be coupled to a lower surface of the housing. The outer side portion may comprise a hole or groove being coupled to the protrusion of the housing. The outer side portion may be fixed to the housing by an adhesive.

The second elastic member may comprise an inner side portion. The inner side portion may be coupled with the bobbin. The inner side portion may be coupled to a lower surface of the bobbin. The inner side portion may comprise a hole or groove being coupled to the protrusion of the bobbin. The inner side portion may be fixed to the bobbin by an adhesive.

The second elastic member may comprise a connecting portion. The connecting portion may connect an inner side portion and an outer side portion. The connecting portion may have elasticity. At this time, the connecting portion may be referred to as an 'elastic portion'. The connecting portion may comprise a shape bent two or more times.

The second lens driving device **3020** may comprise a support member. The support member may be an 'OIS support member'. The support member may connect the first elastic member to the substrate or the first elastic member to the terminal. The support member may be coupled to an upper surface of the first elastic member and the terminal. The support member may movably support the housing. The support member may elastically support the housing. The support member may have elasticity at least in part. The support member may elastically support the movement of the housing and the bobbin during OIS driving. One end of the support member may be coupled to the first elastic member by soldering. The other end of the support member may be coupled to the terminal by soldering.

The support member may comprise a plurality of wires. The support member may comprise four wires. The plurality of wires may comprise four wires connecting the three first elastic units **3410-1, 3410-2,** and **3410-3** and the substrate. As a modified embodiment, the support member may be formed as a leaf spring.

The second lens driving device **3020** may comprise a first sensor. The first sensor may be disposed in the base. The first sensor may detect a sensing magnet. The first sensor may be disposed in the substrate. The first sensor may be coupled to a lower surface of the substrate. The first sensor may be spaced apart from the housing. The first sensor may be spaced apart from the bobbin. The first sensor may be overlapped with the sensing magnet in an optical axis direction. The first sensor may detect the position of the sensing magnet for AF feedback control. The first sensor may be a Hall IC, a Hall element, or a Hall sensor. The first sensor may detect the magnetic force of the sensing magnet.

The second lens driving device **3020** may comprise a second sensor. The second sensor may be disposed between the base and the substrate. The second sensor may detect the movement of the second mover. The second sensor may detect the movement of the housing and the magnet by detecting the magnetic force of the magnet. A detection value detected by the second sensor may be used for OIS feedback control. The second sensor may comprise a plurality of Hall sensors. The second sensor may comprise two Hall sensors. The second sensor may comprise a first Hall sensor for detecting the movement in an x-axis direction in the horizontal direction and a second Hall sensor for detecting the movement in a y-axis direction in the horizontal direction.

The second lens driving device **3020** may comprise a damper. The damper may be disposed in the support member. The damper may be disposed in the support member and the housing. The damper may be disposed in the elastic member. The damper may be disposed in the elastic member and/or the support member to prevent a resonance phenomenon generated in the elastic member and/or the support member.

Hereinafter, an optical device according to a first embodiment of present embodiment will be described with reference to drawings.

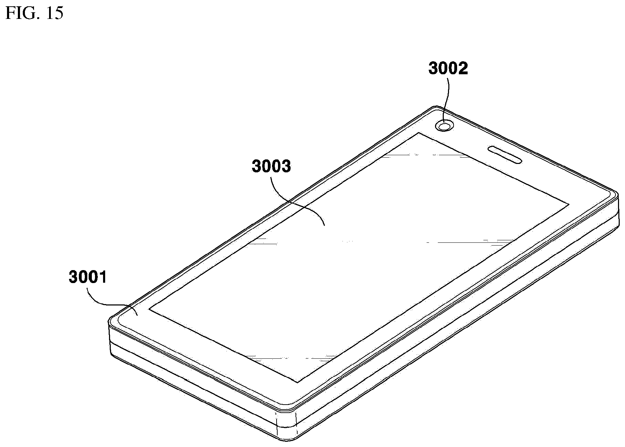

FIG. 15 is a perspective view of an optical device according to a first embodiment of the present embodiment.

Optical devices comprise cell phones, portable phones, smart phones, portable communication devices, portable smart devices, portable terminals, digital cameras, computers, laptop computers, digital broadcasting terminals, personal digital assistants (PDAs), portable multimedia players (PMPs) and navigation. However, the type of optical device is not limited thereto, and any device for photographing a video or photo may be comprised in the optical device.

The optical device may comprise a main body **3001.** The main body 1 may form the outer appearance of an optical device. The main body **3001** can accommodate the camera device **3002.** A display **3003** may be disposed at a first surface of the main body **3001.** For example, the display **3003** and the camera device **3002** are disposed at a first surface of the main body **3001,** and a camera device **3002** may be additionally disposed at a second surface at an opposite side of the first surface of the main body **3001.**

The optical device may comprise a camera device **3002.** The camera device **3002** may be disposed in the main body **3001.** At least a portion of the camera device **3002** may be accommodated inside the main body **3001.** The camera device **3002** may be provided in plurality. The camera device **3002** may comprise dual, triple or more camera devices. The camera device **3002** may be disposed at each of the first surface of the main body **3001** and the second surface at an opposite side of the first surface of the main body **3001.** The camera device **3002** may photograph an image and/or video of a subject.

The optical device may comprise a display **3003.** The display **3003** may be disposed in the main body **3001.** The display **3003** may be disposed at a first surface of the main body **3001.** The display **3003** may output images and/or videos photographed by the camera device **3002.**

Hereinafter, a configuration of a camera device according to a second embodiment of the present embodiment will be described with reference to the drawings.

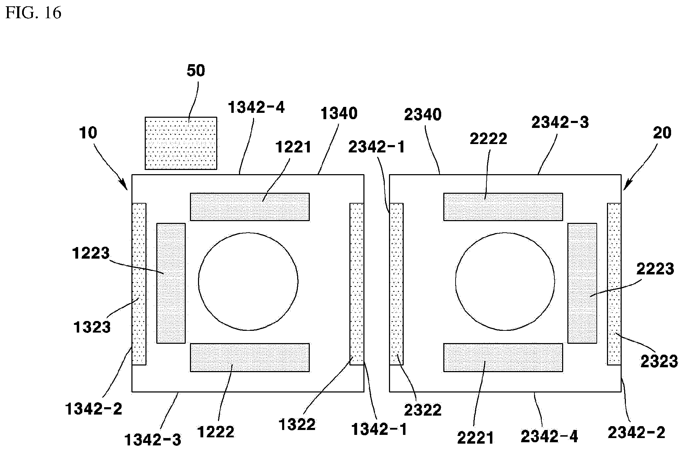

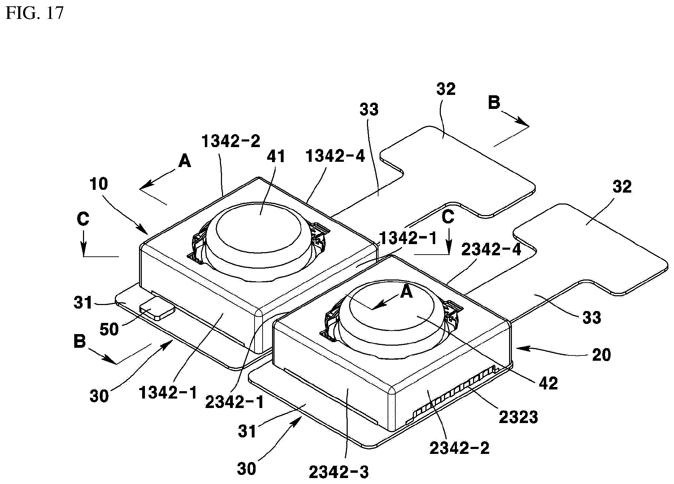

FIG. 16 is a schematic diagram of a camera device according to a second embodiment of the present embodiment; and FIG. 17 is a perspective view of a camera device according to a second embodiment of the present embodiment.

The camera device **2** may comprise a camera module.

The camera device **2** may comprise a lens driving device. The camera device **2** may comprise a plurality of lens driving devices. The camera device **2** may comprise two lens driving devices. The camera device **2** may comprise a first and second lens driving devices **10** and **20.** The camera device **2** may comprise a dual camera module. The camera device **2** may comprise three or more lens driving devices.

The camera device **2** may comprise a printed circuit board (PCB) **30.** The printed circuit board **30** may be a substrate or circuit substrate. A lens driving device may be disposed in the printed circuit board **30.** A first and second lens driving devices **10** and **20** may be disposed in the printed circuit board **30.** A sensor base may be disposed between the printed circuit board **30** and the lens driving device **10.** The printed circuit board **30** may be electrically connected to the lens driving device. The printed circuit board **30** may be electrically connected to the first and second lens driving devices **10** and **20.** An image sensor may be disposed in the printed circuit board **30.** A gyro sensor **50** may be disposed in the printed circuit board **30.** The printed circuit board **30** may comprise various circuits, elements, control units, and the like in order to convert an image being formed on an image sensor into an electrical signal and transmit it to an external device.

The printed circuit board **30** may comprise: a first portion **21** in which a lens driving device is disposed; a second portion **22** in which a connector is disposed; and a third portion **23** connecting the first portion **21** and the second portion **22.**

The camera device **2** may comprise a connector. The connector may be electrically connected to the printed circuit board **30.** The connector may comprise a port for electrically connecting with an external device. The connector may be disposed in the third portion **33** of the printed circuit board **30.**

The camera device **2** may comprise a lens module. The lens module may be coupled to the bobbin of the lens driving device. The lens module may be coupled to the bobbin by screw-coupling and/or an adhesive. The lens module may move integrally with the bobbin. The lens module may comprise a lens. The lens module may comprise a barrel and a plurality of lenses disposed inside the barrel. The lens may be disposed at a position corresponding to the image sensor. The lens may comprise a first lens **41** being coupled to the first lens driving device **10.** The lens may comprise a second lens **42** being coupled to the second lens driving device **20.**

The camera device **2** may comprise a filter. The filter may serve to block light of a specific frequency band among the light passing through the lens module from being incident on the image sensor. The filter may be disposed parallel to an x-y plane. The filter may be disposed between the lens module and the image sensor. A filter may be disposed in the sensor base. The filter may comprise an infrared filter. The infrared filter may block light in the infrared region from being incident on the image sensor. The infrared filter may comprise an infrared reflection filter or an infrared absorption filter.

The camera device **2** may comprise a sensor base. The sensor base may be disposed between the lens driving device and the printed circuit board **30.** An opening may be formed in a portion of the sensor base where the filter is disposed so that light passing through the filter may be incident on the image sensor.

The camera device **2** may comprise an image sensor. The image sensor may be configured to form an image by incident light passing through a lens and a filter. The image sensor may be disposed on the printed circuit board **30.** The image sensor may be mounted on the printed circuit board **30.** The image sensor may be electrically connected to the printed circuit board **30.** As an example, the image sensor may be coupled to the printed circuit board **30** by a surface mounting technology (SMT). As another example, the image sensor may be coupled to the printed circuit board **30** by a flip chip technology. The image sensor may be disposed such that an optical axis coincides with a lens. That is, the optical axis of the image sensor and the optical axis of the lens may be aligned. The image sensor may convert light irradiated onto an effective image area of the image sensor into an electrical signal. The image sensor may be any one of a charge coupled device (CCD), a metal oxide semi-conductor (MOS), a CPD, and a CID.

The camera device **2** may comprise electronic components. The camera device **2** may comprise an electric element. The electronic component may be a gyro sensor **50.** The camera device **2** may comprise a gyro sensor **50.** The gyro sensor **50** may be disposed in the printed circuit board **30.** The gyro sensor **50** may be disposed on an upper surface of the printed circuit board **30.** The gyro sensor **50** may be disposed on a first surface of the printed circuit board **30.**

In a second embodiment of the present embodiment, the first lateral plate **1342-1** of the first cover **1340** may be disposed to face the first lateral plate **2342-1** of the second cover **2340.** A first substrate **1320** may comprise a terminal unit comprising terminals being coupled to the printed circuit board **30.** The terminal unit of the first substrate **1320** may comprise a first terminal unit **1322** being disposed at a position corresponding to the first lateral plate **1342-1** of the first cover **1340.** The terminal unit of the first substrate **1320** may comprise a second terminal unit **1322** being disposed at a position corresponding to the second lateral plate **1342-2** of the first cover **1340.** At this time, the gyro sensor **50** may be disposed adjacent to the third lateral plate **1342-3** of the first cover **1340.**

The gyro sensor **50** may be disposed to be spaced apart from the first lens driving device **10.** The gyro sensor **50** may be disposed in contact with the first lens driving device **10.** The gyro sensor **50** may be disposed spaced apart from the first cover **1340.** The gyro sensor **50** may be disposed in contact with the first cover **1340.** The gyro sensor **50** may be disposed to be closest to the third lateral plate **1342-3** among the first to fourth lateral plates **1342-1, 1342-2, 1342-3,** and **1342-4** of the first cover **1340.** The gyro sensor **50** may be disposed to be closer to the second lateral plate **1342-2** than to the first lateral plate **1342-1.**

The body part **1321** of the first substrate **1320** may comprise: a first region in which the second-first coil **1331** is disposed; a second region in which the second-second coil **1332** is disposed; a third region in which the second-third coil **1333** is disposed; and a fourth region where the second coil **1330** is not disposed. The terminal unit of the first substrate **1320** may comprise a first terminal unit **1322** being extended from an edge of the fourth region of the body part **1321.** The terminal unit of the first substrate **1320** may comprise a second terminal unit **1323** being extended from an edge of the third region of the body part **1321.** The second-first coil **1331,** the second-second coil **1332,** and the second-third coil **1333** may be referred to as a first coil, a second coil, and a third coil.

An outer side surface of the first terminal unit **1322** may face the second lens driving device **20.** The first terminal unit **1322** may be spaced apart from the second lens driving device **20.** An outer side surface of the second terminal unit **1323** may not face the second lens driving device **20.** The first terminal unit **1322** may be disposed closer to the second lens driving device **20** than the second terminal unit **1323.**

The first base **1310** may comprise a first side surface being disposed at a position corresponding to the first lateral plate **1342-1** of the first cover **1340.** The first terminal unit **1322** may be disposed on a first side surface of the first base **1310.** The first base **1310** may comprise a second side surface being disposed at a position corresponding to the second lateral plate **1342-2** of the first cover **1340.** The second side surface of the first base **1310** may be disposed at an opposite side of the first side surface of the first base **1310.** The second terminal unit **1323** may be disposed on a second side surface of the first base **1310.**

The terminal unit of the first substrate **1320** may comprise a second terminal unit **1323** being disposed at an opposite side of the first terminal unit **1322.** The first terminal unit **1322** and the second terminal unit **1323** may be disposed at an opposite side to each other. The first terminal unit **1322** and the second terminal unit **1323** may be disposed at an opposite side to each other with respect to the first base **1310.** The first terminal unit **1322** and the second terminal unit **1323** may be disposed at an opposite side to each other with respect to an optical axis of the first lens driving device **10.**

The first terminal unit **1322** and the second terminal unit **1323** may be formed to have different sizes. The first terminal unit **1322** and the second terminal unit **1323** may be formed to have different widths. The first terminal unit **1322** and the second terminal unit **1323** may be formed in different shapes. The first terminal unit **1322** and the second terminal unit **1323** may comprise different numbers of terminals. Any one of the first terminal unit **1322** and the second terminal unit **1323** comprises 8 terminals and the other may comprise 7 terminals.

The first terminal unit **1322** and the second terminal unit **1323** may be formed to have the same size. The first terminal unit **1322** and the second terminal unit **1323** may be formed to have the same width. The first terminal unit **1322** and the second terminal unit **1323** may be formed in the same shape. The first terminal unit **1322** and the second terminal unit **1323** may comprise the same number of terminals. Each of the first terminal unit **1322** and the second terminal unit **1323** may comprise eight terminals.

In a second embodiment of the present embodiment, the first lateral plate **2342-1** of the second cover **2340** may be disposed to face the first lateral plate **1342-1** of the first cover **1340.** The second substrate **2320** may comprise a terminal unit comprising terminals being coupled to the printed circuit board **30.** The terminal unit of the second substrate **2320** may comprise a first terminal unit **2322** being disposed at a position corresponding to the first lateral plate **2342-1** of the second cover **2340.** The terminal unit of the second substrate **2320** may comprise a second terminal unit **2322** being disposed at a position corresponding to the second lateral plate **2342-2** of the second cover **2340.** At this time, the gyro sensor **50** may be disposed closer to the first lens driving device **10** than to the second lens driving device **20.**

The body part **2321** of the second substrate **2320** may comprise: a first region in which the fourth-first coil **2331** is disposed; a second region in which the fourth-second coil **2332** is disposed; a third region in which the fourth-third coil **2333** is disposed; and a fourth region where the fourth coil **2330** is not disposed. The terminal unit of the second substrate **2320** may comprise a first terminal unit **2322** being extended from an edge of the fourth region of the body part **2321.** The terminal unit of the second substrate **2320** may comprise a second terminal unit **2323** being extended from an edge of a third region of the body part **2321.** The fourth-first coil **4331,** fourth-second coil **4332,** and fourth-third coil **4333** may be referred to as a first coil, a second coil, and a third coil.

An outer surface of the first terminal unit **2322** may face the first lens driving device **10.** The first terminal unit **2322** may be spaced apart from the first lens driving device **10.** An outer side surface of the second terminal unit **2323** may not face the first lens driving device **10.** The first terminal unit **2322** may be disposed closer to the first lens driving device **10** than the second terminal unit **2323.**

The second base **2310** may comprise a first side surface being disposed at a position corresponding to the first lateral plate **1342-1** of the second cover **2340.** The first terminal unit **2322** may be disposed on a first side surface of the second base **2310.** The second base **2310** may comprise a second side surface being disposed at a position corresponding to the second lateral plate **1342-2** of the second cover **2340.** The second side surface of the second base **2310** may be disposed at an opposite side of the first side surface of the second base **2310.** The second terminal unit **2323** may be disposed on a second side surface of the second base **2310.**

The terminal unit of the second substrate **2320** may comprise a second terminal unit **2323** being disposed at an opposite side of the first terminal unit **2322.** The first terminal unit **2322** and the second terminal unit **2323** may be disposed at an opposite side to each other. The first terminal unit **2322** and the second terminal unit **2323** may be disposed at an opposite side to each other with respect to the second base **2310.** The first terminal unit **2322** and the second terminal unit **2323** may be disposed at an opposite side to each other with respect to an optical axis of the second lens driving device **20.**

The first terminal unit **2322** and the second terminal unit **2323** may be formed in different sizes. The first terminal unit **2322** and the second terminal unit **2323** may be formed to have different widths. The first terminal unit **2322** and the second terminal unit **2323** may be formed in different shapes. The first terminal unit **2322** and the second terminal unit **2323** may comprise different numbers of terminals. Any one of the first terminal unit **2322** and the second terminal unit **2323** comprises 8 terminals and the other may comprise **7** terminals.

The first terminal unit **2322** and the second terminal unit **2323** may be formed to have the same size. The first terminal unit **2322** and the second terminal unit **2323** may be formed to have the same width. The first terminal unit **2322** and the second terminal unit **2323** may be formed in the same shape. The first terminal unit **2322** and the second terminal unit **2323** may comprise the same number of terminals. Each of the first terminal unit **2322** and the second terminal unit **2323** may comprise eight terminals.

The second substrate **2320** may comprise a first terminal unit **2322** being disposed to face the first terminal unit **1322** of the first substrate **1320.** The second substrate **2320** may comprise a second terminal unit **2323** being disposed at an opposite side of the first terminal unit **2322** of the second substrate **2320.**

Hereinafter, a configuration of a first lens driving device according to a second embodiment of present embodiment will be described with reference to drawings.

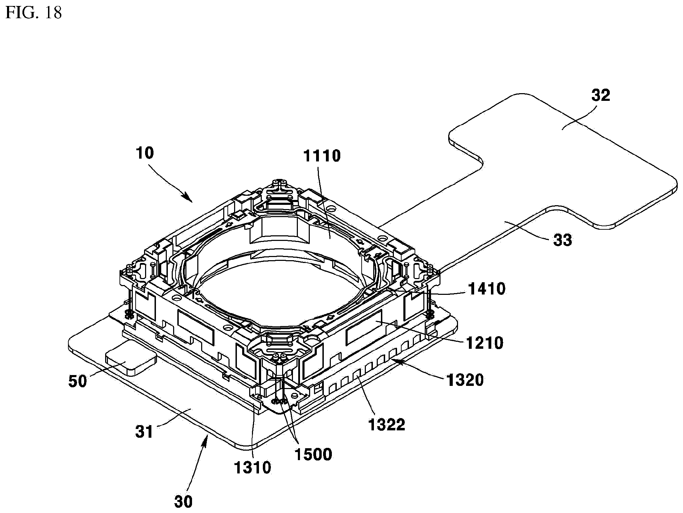

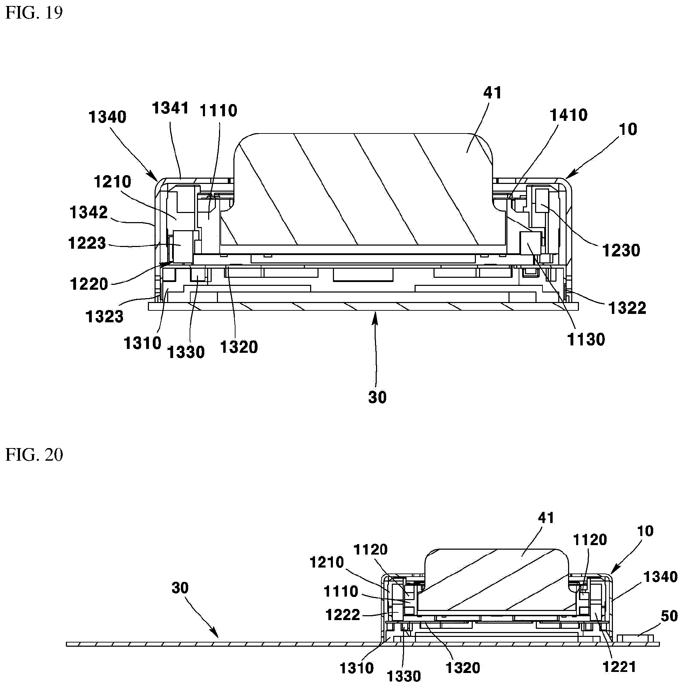

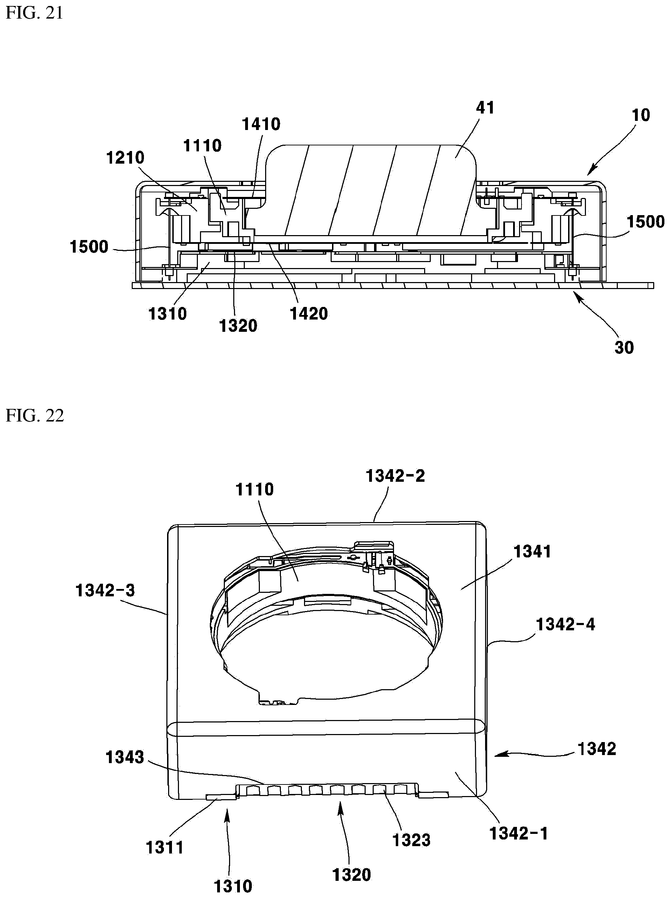

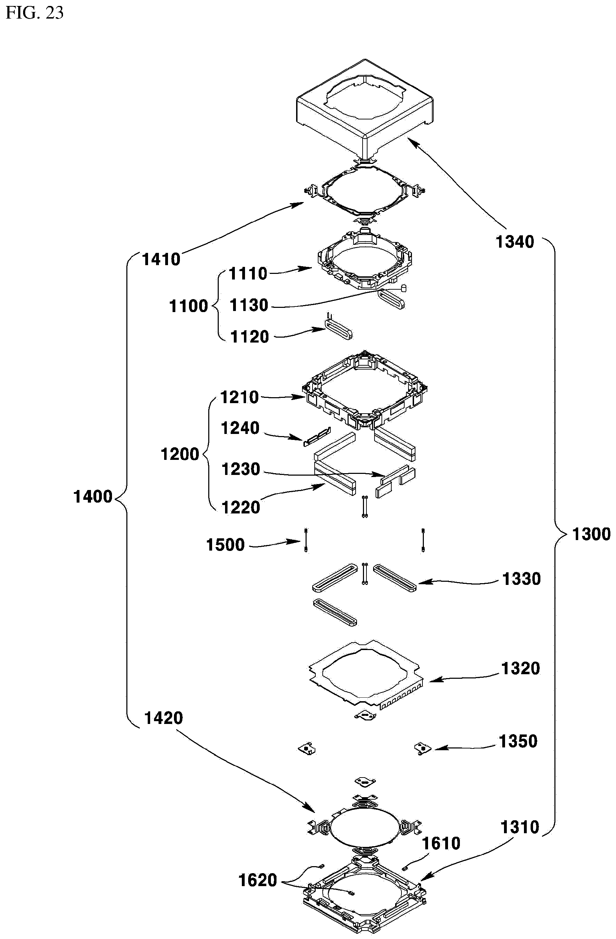

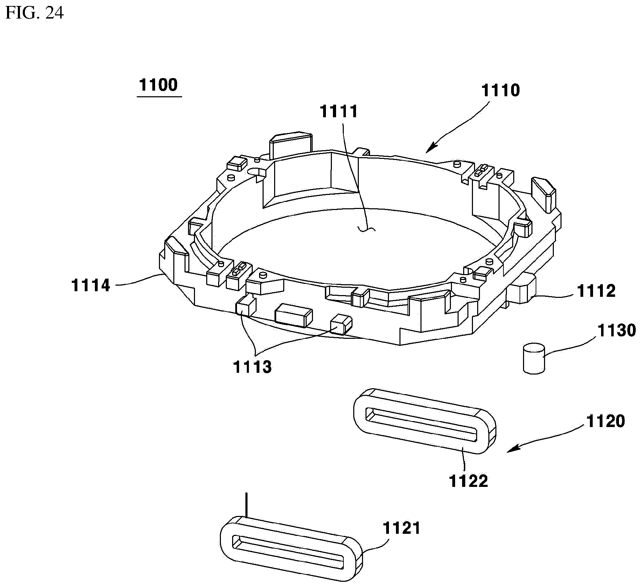

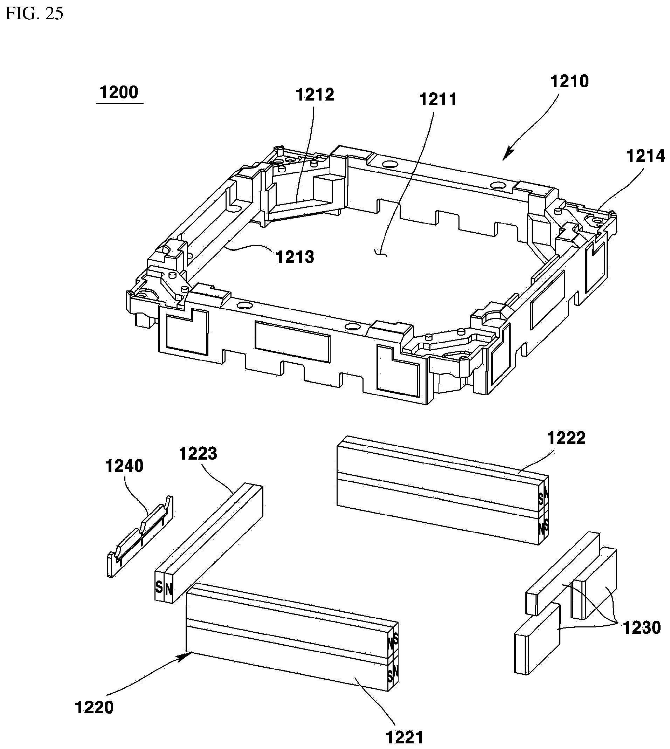

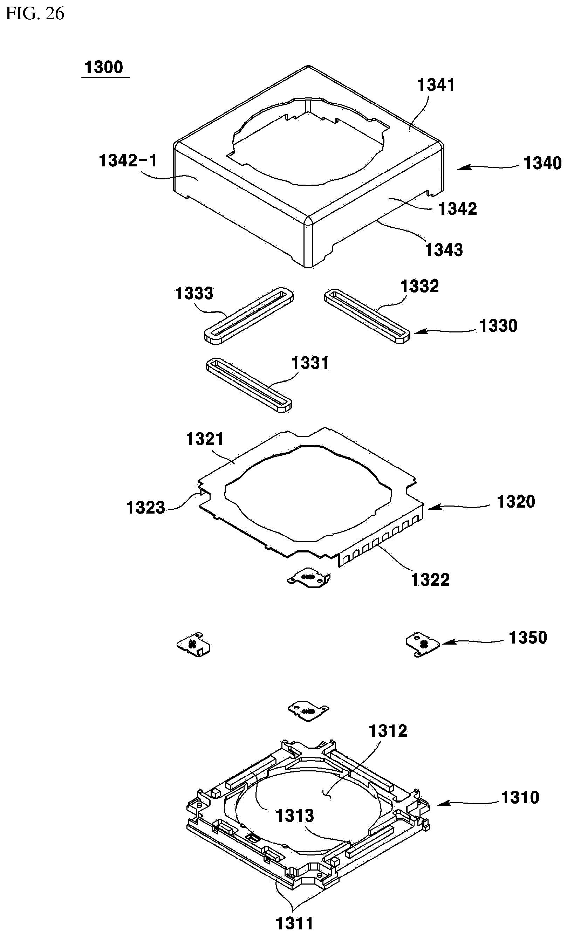

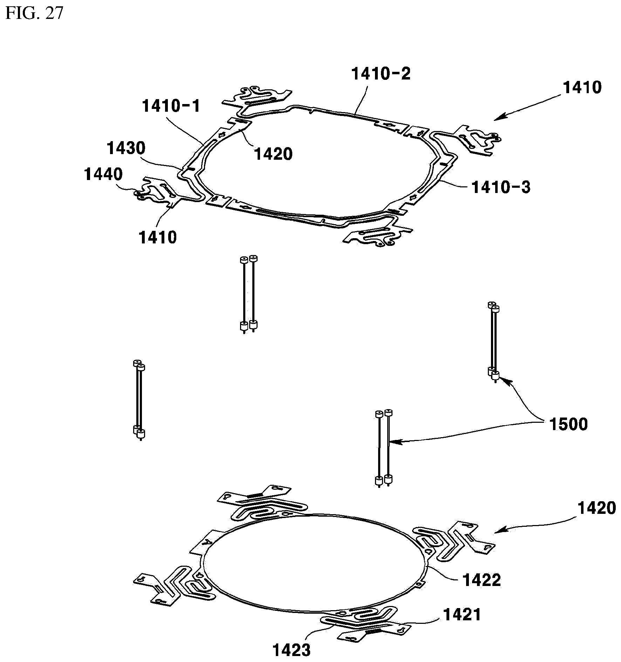

FIG. 18 is a perspective view of a part of a camera device according to a second embodiment of the present embodiment; FIG. 19 is a cross-sectional view viewed from A-A in FIG. 2; FIG. 20 is a cross-sectional view viewed from line B-B in FIG. 2; FIG. 21 is a cross-sectional view viewed from C-C in FIG. 2; FIG. 22 is a perspective view of a first lens driving device according to a second embodiment of present embodiment; FIG. 23 is an exploded perspective view of a first lens driving device according to a second embodiment of present embodiment; FIG. 24 is an exploded perspective view of a first mover of a first lens driving device according to a second embodiment of present embodiment; FIG. 25 is an exploded perspective view of a second mover of a first lens driving device according to a second embodiment of present embodiment; FIG. 26 is an exploded perspective view of a stator of a first lens driving device according to a second embodiment of present embodiment; and FIG. 27 is an exploded perspective view of an elastic member and a support member of a first lens driving device according to a second embodiment of the present embodiment.

The camera device **2** may comprise a first lens driving device **10.** The first lens driving device **10** may be a voice coil motor (VCM). The first lens driving device **10** may be a lens driving motor. The first lens driving device **10** may be a lens driving actuator. The first lens driving device **10** may comprise an AF module. The first lens driving device **10** may comprise an OIS module. The first lens driving device **10** may be disposed on the printed circuit board **30.** The first lens driving device **10** may be disposed on a first surface of the printed circuit board **30.** At this time, the first surface may be an upper surface.

The first lens driving device **10** may comprise a first mover **1100.** The first mover **1100** may be coupled to the first lens **41.** The first mover **1100** may be connected to the second mover **1200** through the first elastic member **1410** and/or the second elastic member **1420.** The first mover **1100** may move through interaction with the second mover **1200.** At this time, the first mover **1100** can move integrally with the first lens **41.** Meanwhile, the first mover **1100** may move during AF driving. At this time, the first mover **1100** may be referred to as an 'AF mover'. However, the first mover **1100** can move together with the second mover **1200** even during OIS driving.

The first lens driving device **10** may comprise a first bobbin **1110.** The first mover **1100** may comprise a first bobbin **1110.** The first bobbin **1110** may be disposed inside the first housing **1210.** The first bobbin **1110** may be disposed in the hole **1211** of the first housing **1210.** The first bobbin **1110** may be movably coupled to the first housing **1210.** The first bobbin **1110** may move in an optical axis direction against the first housing **1210.** The first lens **41** may be coupled to the first bobbin **1110.** The first bobbin **1110** and the first lens **41** may be coupled by screw-coupling and/or an adhesive. The first coil **1120** may be coupled to the first bobbin **1110.** A first elastic member **1410** may be coupled to an upper portion or an upper surface of the first bobbin **1110.** A second elastic member **1420** may be coupled to a lower portion or a lower surface of the first bobbin **1110.** The first bobbin **1110** may be coupled to the first elastic member **1410** and/or the second elastic member **1420** by thermal fusion and/or an adhesive. The adhesive coupling the first bobbin **1110** and the first lens **41** and the first bobbin **1110** and the elastic member **1400** may be an epoxy being cured by any one or more among ultraviolet (UV), heat and laser.

The first bobbin **1110** may comprise a hole **1111.** The hole **1111** may be hollow. The hole **1111** may penetrate through the first bobbin **1110** in an optical axis direction. The first lens **41** may be accommodated in the hole **1111.** For an example, a screw thread corresponding to a screw thread being formed on an outer circumferential surface of the first lens **41** may be disposed on an inner circumferential surface of the hole **1111** of the first bobbin **1110.**

The first bobbin **1110** may comprise a groove **1112.** The groove **1112** may be a sensing magnet accommodating groove. The groove **1112** may be a recess. A sensing magnet **1130** may be disposed in the groove **1112.** The groove **1112** of the first bobbin **1110** may be formed on an outer circumferential surface of the first bobbin **1110.** At least a portion of the groove **1112** of the first bobbin **1110** may be formed to correspond to the shape and size of the sensing magnet **1130.** The groove **1112** may open downward.

The first bobbin **1110** may comprise a protrusion **1113.** A first coil **1120** may be disposed at the protrusion **1113.** The protrusion **1113** may be formed on an outer circumferential surface of the first bobbin **1110.** The protrusion **1113** may be protruded from an outer circumferential surface of the first bobbin **1110.** The first coil **1120** may be wound and fixed to the protrusion **1113.**

The first bobbin **1110** may comprise a lower stopper **1114.** A downward stroke of the first bobbin **1110** may be restricted through the lower stopper **1114.** The lower stopper **1114** may be formed on an outer circumferential surface of the first bobbin **1110.** The lower stopper **1114** may be in contact with the first housing **1210** when the first bobbin **1110** moves downward.

The first lens driving device **10** may comprise a first coil **1120.** The first mover **1100** may comprise a first coil **1120.** The first coil **1120** may be an 'AF driving coil' used for AF driving. The first coil **1120** may be disposed in the first bobbin **1110.** The first coil **1120** may move the first bobbin **1110.** The first coil **1120** may be disposed between the first bobbin **1110** and the first housing **1210.** The first coil **1120** may be disposed on an outer lateral surface or an outer circumferential surface of the first bobbin **1110.** The first coil **1120** may be directly wound around the first bobbin **1110.** Or, the first coil **1120** may be coupled to the first bobbin **1110** in a directly wound state. The first coil **1120** may face the first magnet **1220.** The first coil **1120** may be disposed to face the first magnet **1220.** The first coil **1120** may interact with the first magnet **1220** electromagnetically. In this case, when a current is supplied to the first coil **1120** and an electromagnetic field is formed around the first coil **1120,** the first coil **1120** may move against the first magnet **1220** by the electromagnetic interaction between the first coil **1120** and the first magnet **1220.**

The first coil **1120** may comprise a plurality of coils. The first coil **1120** may comprise two coils. The first coil **1120** may comprise a first-first and first-second coils **1121** and **1122.** The first-first coil **1121** may be disposed at a position corresponding to the third lateral plate **1342-3** of the first cover **1340.** The first-first coil **1121** may be disposed to face the third lateral plate **1342-3** of the first cover **1340.** The first-second coil **1122** may be disposed at a position corresponding to the fourth lateral plate **1342-4** of the first cover **1340.** The first-second coil **1122** may be disposed to face the fourth lateral plate **1342-4** of the first cover **1340.**

In the second embodiment of the present embodiment, the first coil **1120** and the first magnet **1220** may move the first bobbin **1110** against first housing **1210** in an optical axis direction. The first coil **1120** and the first magnet **1220** may move the first bobbin **1110** in an optical axis direction through electromagnetic interaction. The first coil **1120** and the first magnet **1220** may be used for AF driving.

The first lens driving device **10** may comprise a coil. The coil may move the first bobbin **1110.** The coil may comprise a first coil **1120** that moves the first bobbin **1110** in an optical axis direction and a second coil **1330** that moves the first bobbin **1110** in a direction perpendicular to the optical axis direction.

The first lens driving device **10** may comprise a sensing magnet **1130.** The first mover **1100** may comprise a sensing magnet **1130.** The sensing magnet **1130** may be disposed in the first bobbin **1110.** The sensing magnet **1130** may be detected through the first sensor **1610.** In addition, the first lens driving device **10** may comprise a compensation magnet. The first mover **1100** may comprise a compensation magnet. The compensation magnet may be disposed to achieve magnetic force balance with the sensing magnet **1130.** The compensation magnet may have a weight corresponding to that of the sensing magnet **1130.** The compensation magnet may be disposed symmetrically with the sensing magnet **1130** with respect to an optical axis.

The first lens driving device **10** may comprise a second mover **1200.** The second mover **1200** may be movably coupled to the stator **1300** through the support member **1500.** The second mover **1200** may support the first mover **1100** through the first and second elastic members **1410** and **1420.** The second mover **1200** may move the first mover **1100** or may move together with the first mover **1100.** The second mover **1200** may move through interaction with the stator **1300.** The second mover **1200** may move during OIS driving. At this time, the second mover **1200** may be referred to as an 'OIS mover'. The second mover **1200** may move integrally with the first mover **1100** during OIS driving.

The first lens driving device **10** may comprise a first housing 1210. The second mover **1200** may comprise a first housing **1210.** The first housing **1210** may be spaced apart from the first base **1310.** The first housing **1210** may be disposed outside the first bobbin **1110.** The first housing **1210** may accommodate at least a portion of the first bobbin **1110.** The first housing **1210** may be disposed inside the first cover **1340.** The first housing **1210** may be disposed between the first cover **1340** and the first bobbin **1110.** The first housing **1210** may be formed of a material different from that of the first cover **1340.** The first housing **1210** may be formed of an insulating material. The first housing **1210** may be formed of an injection-molded material. An outer side surface of the first housing **1210** may be spaced apart from an inner surface of the lateral plate **1342** of the first cover **1340.** The first housing **1210** may move for OIS driving through the separation space between the first housing **1210** and the first cover **1340.** A first magnet **1220** may be disposed in the first housing **1210.** The first housing **1210** and the first magnet **1220** may be coupled by an adhesive. A first elastic member **1410** may be coupled to an upper portion or an upper surface of the first housing **1210.** A second elastic member **1420** may be coupled to a lower portion or lower surface of the first housing **1210.** The first housing **1210** may be coupled to an upper portion and the second elastic members **1410** and **1420** by thermal fusion and/or an adhesive. The adhesive that couples the first housing **1210** and the first magnet **1220** and the first housing **1210** and the elastic member **1400** may be an epoxy cured by any one or more among ultraviolet (UV), heat and laser.

The first housing **1210** may comprise four side portions and four corner portions being disposed between the four side portions. The side portion of the first housing **1210** may comprise: a first side portion; a second side portion being disposed at an opposite side of the first side portion; a third side portion and a fourth side portion being disposed at an opposite side to each other between the first side portion and the second side portion. The corner portion of the first housing **1210** may comprise: a first corner portion being disposed between a first side portion and a third side portion; a second corner portion being disposed between a first side portion and a fourth side portion; a third corner portion being disposed between a second side portion and a third side portion; and a fourth corner portion being disposed between a second side portion and a fourth side portion. The side portion of the first housing **1210** may comprise a 'lateral wall'. The first side portion of the first housing **1210** may be disposed at a position corresponding to the first lateral plate **1342-1** of the first cover **1340.** The second side portion of the first housing **1210** may be disposed at a position corresponding to the second lateral plate **1342-2** of the first cover **1340.** The third side portion of the first housing **1210** may be disposed at a position corresponding to the third lateral plate **1342-3** of the first cover **1340.** The fourth side portion of the first housing **1210** may be disposed at a position corresponding to the fourth lateral plate **1342-4** of the first cover **1340.**

The first housing **1210** may comprise a hole **1211.** The hole **1211** may be hollow. The hole **1211** may be formed in the first housing **1210.** The hole **1211** may be formed to penetrates through the first housing **1210** in an optical axis direction. A first bobbin **1110** may be disposed in the hole **1211.** At least a portion of the hole **1211** may be formed in a shape corresponding to that of the first bobbin **1110.** An inner circumferential surface or an inner lateral surface of the first housing **1210** forming the hole **1211** may be spaced apart from an outer circumferential surface of the first bobbin **1110.** However, at least a portion of the first housing **1210** and the first bobbin **1110** be overlapped in an optical axis direction, so that the moving stroke distance of the first bobbin **1110** in an optical axis direction may be restricted.

The first housing **1210** may comprise a groove **1212.** The groove **1212** may accommodate at least a portion of the lower stopper **1114** of the first bobbin **1110.** The bottom surface of the groove **1212** may be overlapped with the lower stopper **1114** of the first bobbin **1110** in an optical axis direction. When the first bobbin **1110** moves downward, the lower stopper **1114** of the first bobbin **1110** may come into contact with the bottom surface of the groove **1212** of the first housing **1210.**

The first housing **1210** may comprise a hole **1213.** The hole **1213** may be a magnet accommodating groove. A first magnet **1220** may be coupled to the groove **1213.** The groove **1213** may be formed as a portion of an inner circumferential surface and/or a lower surface of the first housing **1210** is being recessed. The groove **1213** may be formed in each of the three side portions of the first housing **1210.** The groove **1213** may be formed in a second, third, and fourth side portions of the first housing 1210. The groove **1213** may be formed in a shape corresponding to the first side portion of the first housing **1210,** but a dummy member **1230** other than the first magnet **1220** may be disposed in the groove **1213** being formed in a first side portion of the first housing **1210.**

The first housing **1210** may comprise a hole **1214.** The hole **1214** may be a support member through hole. The hole **1214** may be formed in a corner portion of the first housing **1210.** The hole **1214** may be formed to penetrate through the first housing **1210** in an optical axis direction. A support member **1500** may be disposed in the hole **1214** of the first housing **1210.** The support member **1500** may pass through the hole **1214** of the first housing **1210.**

The first lens driving device **10** may comprise a first magnet **1220.** The second mover **1200** may comprise a first magnet **1220.** The first magnet **1220** may be disposed in the first housing **1210.** The first magnet **1220** may be disposed inside the first cover **1340.** The first magnet **1220** may be fixed to the first housing **1210** by an adhesive. The first magnet **1220** may be disposed between the first bobbin **1110** and the first housing **1210.** The first magnet **1220** may face the first coil **1120.** The first magnet **1220** may interact with the first coil **1120** electromagnetically. The first magnet **1220** may move the first bobbin **1110** in an optical axis direction through interaction with the first coil **1120.** The first magnet **1220** may be used for AF driving. The first magnet **1220** may face the second coil **1330.** The first magnet **1220** may interact with the second coil **1330** electromagnetically. The first magnet **1220** may move the first bobbin **1110** and the first housing **1210** in a direction perpendicular to the optical axis direction through interaction with the second coil **1330.** The first magnet **1220** may be used for OIS driving. The first magnet **1220** may be disposed in a plurality of side portions of the first housing **1210.** The first magnet **1220** may be a flat magnet having a flat plate shape.

The first magnet **1220** may not be disposed between the first bobbin **1110** and the first lateral plate **1342-1** of the first cover **1340.** Through this, magnetic field interference of the first magnet **1220** affecting the second lens driving device **20** can be minimized.

The first magnet **1220** may comprise a plurality of magnets. The first magnet **1220** may comprise three magnets. The first magnet **1220** may comprise first-first to first-third magnets **1221, 1222,** and **1223.** The first-first magnet **1221** may be disposed in a third side portion of the first housing **1210.** The first-second magnet **1221** may be disposed in a fourth side portion of the first housing **1210.** The first to third magnets **1221** may be disposed in a second side portion of the first housing **1210.** A dummy member **1230** may be disposed in a first side portion of the first housing **1210.**

The first-first magnet **1221** may face the first-first coil **1121.** The first-second magnet **1222** may face the first-second coil **1122.** The first-first and first-second magnets **1221** and **1222** may be used during AF driving. The first magnet **1220** comprises a first-first magnet **1221** being disposed at a position corresponding to the third lateral plate **1342-3** of the first cover **1340** and the fourth lateral plate **1342-4.** The first-second magnet **1222** being disposed at a corresponding position and first to third magnets **1223** being disposed at a position corresponding to the second lateral plate **1342-2** may be comprised.

The first-first magnet **1221** may face the second-first coil **1331.** The first-second magnet **1222** may face the second-second coil **1332.** The first-first and first-second magnets **1221** and **1222** may be used when driving in an OIS-x-axis direction. The first-third magnet **1223** may face the second-third coil **1333.** The first-third magnet **1223** may be used when driving in an OIS-y-axis direction. The area of the lower surface of the first-third magnet **1223** may be larger than the area of the lower surface of each of the first-first magnet **1221** and the first-second magnet **1222.**

The first-first magnet **1221** and the first-second magnet **1222** may be 4-pole magnetized magnets. The first-first magnet **1221** and the first-second magnet **1222** may be 4-pole magnets. The 4-pole magnetized magnet may comprise a neutral portion being disposed horizontally in the central portion. Here, the neutral portion may be a void. The first-first magnet **1221** and the first-second magnet **1222** may be 2-pole magnetized. As the first-first magnet **1221** and the first-second magnet **1222** are 2-pole magnetized, the AF electromagnetic force can be maximized. Each of the first-first magnet **1221** and the first-second magnet **1222** may be a 4-pole magnet in which the polarity of the upper portion of the inner surface is different from that of the lower portion of the inner surface and the upper portion of the outer surface, and the polarity of the lower portion of the outer surface is the same.

The first-third magnet **1223** may be a 2-pole magnetized magnet. The first-third magnet **1223** may be a 2-pole magnet. The first-third magnet **1223** may be a 2-pole magnet in which the polarities of the inner surface and the outer surface are different. For example, the inner surface of the first-third magnet **1223** may be an N pole and the outer surface of the first-third magnet **1223** may be an S pole. Conversely, the inner surface of the first-third magnet **1223** may be an S pole and the outer surface of the first-third magnet **1223** may be an N pole. However, as a modified embodiment, the first-third magnet **1223** may be a 4-pole magnet. The first-third magnet **1223** may be formed larger than each of the first-first magnet **1221** and the first-second magnet **1222.**

The first lens driving device **10** may comprise a dummy member **1230.** The second mover **1200** may comprise a dummy member **1230.** The dummy member **1230** may be disposed in the first housing **1210.** The dummy member **1230** may be disposed in the first side portion of the first housing **1210.** The dummy member **1230** may be disposed adjacent to the second lens driving device **20.** Through this, magnetic force interference between the first lens driving device **10** and the second lens driving device **20** can be minimized. The dummy member **1230** may be disposed at a position corresponding to the first lateral plate **1342-1** of the first cover **1340.**

The dummy member **1230** may have a weight corresponding to that of the first-third magnet **1223.** The dummy member **1230** may have weaker magnetic force than the first-third magnet **1223** or may not have magnetic force. The dummy member **1230** may be disposed at an opposite side of the first-third magnet **1223** in the first housing **1210.** The weight of the dummy member **1230** may correspond to the weight of the first-third magnet **1223.** However, the dummy member **1230** may have a weight lighter than that of the first-third magnet **1223.** Or, the dummy member **1230** may have a weight heavier than that of the first-third magnet **1223.** The dummy member **1230** may be within 80% of the weight of the first-third magnet **1223** to 120% of the weight of the first-third magnet **1223.** If the weight of the dummy member **1230** is less than the lower limit or exceeds the upper limit of the above-mentioned value, the weight balancing of the OIS driving unit may collapse.

The dummy member **1230** may be a non-magnetic material. The dummy member **1230** may comprise a non-magnetic material. The magnetic strength of the dummy member **1230** may be weaker than that of the first-third magnet **1223.** The dummy member **1230** may be disposed at an opposite side of the first-third magnet **1223** to align the center of gravity. The dummy member **1230** may be made of 95% or more of tungsten. That is, the dummy member **1230** may be a tungsten alloy. For example, the specific gravity of the dummy member **1230** may be 18000 or more. The dummy member **1230** may be disposed at a position symmetrical to the first-third magnet **1223** with respect to the central axis of the first housing **1210.** At this time, the central axis of the first housing **1210** may correspond to an optical axis. The dummy member **1230** may have a thickness corresponding to that of the first-third magnet **1223** in a direction perpendicular to the optical axis.

The first lens driving device **10** may comprise a yoke **1240.** The second mover **1200** may comprise a yoke **1240.** The yoke **1240** may be disposed in the first housing **1210.** The yoke **1240** may be disposed in a first side portion of the first housing **1210.** The yoke **1240** may be disposed adjacent to the second lens driving device **20.** Through this, magnetic force interference between the first lens driving device **10** and the second lens driving device **20** can be minimized.

The first lens driving device **10** may comprise a stator **1300.** The stator **1300** may be disposed below the first and second movers **1100** and **1200.** The stator **1300** may movably support the second mover **1200.** The stator **1300** may move the second mover **1200.** At this time, the first mover **1100** can also move together with the second mover **1200.**

The first lens driving device **10** may comprise a first base **1310.** The stator **1300** may comprise a first base **1310.** The first base **1310** may be disposed below the first housing **1210.** The first base **1310** may be disposed below the first substrate **1320.** The first substrate **1320** may be disposed on an upper surface of the first base **1310.** The first base **1310** may be coupled to the first cover **1340.** The first base **1310** may be disposed on the printed circuit board **30.**

The first base **1310** may comprise a step **1311.** The step **1311** may be formed on a side surface of the first base **1310.** The step **1311** may be formed around an outer circumferential surface of the first base **1310.** The step **1311** may be formed as a portion of the side surface of the first base **1310** is being protruded or recessed. A lower end of the lateral plate **1342** of the first cover **1340** may be disposed at the step **1311.**

The first base **1310** may comprise a hole **1312.** The hole **1312** may be hollow. The hole **1312** may penetrate through the first base **1310** in an optical axis direction. A light passing through the first lens **41** through the hole **1312** may be incident to an image sensor.

The first base **1310** may comprise a protrusion **1313.** The protrusion **1313** may be formed on an upper surface of the first base **1310.** The protrusion **1313** may be protruded from an upper surface of the first base **1310.** A second coil **1330** may be disposed in the protrusion **1313.** The second coil **1330** may be wound around the protrusion **1313** and disposed.

The first lens driving device **10** may comprise a first substrate **1320.** The stator **1300** may comprise a first substrate **1320.** The first substrate **1320** may be disposed in the first base **1310.** The first substrate **1320** may be disposed at one side of the first housing **1210.** The first substrate **1320** may be disposed between the first base **1310** and the first housing **1210.** The first substrate **1320** may be disposed on an upper surface of the first base **1310.** The support member **1500** may be coupled to the first substrate **1320.** The first substrate **1320** may be electrically connected to the support member **1500.** One end of the support member **1500** may be fixed to the first substrate **1320.** The first substrate **1320** may be coupled to the printed circuit board **30** being disposed below the first base **1310** by soldering. The first substrate **1320** may comprise a flexible printed circuit board (FPCB). The first substrate **1320** may be partially bent.

The first substrate **1320** may comprise a body part **1321.** A hole may be formed in the body part **1321.** The hole may be hollow penetrating the first substrate **1320** in an optical axis direction. The first substrate **1320** may comprise a hole. A support member **1500** may be disposed in the hole of the first substrate **1320.** The support member **1500** may be disposed to pass through the hole of the first substrate **1320.**

The first substrate **1320** may comprise a terminal unit. The terminal unit may be extended from an edge of the body part **1321.** The terminal unit may comprise a terminal electrically connected to the printed circuit board **30.** The terminal unit may comprise a terminal being coupled to the printed circuit board **30.** The terminal unit may comprise a plurality of terminal units.

The first substrate **1320** may comprise a first terminal unit **1322.** The first terminal unit **1322** may be extended downward from the body part **1321** of the first substrate **1320.** The first terminal unit **1322** may be formed by bending a part of the first substrate **1320.** At least a portion of the first terminal unit **1322** may be exposed to the outside. The first terminal unit **1322** may be coupled to the printed circuit board **30** being disposed below the first base **1310** by soldering. The first terminal unit **1322** may be disposed in a groove of the first base **1310.** The first terminal unit **1322** may comprise a plurality of terminals.

The first substrate **1320** may comprise a first terminal unit **1322** and a plurality of terminals being disposed on the first terminal unit **1322** and electrically connected to the printed circuit board **30.** The first terminal unit **1322** of the first substrate **1320** may be disposed at a position corresponding to the first lateral plate **1342-1** of the first cover **1340.** The first terminal unit **1322** of the first substrate **1320** may be disposed closest to the first lateral plate **1342-1** among the first to fourth lateral plates **1342-1, 1342-2, 1342-3,** and **1342-4** of the first cover **1340.**

The first substrate **1320** may comprise a second terminal unit **1323.** The second terminal unit **1323** may be disposed at an opposite side of the first terminal unit **1322.** The second terminal unit **1323** of the first substrate **1320** may be disposed at a position corresponding to the second lateral plate **1342-2** of the first cover **1340.**

The first lens driving device **10** may comprise a second coil **1330.** The stator **1300** may comprise a second coil **1330.** The second coil **1330** may be an 'OIS coil'. The second coil **1330** may move the first bobbin **1110.** The second coil **1330** may be disposed in the first base **1310.** The second coil **1330** may be disposed in the first substrate **1320.** The second coil **1330** may face the first magnet **1220.** The second coil **1330** may interact with the first magnet **1220** electromagnetically. In this case, when a current is supplied to the second coil **1330** and a magnetic field is formed around the second coil **1330,** the first magnet **1220** may move against the second coil **1330** by the electromagnetic interaction between the second coil **1330** and the first magnet **1220.** The second coil **1330** may move the first housing **1210** and the first bobbin **1110** against the first base **1310** in a direction perpendicular to the optical axis through electromagnetic interaction with the first magnet **1220.** The first substrate **1320** may comprise a second coil **1330.** That is, the second coil **1330** may be one configuration of the first substrate **1320.** The second coil **1330** may be formed as a fine pattern coil (FP coil) in a substrate separate from the first substrate **1320.**

The second coil **1330** may comprise a plurality of coils. The second coil 1330 may comprise a number of coils corresponding to those of the first magnet **1220.** The second coil **1330** may comprise three coils. The second coil **1330** may comprise a second-first coil **1331,** a second-second coil **1332,** and a second-third coil **1333.** The second-first coil **1331** may face the first-first magnet **1221.** The second-second coil **1332** may face the first-second magnet **1222.** The second-third coil **1333** may face the first-third magnet **1223.**

The number of windings of the second-first coil **1331** may be greater than the number of windings of the second-second coil **1332** and the second-third coil **1333.** The number of windings of the second-second coil **1332** may correspond to the number of windings of the second-third coil **1333.** In a second embodiment of the present embodiment, during OIS driving, the movement in an X-axis direction is performed through the second-first coil **1331** and second-second coil **1332,** and the movement in a Y-axis direction may be performed through the second-third coil **1333.** Therefore, in a second embodiment of the present embodiment, the number of turns of the second-third coil **1333** may be higher than the number of turns of the second-first coil **1331** and the second-second coil **1332** to compensate for insufficient driving force in a Y-axis direction. For example, a ratio between the number of turns of the second-third coil **1333** and the number of turns of the second-first and second-second coils **1331** and **1332** may be 1.5:2.0 to 1:1. Ideally, the ratio of the number of turns of the second-third coil **1333** to the number of turns of the second-first and second-second coils **1331** and **1332** is 1:1, but it can be disposed up to 1.5:2.0 due to space constraints.

The first lens driving device **10** may comprise a first cover **1340.** The stator **1300** may comprise a first cover **1340.** The first cover **1340** may comprise a 'cover can'. The first cover **1340** may comprise a yoke. The first cover **1340** may be disposed outside the first housing **1210.** The first cover **1340** may be coupled to the first base **1310.** The first cover **1340** may accommodate the first housing **1210** therein. The first cover **1340** may form the outer appearance of the first lens driving device **10.** The first cover **1340** may have a hexahedral shape with an open lower surface. The first cover **1340** may be made of a non-magnetic material. The first cover **1340** may be formed of a metal material. The first cover **1340** may be formed of a metal plate. The first cover **1340** may be connected to the ground portion of the printed circuit board **30.** Through this, the first cover **1340** may be grounded. The first cover **1340** may block electromagnetic interference (EMI). At this time, the first cover **1340** may be referred to as an 'EMI shield can'.

The first cover **1340** may comprise an upper plate **1341** and a lateral plate **1342.** The first cover **1340** may comprise an upper plate **1341** comprising a hole and a lateral plate **1342** being extended downward from an outer circumference or edge of the upper plate **1341.** The lower end of the lateral plate **1342** of the first cover **1340** may be disposed in the step **1311** of the first base **1310.** An inner surface of the lateral plate **1342** of the first cover **1340** may be fixed to the first base **1310** by an adhesive.

The lateral plate **1342** of the first cover **1340** may comprise a plurality of lateral plates. The lateral plate **1342** may comprise four lateral plates. The lateral plate **1342** of the first cover **1340** may comprise: a first lateral plate **1342-1** and a second lateral plate **1342-2** being disposed at an opposite side to each other; and a third lateral plate **1342-3** and a fourth lateral plate **1342-4** being disposed at an opposite side to each other. The gyro sensor **50** may be disposed closest to the fourth lateral plate **1342-4** among the first to fourth lateral plates **1342-1, 1342-2, 1342-3,** and **1342-4.** The first terminal unit **1322** of the first substrate **1320** may be disposed at a position corresponding to the first lateral plate **1342-1** of the first cover **1340.** The second terminal unit **1323** of the first substrate **1320** may be disposed at a position corresponding to the second lateral plate **1342-2** of the first cover **1340.**

The first cover **1340** may comprise a groove **1343.** The groove **1343** may be formed in the lateral plate **1342** of the first cover **1340.** The groove **1343** may be formed at a lower end of the lateral plate **1342.** The groove **1343** may be formed at a position corresponding to at least one of the first terminal unit **1322** and the second terminal unit **1323.** The groove **1343** may be formed to expose at least one of the first terminal unit **1322** and the second terminal unit **1323** to the outside.

The first lens driving device **10** may comprise a terminal **1350.** The stator **1300** may comprise a terminal **1350.** The terminal **1350** may be disposed in the first base **1310.** The terminal **1350** may be electrically connected to the first substrate **1320.** The terminal **1350** may be coupled to the support member **1500.** The terminal **1350** may electrically connect the support member **1500** and the first substrate **1320.**

The first lens driving device **10** may comprise an elastic member **1400.** The elastic member **1400** may be an 'AF support member'. At least portion of the elastic member **1400** may have elasticity. The elastic member **1400** may be formed of metal. The elastic member **1400** may be formed of a conductive material. The elastic member **1400** may connect the first bobbin **1110** and the first housing **1210.** The elastic member **1400** may elastically connect the first bobbin **1110** and the first housing **1210.** The elastic member **1400** may be coupled to the first bobbin **1110** and the first housing **1210.** The elastic member **1400** may elastically support the first bobbin **1110.** The elastic member **1400** may movably support the first bobbin **1110.** The elastic member **1400** may support the movement of the first bobbin **1110** during AF driving.

The elastic member **1400** may comprise a first elastic member **1410.** The first elastic member **1410** may be an 'upper elastic member'. The first elastic member **1410** may connect the first housing **1210** and the first bobbin **1110.** The first elastic member **1410** may be coupled to an upper portion of the first bobbin **1110** and an upper portion of the first housing **1210.** The first elastic member **1410** may be coupled to an upper surface of the first bobbin **1110.** The first elastic member **1410** may be coupled to an upper surface of the first housing **1210.** The first elastic member **1410** may be coupled to the support member **1500.** The first elastic member **1410** may be formed of a leaf spring. The first elastic member **1410** can be separated and used as a power line for electrical or communication signal.

The first elastic member **1410** may comprise a plurality of elastic units. The first elastic member **1410** may comprise three elastic units. The first elastic member **1410** may comprise first to third elastic units **1410-1, 1410-2,** and **1410-3.** The first elastic unit **1410-1** may connect the support member **1500** and one end of the first-first coil **1121.** The second elastic unit **1410-2** may connect the other end of the first-first coil **1121** and one end of the first-second coil **1122.** The third elastic unit **1410-3** may connect the other end of the first-second coil **1122** and the support member **1500.** The first elastic member **1410** may be electrically connected to the first coil **1120.** The first elastic member **1410** may electrically connect the first coil **1120** and the support member **1500.**

The first elastic member **1410** may comprise an outer side portion **1411.** The outer side portion **1411** may be coupled to the first housing **1210.** The outer side portion **1411** may be coupled to an upper surface of the first housing **1210.** The outer side portion **1411** may comprise a hole or groove being coupled to the protrusion of the first housing **1210.** The outer side portion **1411** may be fixed to the first housing **1210** by an adhesive.

The first elastic member **1410** may comprise an inner side portion **1412.** The inner side portion **1412** may be coupled to the first bobbin **1110.** The inner side portion **1412** may be coupled to an upper surface of the first bobbin **1110.** The inner side portion **1412** may comprise a hole or groove being coupled to the protrusion of the first bobbin **1110.** The inner side portion **1412** may be fixed to the first bobbin **1110** by an adhesive.

The first elastic member **1410** may comprise a connecting portion **1413.** The connecting portion **1413** may connect the inner side portion **1412** and the outer side portion **1411.** The connecting portion **1413** may have elasticity. At this time, the connecting portion **1413** may be referred to as an 'elastic portion'. The connecting portion **1413** may comprise a shape bent two or more times.

The first elastic member **1410** may comprise a connecting portion **1414.** The connecting portion **1414** may be extended from the outer side portion **1411.** The connecting portion **1414** may be coupled to the support member **1500.** The connecting portion **1414** and the support member **1500** may be coupled by soldering.

The elastic member **1400** may comprise a second elastic member 1420. The second elastic member **1420** may be a 'lower elastic member'. The second elastic member **1420** may be disposed below the first elastic member **1410.** The second elastic member **1420** may be disposed at one side of the first elastic member **1410.** The second elastic member **1420** may connect the first housing **1210** and the first bobbin **1110.** The second elastic member **1420** may be disposed below the first bobbin **1110.** The second elastic member **1420** may be coupled to the first bobbin **1110** and the first housing **1210.** The second elastic member **1420** may be coupled to a lower surface of the first bobbin **1110.** The second elastic member **1420** may be coupled to a lower surface of the first housing **1210.** The second elastic member **1420** may be formed of a leaf spring. The second elastic member **1420** may be integrally formed.

The second elastic member **1420** may comprise an outer side portion **1421.** The outer side portion **1421** may be coupled to the first housing **1210.** The outer side portion **1421** may be coupled to a lower surface of the first housing **1210.** The outer side portion **1421** may comprise a hole or groove being coupled to the protrusion of the first housing **1210.** The outer side portion **1421** may be fixed to the first housing **1210** by an adhesive.

The second elastic member **1420** may comprise an inner side portion **1422.** The inner side portion **1422** may be coupled to the first bobbin **1110.** The inner side portion **1422** may be coupled to a lower surface of the first bobbin **1110.** The inner side portion **1422** may comprise a hole or groove being coupled to a protrusion of the first bobbin **1110.** The inner side portion **1422** may be fixed to the first bobbin **1110** by an adhesive.

The second elastic member **1420** may comprise a connecting portion **1423.** The connecting portion **1423** may connect the inner side portion **1422** and the outer side portion **1421.** The connecting portion **1423** may have elasticity. At this time, the connecting portion **1423** may be referred to as an 'elastic portion'. The connecting portion **1423** may comprise a shape bent two or more times.

The first lens driving device **10** may comprise a support member **1500.** The support member **1500** may be an 'OIS support member'. The support member **1500** may connect the first elastic member **1410** and the first substrate **1320** or the first elastic member **1410** and the terminal **1350.** The support member **1500** may be coupled to an upper surface of the first elastic member **1410** and the terminal **1350.** The support member **1500** may movably support the first housing **1210.** The support member **1500** may elastically support the first housing **1210.** At least a portion of the support member **1500** may have elasticity. The support member **1500** may elastically support the movement of the first housing **1210** and the first bobbin **1110** during OIS driving. One end of the support member **1500** may be coupled to the first elastic member **1410** by soldering. The other end of the support member **1500** may be coupled to the terminal **1350** by soldering.

The support member **1500** may comprise a plurality of wires. The support member **1500** may comprise four wires. The plurality of wires may comprise four wires connecting the three first elastic units **410-1, 410-2,** and **410-3** and the first substrate **1320.** As a modified embodiment, the support member **1500** may be formed as a leaf spring.

The first lens driving device **10** may comprise a first sensor **1610.** The first sensor **1610** may be disposed in the first base **1310.** The first sensor **1610** may detect the sensing magnet **1130.** The first sensor **1610** may be disposed in the first substrate **1320.** The first sensor **1610** may be coupled to a lower surface of the first substrate **1320.** The first sensor **1610** may be spaced apart from the first housing **1210.** The first sensor **1610** may be spaced apart from the first bobbin **1110.** The first sensor **1610** may be overlapped with the sensing magnet **1130** in an optical axis direction. The first sensor **1610** may detect the position of the sensing magnet **1130** for AF feedback control. The first sensor **1610** may be a Hall IC, a Hall element, or a Hall sensor. The first sensor **1610** may detect the magnetic force of the sensing magnet **1130.**

The first lens driving device **10** may comprise a second sensor **1620.** The second sensor **1620** may be disposed between the first base **1310** and the first substrate **1320.** The second sensor **1620** may detect the movement of the second mover **1300.** The second sensor **1620** may detect the movement of the first housing **1210** and the first magnet **1220** by detecting the magnetic force of the first magnet **1220.** The detected value detected by the second sensor 1620 may be used for OIS feedback control. The second sensor **1620** may comprise a plurality of Hall sensors. The second sensor **1620** may comprise two Hall sensors. The second sensor **1620** may comprise a first Hall sensor for detecting the movement in an x-axis direction in the horizontal direction and a second Hall sensor for detecting the movement in a y-axis direction in the horizontal direction.

The first lens driving device **10** may comprise a damper. The damper may be disposed in the support member **1500.** The damper may be disposed in the support member **1500** and the first housing **1210.** The damper may be disposed in the elastic member. The damper may be disposed in the elastic member **1400** and/or the support member **1500** to prevent a resonance phenomenon generated in the elastic member **1400** and/or the support member **1500.**

Hereinafter, a configuration of a second lens driving device according to a second embodiment of present embodiment will be described with reference to drawings.

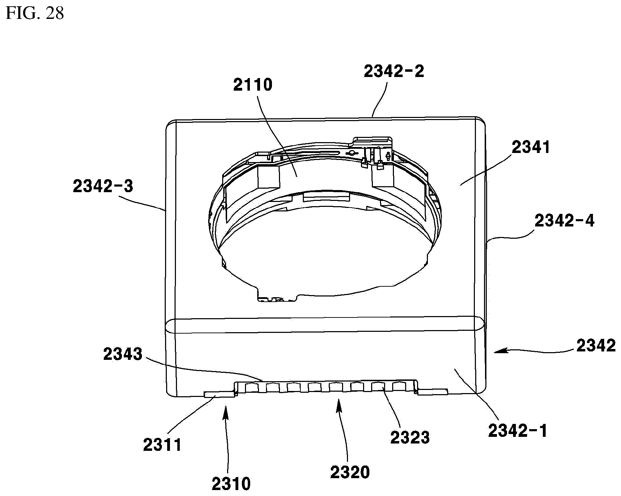

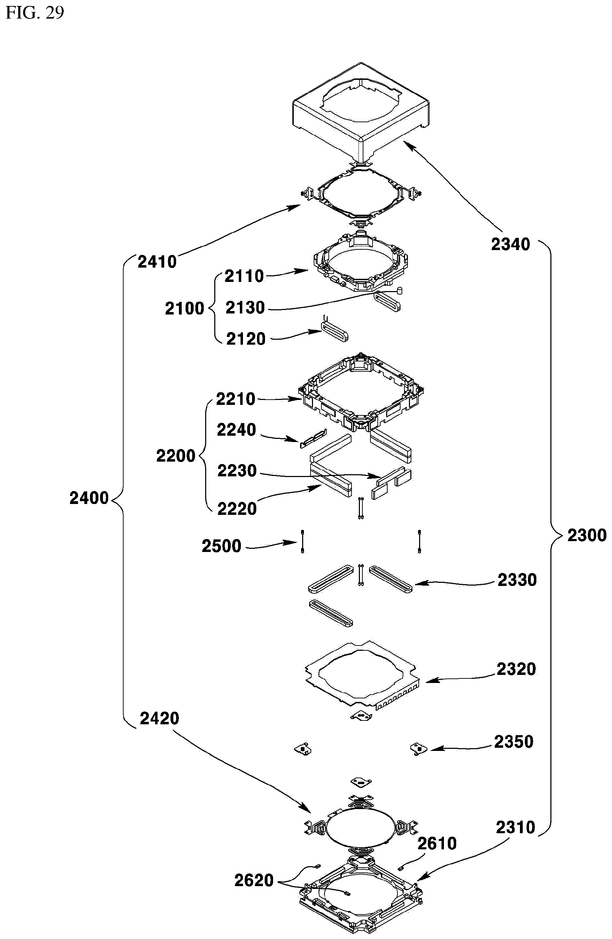

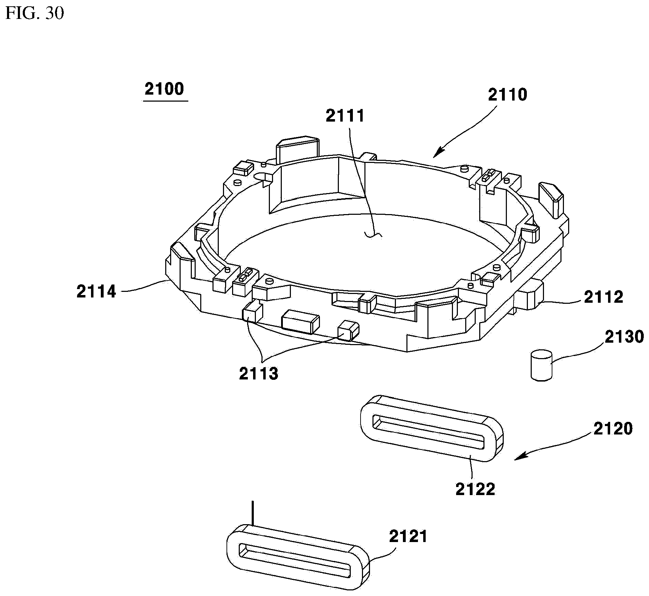

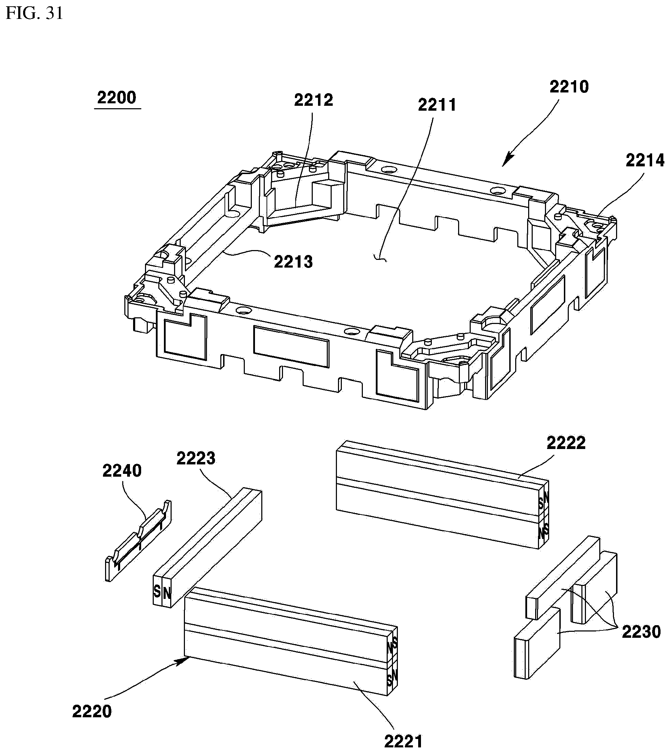

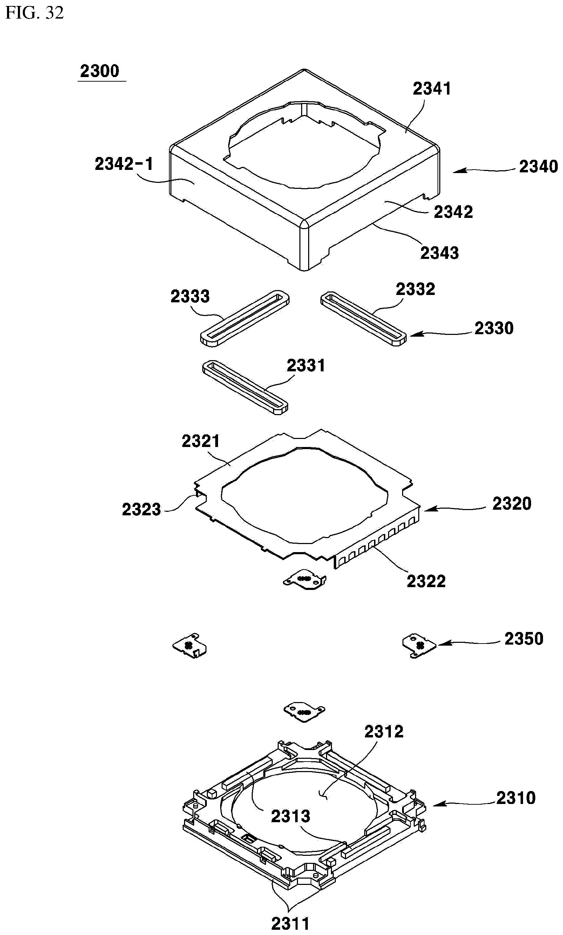

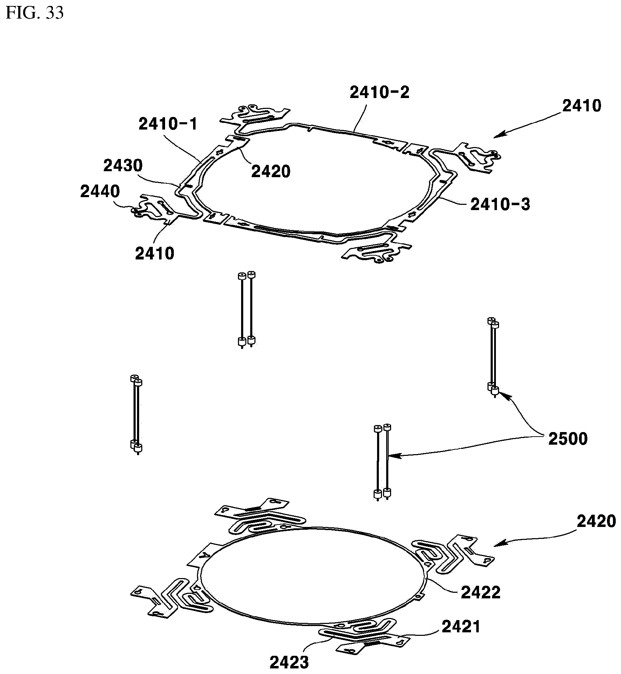

FIG. 28 is a perspective view of a second lens driving device according to a second embodiment of present embodiment; FIG. 29 is an exploded perspective view of a second lens driving device according to a second embodiment of present embodiment; FIG. 30 is an exploded perspective view of a first mover of a second lens driving device according to a second embodiment of present embodiment; FIG. 31 is an exploded perspective view of a second mover of a second lens driving device according to a second embodiment of present embodiment; FIG. 32 is an exploded perspective view of a stator of a second lens driving device according to a second embodiment of present embodiment; and FIG. 33 is an exploded perspective view of an elastic member and a support member of a second lens driving device according to a second embodiment of the present embodiment.

The camera device 2 may comprise a second lens driving device 20. The second lens driving device 20 may be a voice coil motor (VCM). The second lens driving device 20 may be a lens driving motor. The second lens driving device 20 may be a lens driving actuator. The second lens driving device 20 may comprise an AF module. The second lens driving device **20** may comprise an OIS module. The second lens driving device **20** may be disposed on a printed circuit board **30.** The second lens driving device **20** may be disposed on a first surface of printed circuit board **30.** At this time, the first surface may be an upper surface.

The second lens driving device **20** may comprise a first mover **2100.** The first mover **2100** may be coupled to the second lens **42.** The first mover **2100** may be connected to the second mover **2200** through the first elastic member **2410** and/or the second elastic member **2420.** The first mover **2100** may move through interaction with the second mover **2200.** At this time, the first mover **2100** can move integrally with the second lens **42.** Meanwhile, the first mover **2100** may move during AF driving. At this time, the first mover **2100** may be referred to as an 'AF mover'. However, the first mover **2100** may move together with the second mover even during OIS driving.

The second lens driving device **20** may comprise a second bobbin **2110.** The first mover **2100** may comprise a second bobbin **2110.** A second bobbin **2110** may be disposed inside the second housing **2210.** The second bobbin **2110** may be disposed in a hole **2211** in the second housing **2210.** The second bobbin **2110** may be movably coupled to the second housing **2210.** The second bobbin **2110** is movable against the second housing **2210** in an optical axis direction. A second lens **42** may be coupled to the second bobbin **2110.** The second bobbin **2110** and the second lens **42** may be coupled by screw-coupling and/or an adhesive. A third coil **2120** may be coupled to the second bobbin **2110.** A first elastic member **2410** may be coupled to an upper portion or upper surface of the second bobbin **2110.** A second elastic member **2420** may be coupled to a lower portion or lower surface of the second bobbin **2110.** The second bobbin **2110** may be coupled to the first elastic member **2410** and/or the second elastic member **2420** by thermal fusion and/or an adhesive. The adhesive for coupling the second bobbin **2110** and the second lens **42** and the second bobbin **2110** and the elastic member **2400** may be an epoxy cured by at least one among ultraviolet (UV) light, heat, and laser.

The second bobbin **2110** may comprise a hole **2111.** The hole **2111** may be hollow. The hole **2111** may penetrate through the second bobbin **2110** in an optical axis direction. The second lens **42** may be accommodated in the hole **2111.** For example, a screw thread corresponding to a screw thread being formed on an outer circumferential surface of the second lens **42** may be disposed on an inner circumferential surface of the hole **2111** of the second bobbin **2110.**

The second bobbin **2110** may comprise a groove **2112.** The groove **2112** may be a sensing magnet accommodating groove. The groove **2112** may be a recess. A sensing magnet **2130** may be disposed in the groove **2112.** The groove **2112** of the second bobbin **2110** may be formed on an outer circumferential surface of the second bobbin **2110.** At least a portion of the groove **2112** of the second bobbin **2110** may be formed to correspond to the shape and size of the sensing magnet **2130.** The groove **2112** may be open downward.

The second bobbin **2110** may comprise a protrusion **2113.** A third coil **2120** may be disposed in the protrusion **2113.** The protrusion **2113** may be formed on an outer circumferential surface of the second bobbin **2110.** The protrusion **2113** may be protruded from the outer circumferential surface of the second bobbin **2110.** A third coil **2120** may be wound and fixed to the protrusion **2113.**

The second bobbin **2110** may comprise a lower stopper **2114.** A downward stroke of the second bobbin **2110** may be restricted through the lower stopper **2114.** The lower stopper **2114** may be formed on an outer circumferential surface of the second bobbin **2110.** The lower stopper **2114** may be in contact with the second housing **2210** when the second bobbin **2110** moves downward.

The second lens driving device **20** may comprise a third coil **2120.** The first mover **2100** may comprise a third coil **2120.** The third coil **2120** may be an 'AF driving coil' used for AF driving. The third coil **2120** may be disposed in the second bobbin **2110.** The third coil **2120** may move the second bobbin **2110.** The third coil **2120** may be disposed between the second bobbin **2110** and the second housing **2210.** The third coil **2120** may be disposed on an outer lateral surface or an outer circumferential surface of the second bobbin **2110.** The third coil **2120** may be directly wound around the second bobbin **2110.** Or, the third coil **2120** may be coupled to the second bobbin **2110** in a directly wound state. The third coil **2120** may face the second magnet **2220.** The third coil **2120** may be disposed to face the second magnet **2220.** The third coil **2120** may interact with the second magnet **2220** electromagnetically. In this case, when a current is supplied to the third coil **2120** and an electromagnetic field is formed around the third coil **2120,** the third coil **2120** may move against the second magnet **2220** by the electromagnetic interaction between the third coil **2120** and the second magnet **2220.**

The third coil **2120** may comprise a plurality of coils. The third coil **2120** may comprise two coils. The third coil **2120** may comprise a third-first and third-second coils **2221** and **2122.** A third-first coil **2121** may be disposed at a position corresponding to the third lateral plate **2342-3** of the second cover **2340.** The third-first coil **2121** may be disposed to face the third lateral plate **2342-3** of the second cover **2340.** The third-second coil **2122** may be disposed at a position corresponding to the fourth lateral plate **2342-4** of the second cover **2340.** The third-second coil **2122** may be disposed to face the fourth lateral plate **2342-4** of the second cover **2340.**

In a second embodiment of the present embodiment, the third coil **2120** and the second magnet **2220** may move the second bobbin **2110** against the second housing **2210** in an optical axis direction. The third coil **2120** and the second magnet **2220** may move the second bobbin **2110** in an optical axis direction through electromagnetic interaction. The third coil **2120** and the second magnet **2220** may be used for AF driving.

The second lens driving device **20** may comprise a coil. The coil may move the second bobbin **2110.** The coil may comprise a third coil **2120** that moves the second bobbin **2110** in an optical axis direction and a fourth coil **2330** that moves the second bobbin **2110** in a direction perpendicular to the optical axis direction.

The second lens driving device **20** may comprise a sensing magnet **2130.** The first mover **2100** may comprise a sensing magnet **2130.** The sensing magnet **2130** may be disposed in the second bobbin **2110.** The sensing magnet **2130** may be detected through the first sensor **2610.** In addition, the second lens driving device **20** may comprise a compensation magnet. The first mover **2100** may comprise a compensation magnet. The compensation magnet may be disposed to achieve magnetic force balance with the sensing magnet **2130.** The compensation magnet may have a weight corresponding to that of the sensing magnet **2130.** The compensation magnet may be disposed symmetrically with the sensing magnet **2130** with respect to an optical axis.

The second lens driving device **20** may comprise a second mover **2200.** The second mover **2200** may be movably coupled to the stator **2300** through a support member **2500.** The second mover **2200** may support the first mover **2100** through the first and second elastic members **2410** and **2420.** The second mover **2200** may move the first mover **2100** or may move together with the first mover **2100.** The second mover **2200** may move through interaction with the stator **2300.** The second mover **2200** may move during OIS driving. At this time, the second mover **2200** may be referred to as an 'OIS mover'. The second mover **2200** may move integrally with the first mover **2100** during OIS driving.

The second lens driving device **20** may comprise a second housing **2210.** The second mover **2200** may comprise a second housing **2210.** The second housing **2210** may be spaced apart from the second base **2310.** The second housing **2210** may be disposed outside the second bobbin **2110.** The second housing **2210** may accommodate at least a portion of the second bobbin **2110.** The second housing **2210** may be disposed inside the second cover **2340.** The second housing **2210** may be disposed between the second cover **2340** and the second bobbin **2110.** The second housing **2210** may be formed of a material different from that of the second cover **2340.** The second housing **2210** may be formed of an insulating material. The second housing **2210** may be formed of an injection molding material. An outer side surface of the second housing **2210** may be spaced apart from an inner surface of the lateral plate **2342** of the second cover **2340.** Through the separation space between the second housing **2210** and the second cover **2340,** the second housing **2210** may move for OIS driving. A second magnet **2220** may be disposed in the second housing **2210.** The second housing **2210** and the second magnet **2220** may be coupled by an adhesive. The first elastic member **2410** may be coupled to an upper portion or upper surface of the second housing **2210.** A second elastic member **2420** may be coupled to a lower portion or lower surface of the second housing **2210.** The second housing **2210** may be coupled to an upper portion and the second elastic members **2410** and **2420** by thermal fusion and/or an adhesive. The adhesive that couples the second housing **2210** and the second magnet **2220** and the second housing **2210** and the elastic member **2400** may be an epoxy cured by at least one among ultraviolet (UV), heat, and laser.

The second housing **2210** may comprise four side portions and four corner portions being disposed between the four side portions. The side portion of the second housing **2210** may comprise: a first side portion; a second side portion being disposed at an opposite side of the first side portion; a third side portion and a fourth side portion being disposed at an opposite side to each other between the first side portion and the second side portion. The corner portion of the second housing **2210** may comprise: a first corner portion being disposed between a first side portion and a third side portion; a second corner portion being disposed between a first side portion and a fourth side portion; a third corner portion being disposed between a second side portion and a third side portion; and a fourth corner portion being disposed between a second side portion and a fourth side portion. A side portion of the second housing **2210** may comprise a 'lateral wall'. The first side portion of the second housing **2210** may be disposed at a position corresponding to the first lateral plate **2342-1** of the second cover **2340.** The second side portion of the second housing **2210** may be disposed at a position corresponding to the second lateral plate **2342-2** of the second cover **2340.** The third side portion of the second housing **2210** may be disposed at a position corresponding to the third lateral plate **2342-3** of the second cover **2340.** The fourth side portion of the second housing **2210** may be disposed at a position corresponding to the fourth lateral plate **2342-4** of the second cover **2340.**

The second housing **2210** may comprise a hole **2211.** The hole **2211** may be hollow. The hole **2211** may be formed in the second housing **2210.** The hole **2211** may be formed to penetrate through the second housing **2210** in an optical axis direction. A second bobbin **2110** may be disposed in the hole **2211.** At least a portion of the hole **2211** may be formed in a shape corresponding to that of the second bobbin **2110.** An inner circumferential surface or an inner lateral surface of the second housing **2210** forming the hole **2211** may be spaced apart from an outer circumferential surface of the second bobbin **2110.** However, at least a portion of the second housing **2210** and the second bobbin **2110** is overlapped in an optical axis direction, so that the moving stroke distance of the second bobbin **2110** in an optical axis direction may be restricted.

The second housing **2210** may comprise a groove **2212.** The groove **2212** may accommodate at least a portion of the lower stopper **2114** of the second bobbin **2110.** The bottom surface of the groove **2212** may be overlapped with the lower stopper **2114** of the second bobbin **2110** in an optical axis direction. When the second bobbin **2110** moves downward, the lower stopper **2114** of the second bobbin **2110** may come into contact with the bottom surface of the groove **2212** of the second housing **2210.**

The second housing **2210** may comprise a hole **2213.** The hole **2213** may be a magnet accommodating groove. A second magnet **2220** may be coupled to the groove **2213.** The groove **2213** may be formed as a portion of an inner circumferential surface and/or a lower surface of the second housing **2210** is being recessed. The groove **2213** may be formed in each of the three side portions of the second housing **2210.** The groove **2213** may be formed in a second, third and fourth side portions of the second housing **2210.** The groove **2213** may be formed in a shape corresponding to the first side portion of the second housing **2210,** but in the groove **2213** being formed in a first side portion of the second housing **2210,** a dummy member **2230** other than the second magnet **2220** may be disposed.

The second housing **2210** may comprise a hole **2214.** The hole **2214** may be a through hole of a support member. The hole **2214** may be formed in a corner portion of the second housing **2210.** The hole **2214** may be formed to penetrate through the second housing **2210** in an optical axis direction. A support member **2500** may be disposed in the hole **2214** of the second housing **2210.** The support member **2500** may pass through the hole **2214** of the second housing **2210.**

The second lens driving device **20** may comprise a second magnet **2220.** The second mover **2200** may comprise a second magnet **2220.** The second magnet **2220** may be disposed in the second housing **2210.** The second magnet 2220 may be disposed inside the second cover **2340.** The second magnet **2220** may be fixed to the second housing **2210** by an adhesive. The second magnet **2220** may be disposed between the second bobbin **2110** and the second housing **2210.** The second magnet **2220** may face the third coil **2120.** The second magnet **2220** may interact with the third coil **2120** electromagnetically. The second magnet **2220** may move the second bobbin **2110** in an optical axis direction through interaction with the third coil **2120.** The second magnet **2220** may be used for AF driving. The second magnet **2220** may face the fourth coil **2330.** The second magnet **2220** may interact with the fourth coil **2330** electromagnetically. The second magnet **2220** may move the second bobbin **2110** and the second housing **2210** in a direction perpendicular to the optical axis direction through interaction with the fourth coil **2330.** The second magnet **2220** may be used for OIS driving. The second magnet **2220** may be disposed in a plurality of side portions of the second housing **2210.** The second magnet **2220** may be a flat magnet having a flat plate shape.

The second magnet **2220** may not be disposed between the second bobbin **2110** and the first lateral plate **2342-1** of the second cover **2340.** Through this, magnetic field interference of the second magnet **2220** affecting the first lens driving device **10** can be minimized.

The second magnet **2220** may comprise a plurality of magnets. The second magnet **2220** may comprise three magnets. The second magnet **2220** may comprise a second-first to second-third magnets **2221, 2222,** and **2223.** The second-first magnet **2221** may be disposed at the first side portion of the second housing **2210.** The second magnet **2221** may be disposed at the second side portion of the second housing **2210.** The third magnet **2221** may be disposed at the fourth side portion of the second housing **2210.** A dummy member **2230** may be disposed at the third side portion of the second housing **2210.**

The second-first magnet **2221** may face the third-first coil **2121.** The second-second magnet **2222** may face the third-second coil **2122.** The second-first and second-second magnets **2221** and **2222** may be used during AF driving. The second magnet **2220** comprises the second-first magnet **2221** being disposed at a position corresponding to the third lateral plate **2342-3** of the second cover **2340** and the fourth lateral plate **2342-4.** A second-second magnet **2222** being disposed at a corresponding position and second-third magnets **2223** being disposed at a position corresponding to the second lateral plate **2342-2** may be comprised.

The second-first magnet **2221** may face the fourth-first coil **2331.** The second-second magnet **2222** may face the fourth-second coil **2332.** The second-first and second-second magnets **2221** and **2222** may be used when driving in an OIS-x-axis direction. The second-third magnets **2223** may face the fourth-third coil **2333.** The second-third magnets **2223** may be used when driving in an OIS-y-axis direction. The area of a lower surface of the second-third magnet **2223** may be larger than the area of a lower surface of each of the second-first magnet **2221** and the second-second magnet **2222.**

The second-first magnet **2221** and the second-second magnet **2222** may be 4-pole magnetized magnets. The second-first magnet **2221** and the second-second magnet **2222** may be 4-pole magnets. The 4-pole magnetized magnet may comprise a neutral portion being disposed horizontally in the central portion. Here, the neutral portion may be a void. The second-first magnet **2221** and the second-second magnet **2222** may be 2-pole magnetized. As the second-first magnet **2221** and the second-second magnet **2222** are 2-pole magnetized, the AF electromagnetic force can be maximized. Each of the second-first magnet **2221** and the second-second magnet **2222** may be a 4-pole magnet in which the polarity of an upper surface of an inner surface is different from that of a lower surface of an inner surface and an upper surface of an outer surface, and the polarity of a lower surface of an outer surface is the same.

The second-third magnet **2223** may be a 2-pole magnetized magnet. The second-third magnet **2223** may be a 2-pole magnet. The second-third magnet **2223** may be a 2-pole magnet having different inner and outer polarities. For an example, an inner surface of the second-third magnet **2223** may have an N pole and an outer surface of the second-third magnet **2223** may have an S pole. Conversely, an inner surface of the second-third magnet **2223** may be an S pole and an outer surface of the second-third magnet **2223** may be an N pole. However, as a modified embodiment, the second-third magnet **2223** may be a 4-pole magnet. The second-third magnet **2223** may be formed larger than each of the second-first magnet **2221** and the second-second magnet **2222.**

The second lens driving device **20** may comprise a dummy member **2230.** The second mover **2200** may comprise a dummy member **2230.** The dummy member **2230** may be disposed in the second housing **2210.** The dummy member **2230** may be disposed in a first side portion of the second housing **2210.** The dummy member **2230** may be disposed adjacent to the first lens driving device **10.** Through this, magnetic force interference between the second lens driving device **20** and the first lens driving device 10 can be minimized. The dummy member **2230** may be disposed at a position corresponding to the first lateral plate **2342-1** of the second cover **2340.**

The dummy member **2230** may have a weight corresponding to that of the second-third magnet **2223.** The dummy member **2230** may have weaker magnetic force than the second-third magnet **2223** or may not have magnetic force. The dummy member **2230** may be disposed at an opposite side of the second-third magnet **2223** in the second housing **2210.** The weight of the dummy member **2230** may correspond to the weight of the second-third magnet **2223.** However, the dummy member **2230** may have a weight lighter than that of the second-third magnet **2223.** Or, the dummy member **2230** may have a weight heavier than that of the second-third magnet **2223.** The dummy member **2230** may be within 80% of the weight of the second-third magnet **2223** to 120% of the weight of the second-third magnet **2223.** If the weight of the dummy member **2230** is less than the lower limit or exceeds the upper limit of the above-mentioned numerical value, the weight balancing of the OIS driving unit may collapse.

The dummy member **2230** may be a non-magnetic material. The dummy member **2230** may comprise a non-magnetic material. The magnetic strength of the dummy member **2230** may be weaker than that of the second-third magnet **2223.** The dummy member **2230** may be disposed at an opposite side of the second-third magnet **2223** to align the center of gravity. The dummy member **2230** may be made of tungsten at least 95%. That is, the dummy member **2230** may be a tungsten alloy. For example, the specific gravity of the dummy member **2230** may be 18000 or more. The dummy member **2230** may be disposed at a position symmetrical to the second-third magnet **2223** with respect to the central axis of the second housing **2210.** At this time, the central axis of the second housing **2210** may correspond to an optical axis. The dummy member **2230** may have a thickness corresponding to that of the second-third magnet **2223** in a direction perpendicular to the optical axis.

The second lens driving device **20** may comprise a yoke **2240.** The second mover **2200** may comprise a yoke **2240.** The yoke **1240** may be disposed in the first housing **2210.** The yoke **2240** may be disposed in a first side portion of the first housing **2210.** The yoke **2240** may be disposed adjacent to the first lens driving device **10.** Through this, magnetic force interference between the first lens driving device **10** and the second lens driving device **20** can be minimized.

The second lens driving device **20** may comprise a stator **2300.** The stator **2300** may be disposed below the first and second movers **2100** and **2200.** The stator **2300** may movably support the second mover **2200.** The stator **2300** may move the second mover **2200.** At this time, the first mover **2100** can also move together with the second mover **2200.**

The first lens driving device **10** may comprise a first base **1310.** The stator **1300** may comprise a first base **1310.** The first base **1310** may be disposed below the first housing **1210.** The first base **1310** may be disposed below the first substrate **1320.** The first substrate **1320** may be disposed on an upper surface of the first base **1310.** The first base **1310** may be coupled to the first cover **1340.** The first base **1310** may be disposed on the printed circuit board **30.**

The second base **2310** may comprise a step **2311.** The step **2311** may be formed on a side surface of the second base **2310.** The step **2311** may be formed around an outer circumferential surface of the second base **2310.** The step **2311** may be formed as a portion of a side surface of the second base **2310** is protruded or recessed. A lower end of the lateral plate **2342** of the cover member **2340** may be disposed at the step **2311.**

The second base **2310** may comprise a hole **2312.** The hole **2312** may be hollow. The hole **2312** may penetrate through the second base **2310** in an optical axis direction. A light passing through the second lens **42** through the hole **2312** may be incident to an image sensor.

The second base **2310** may comprise a protrusion **2313.** The protrusion **2313** may be formed on an upper surface of the second base **2310.** The protrusion **2313** may be protruded from an upper surface of the second base **2310.** A fourth coil **2330** may be disposed in the protrusion **2313.** The fourth coil **2330** may be wound around the protrusion **2313** and disposed.

The second lens driving device **20** may comprise a second substrate **2320.** The stator **2300** may comprise a second substrate **2320.** The second substrate **2320** may be disposed in the second base **2310.** The second substrate **2320** may be disposed at one side of the second housing **2210.** The second substrate **2320** may be disposed between the second base **2310** and the second housing **2210.** The second substrate **2320** may be disposed at an upper surface of the second base **2310.** The support member **2500** may be coupled to the second substrate **2320.** The second substrate **2320** may be electrically connected to the support member **2500.** One end of the support member **2500** may be fixed to the second substrate **2320.** The second substrate **2320** may be coupled to the printed circuit board **30** being disposed below the second base **2310** by soldering. The second substrate **2320** may comprise a flexible printed circuit board (FPCB). The second substrate **2320** may be partially bent.

The second substrate **2320** may comprise a body part **2321.** A hole may be formed in the body part **2321.** The hole may be hollow penetrating the second substrate **2320** in an optical axis direction. The second substrate **2320** may comprise a hole. A support member **2500** may be disposed in the hole of the second substrate **2320.** The support member **2500** may pass through the hole of the second substrate **2320.**

The second substrate **2320** may comprise a terminal unit. The terminal unit may be extended from an edge of the body part **2321.** The terminal unit may comprise a terminal electrically connected to the printed circuit board. The terminal unit may comprise a terminal being coupled to the printed circuit board. The terminal unit may comprise a plurality of terminal units.

The second substrate **2320** may comprise a first terminal unit **2322.** The first terminal unit **2322** may be extended downward from the body part **2321** of the second substrate **2320.** The first terminal unit **2322** may be formed by bending a part of the second substrate **2320.** At least a portion of the first terminal unit **2322** may be exposed to the outside. The first terminal unit **2322** may be coupled to the printed circuit board **30** being disposed below the second base **2310** by soldering. The first terminal unit **2322** may be disposed in a groove of the first base **2310.** The first terminal unit **2322** may comprise a plurality of terminals.

The second substrate **2320** may comprise a first terminal unit **2322** and a plurality of terminals being disposed in the first terminal unit **2322** and electrically connected to the printed circuit board **30.** The first terminal unit **2322** of the second substrate **2320** may be disposed at a position corresponding to the first lateral plate **2342-1** of the second cover **2340.** The first terminal unit **2322** of the second substrate **2320** may be disposed closest to the first lateral plate **2342-1** among the first to fourth lateral plates **2342-1, 2342-2, 2342-3,** and **2342-4** of the second cover **2340.**

The second substrate **2320** may comprise a second terminal unit **2323.** The second terminal unit **2323** may be disposed at an opposite side of the first terminal unit **2322.** The second terminal unit **2323** of the second substrate **2320** may be disposed at a position corresponding to the second lateral plate **2342-2** of the second cover **2340.**

The second lens driving device **20** may comprise a fourth coil **2330.** The stator **2300** may comprise a fourth coil **2330.** The fourth coil **2330** may be an 'OIS coil'. The fourth coil **2330** may move the second bobbin **2110.** The fourth coil **2330** may be disposed in the second base **2310.** The fourth coil **2330** may be disposed in the second substrate **2320.** The fourth coil **2330** may face the second magnet **2220.** The fourth coil **2330** may interact with the second magnet **2220** electromagnetically. In this case, when a current is supplied to the fourth coil **2330** and a magnetic field is formed around the fourth coil **2330,** the second magnet **2220** may move against the fourth coil **2330** due to electromagnetic interaction between the fourth coil **2330** and the second magnet **2220.** The fourth coil **2330** may move the second housing **2210** and the second bobbin **2110** in a direction perpendicular to the optical axis with respect to the second base **2310** through electromagnetic interaction with the second magnet **2220.** The second substrate **2320** may comprise a fourth coil **2330.** That is, the fourth coil **2330** may be a configuration of the second substrate **2320.** The fourth coil **2330** may be formed as a fine pattern coil (FP coil) in a substrate separate from the second substrate **2320.**

The fourth coil **2330** may comprise a plurality of coils. The fourth coil **2330** may comprise a number of coils corresponding to those of the second magnet **2220.** The fourth coil **2330** may comprise three coils. The fourth coil **2330** may comprise a fourth-first coil **2331,** a fourth-second coil **2332,** and a fourth-third coil **2333.** The fourth-first coil **2331** may face the second-first magnet **2221.** The fourth-second coil **2332** may face the second-second magnet **2222.** The fourth-third coil **2333** may face the second-third magnet **2223.**

The number of windings of the fourth-first coil **2331** may be greater than the number of windings of the fourth-second coil **2332** and the fourth-third coil **2333.** The number of windings of the fourth-second coil **2332** may correspond to the number of windings of the fourth-third coil **2333.** In a second embodiment of the present embodiment, during OIS driving, the movement in an X-axis direction is performed through the fourth-first coil **2331** and fourth-second coil **2332,** and the movement in a Y-axis direction may be performed through the fourth-third coil **2333.** Therefore, in a second embodiment of the present embodiment, the number of turns of the fourth-third coil **2333** may be higher than the number of turns of the fourth-first coil **2331** and the fourth-second coil **2332** to compensate for insufficient driving force in a Y-axis direction. For example, a ratio between the number of turns of the fourth-third coil **2333** and the number of turns of the fourth-first and fourth-second coil **2331** and **2332** may be 1.5:2.0 to 1:1. Ideally, the ratio of the number of turns of the fourth-third coil **2333** to the number of turns of the fourth-first and fourth-second coil **2331** and **2332** is 1:1, but it can be disposed up to 1.5:2.0 due to space constraints.

The second lens driving device **20** may comprise a second cover **2340.** The stator **2300** may comprise a second cover **2340.** The second cover **2340** may comprise a 'cover can'. The second cover **2340** may comprise a yoke. The second cover **2340** may be disposed outside the second housing **2210.** The second cover **2340** may be coupled to the second base **2310.** The second cover **2340** may accommodate the second housing **2210** therein. The second cover **2340** may form the outer appearance of the second lens driving device **20.** The second cover **2340** may have a hexahedral shape with an open lower surface. The second cover **2340** may be made of a non-magnetic material. The second cover **2340** may be formed of a metal material. The second cover **2340** may be formed of a metal plate. The second cover **2340** may be connected to the ground portion of the printed circuit board **30.** Through this, the second cover **2340** may be grounded. The second cover **2340** may block electromagnetic interference (EMI). At this time, the second cover **2340** may be referred to as an 'EMI shield can'.

The second cover **2340** may comprise an upper plate **2341** and a lateral plate **2342.** The second cover **2340** may comprise an upper plate **2341** comprising a hole and a lateral plate **2342** being extended downward from an outer circumference or edge of the upper plate **2341.** The lower end of the lateral plate **2342** of the second cover **2340** may be disposed in the step **2311** of the second base **2310.** An inner surface of the lateral plate **2342** of the second cover **2340** may be fixed to the second base **2310** by an adhesive.

The lateral plate **2342** of the second cover **2340** may comprise a plurality of lateral plates. The lateral plate **2342** may comprise four lateral plates. The lateral plate **2342** of the second cover **2340** may comprise: a first lateral plate **2342-1** and a second lateral plate **2342-2** being disposed at an opposite side to each other; and a third lateral plate **2342-3** and a fourth lateral plate **2342-4** being disposed at an opposite side to each other. The first terminal unit **2322** of the second substrate **2320** may be disposed at a position corresponding to the first lateral plate **2342-1** of the second cover **2340.** The second terminal unit **2323** of the second substrate **2320** may be disposed at a position corresponding to the second lateral plate **2342-2** of the second cover **2340.**

The second cover **2340** may comprise a groove **2343.** The groove **2343** may be formed in the lateral plate **2342** of the second cover **2340.** The groove **2343** may be formed at a lower end of the lateral plate **2342.** The groove **2343** may be formed at a position corresponding to at least one of the first terminal unit **2322** and the second terminal unit **2323.** The groove **2343** may be formed to expose at least one of the first terminal unit 2322 and the second terminal unit **2323** to the outside.

The second lens driving device **20** may comprise a terminal **2350.** The stator **2300** may comprise a terminal **2350.** The terminal **2350** may be disposed in the second base **2310.** The terminal **2350** may be electrically connected to the second substrate **2320.** The terminal **2350** may be coupled to the support member **2500.** The terminal **2350** may electrically connect the support member **2500** and the second substrate 2320.

The second lens driving device **20** may comprise an elastic member **2400.** The elastic member **2400** may be an 'AF support member'. At least a portion of the elastic member **2400** may have elasticity. The elastic member **2400** may be formed of metal. The elastic member **2400** may be formed of a conductive material. The elastic member **2400** may connect the second bobbin **2110** and the second housing **2210.** The elastic member **2400** may elastically connect the second bobbin **2110** and the second housing **2210.** The elastic member **2400** may be coupled to the second bobbin **2110** and the second housing **2210.** The elastic member **2400** may elastically support the second bobbin **2110.** The elastic member **2400** may movably support the second bobbin **2110.** The elastic member **2400** may support the movement of the second bobbin **2110** during AF driving.

The elastic member **2400** may comprise a first elastic member **2410.** The first elastic member **2410** may be an 'upper elastic member'. The first elastic member **2410** may connect the second housing **2210** and the second bobbin **2110.** The first elastic member **2410** may be coupled to an upper portion of the second bobbin **2110** and an upper portion of the second housing **2210.** The first elastic member **2410** may be coupled to an upper surface of the second bobbin **2110.** The first elastic member **2410** may be coupled to an upper surface of the second housing **2210.** The first elastic member **2410** may be coupled to the support member **2500.** The first elastic member **2410** may be formed of a leaf spring. The first elastic member **2410** can be separated and used as a power line for electrical or communication signal.

The first elastic member **2410** may comprise a plurality of elastic units. The first elastic member **2410** may comprise three elastic units. The first elastic member **2410** may comprise first to third elastic units **2410-1, 2410-2,** and **2410-3.** The first elastic unit **2410-1** may connect the support member **2500** and one end of the third-first coil **2121.** The second elastic unit **2410-2** may connect the other end of the third-first coil **2121** and one end of the third-second coil **2122.** The third elastic unit **2410-3** may connect the other end of the third-second coil **2122** and the support member **2500.** The first elastic member **2410** may be electrically connected to the third coil **2120.** The first elastic member **2410** may electrically connect the third coil **2120** and the support member **2500.**

The first elastic member **2410** may comprise an outer side portion **2411.** The outer side portion **2411** may be coupled to the second housing **2210.** The outer side portion **2411** may be coupled to an upper surface of the second housing **2210.** The outer side portion **2411** may comprise a hole or groove coupled to the protrusion of the second housing **2210.** The outer side portion **2411** may be fixed to the second housing **2210** by an adhesive.

The first elastic member **2410** may comprise an inner side portion **2412.** The inner side portion **2412** may be coupled to the second bobbin **2110.** The inner side portion **2412** may be coupled to an upper surface of the second bobbin **2110.** The inner side portion **2412** may comprise a hole or groove being coupled to a protrusion of the second bobbin **2110.** The inner side portion **2412** may be fixed to the second bobbin **2110** by an adhesive.

The first elastic member **2410** may comprise a connecting portion **2413.** The connecting portion **2413** may connect the inner side portion **2412** and the outer side portion **2411.** The connecting portion **2413** may have elasticity. At this time, the connecting portion **2413** may be referred to as an 'elastic portion'. The connecting portion **2413** may comprise a shape bent two or more times.

The first elastic member **2410** may comprise a connecting portion **2414.** The connecting portion **2414** may be extended from the outer side portion **2411.** The connecting portion **2414** may be coupled to the support member **2500.** The connecting portion **2414** and the support member **2500** may be coupled by soldering.

The elastic member **2400** may comprise a second elastic member **2420.** The second elastic member **2420** may be a 'lower elastic member'. The second elastic member **2420** may be disposed below the first elastic member **2410.** The second elastic member **2420** may be disposed on one side of the first elastic member **2410.** The second elastic member **2420** may connect the second housing **2210** and the second bobbin **2110.** The second elastic member **2420** may be disposed below the second bobbin **2110.** The second elastic member **2420** may be coupled to the second bobbin **2110** and the second housing **2210.** The second elastic member **2420** may be coupled to a lower surface of the second bobbin **2110.** The second elastic member **2420** may be coupled to a lower surface of the second housing **2210.** The second elastic member **2420** may be formed of a leaf spring. The second elastic member **2420** may be integrally formed.

The second elastic member **2420** may comprise an outer side portion **2421.** The outer side portion **2421** may be coupled to the second housing **2210.** The outer side portion **2421** may be coupled to a lower surface of the second housing **2210.** The outer side portion **2421** may comprise a hole or groove being coupled to a protrusion of the second housing **2210.** The outer side portion **2421** may be fixed to the second housing **2210** by an adhesive.

The second elastic member **2420** may comprise an inner side portion **2422.** The inner side portion **2422** may be coupled to the second bobbin **2110.** The inner side portion **2422** may be coupled to a lower surface of the second bobbin **2110.** The inner side portion **2422** may comprise a hole or groove being coupled to a protrusion of the second bobbin **2110.** The inner side portion **2422** may be fixed to the second bobbin **2110** by an adhesive.

The second elastic member **2420** may comprise a connecting portion **2423.** The connecting portion **2423** may connect the inner side portion **2422** and the outer side portion **2421.** The connecting portion **2423** may have elasticity. At this time, the connecting portion **2423** may be referred to as an 'elastic portion'. The connecting portion **2423** may comprise a shape bent two or more times.

The second lens driving device **20** may comprise a support member **2500.** The support member **2500** may be an 'OIS support member'. The support member **2500** may connect the first elastic member **2410** and the second substrate **2320** or the first elastic member **2410** and the terminal **2350.** The support member **2500** may be coupled to an upper surface of the first elastic member **2410** and the terminal **2350.** The support member **2500** may movably support the second housing **2210.** The support member **2500** may elastically support the second housing **2210.** At least a portion of the support member **2500** may have elasticity. The support member **2500** may elastically support the movement of the second housing **2210** and the second bobbin **2110** during OIS driving. One end portion of the support member **2500** may be coupled to the first elastic member **2410** by soldering. The other end portion of the support member **2500** may be coupled to the terminal 2350 by soldering.

The support member **2500** may comprise a plurality of wires. The support member **2500** may comprise 4 wires. The plurality of wires may comprise four wires connecting the three first elastic units **410-1, 410-2,** and **410-3** and the second substrate **2320.** As a modified embodiment, support member **2500** may be formed as a leaf spring.

The second lens driving device **20** may comprise a first sensor **2610.** The first sensor **2610** may be disposed in the second base **2310.** The first sensor **2610** may detect the sensing magnet **2130.** The first sensor **2610** may be disposed in the second substrate **2320.** The first sensor **2610** may be coupled to a lower surface of the second substrate **2320.** The first sensor **2610** may be spaced apart from the second housing **2210.** The first sensor **2610** may be spaced apart from the second bobbin **2110.** The first sensor **2610** may be overlapped with the sensing magnet **2130** in an optical axis direction. The first sensor **2610** may detect the position of the sensing magnet 2130 for AF feedback control. The first sensor **2610** may be a Hall IC, a Hall element, or a Hall sensor. The first sensor **2610** may detect the magnetic force of the sensing magnet **2130.**

The second lens driving device **20** may comprise a second sensor **2620.** The second sensor **2620** may be disposed between the second base **2310** and the second substrate **2320.** The second sensor **2620** may detect the movement of the second mover **2300.** The second sensor **2620** may detect the movement of the second housing **2210** and the second magnet **2220** by detecting the magnetic force of the second magnet **2220.** A detection value detected by the second sensor **2620** may be used for OIS feedback control. The second sensor **2620** may comprise a plurality of Hall sensors. The second sensor 2620 may comprise two Hall sensors. The second sensor **2620** may comprise a first Hall sensor for detecting the movement in an x-axis direction in the horizontal direction and a second Hall sensor for detecting movement in a y-axis direction in the horizontal direction.

The second lens driving device **20** may comprise a damper. The damper may be disposed in the support member **2500.** The damper may be disposed in the support member **2500** and the second housing **2210.** The damper may be disposed in the elastic member. The damper may be disposed in the elastic member **2400** and/or the support member **2500** to prevent a resonance phenomenon generated in the elastic member **2400** and/or the support member **2500.**

Hereinafter, a configuration of a camera device according to a modified embodiment will be described with reference to drawings. Hereinafter, differences from the second embodiment of the present embodiment will be mainly described, and the description of the second embodiment of the present embodiment can be applied in analogy to the parts that has not been explained.

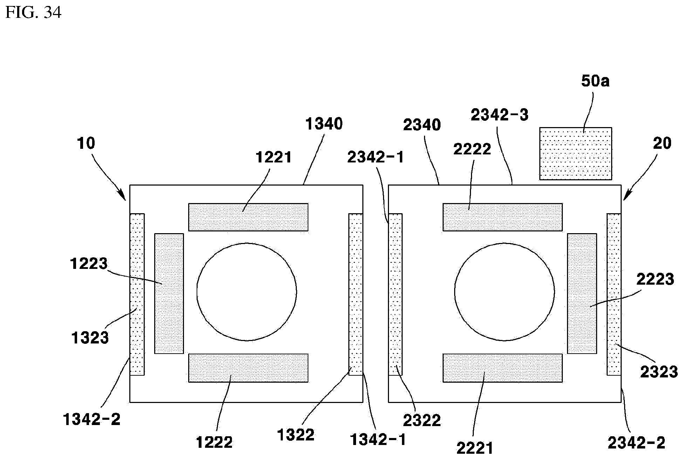

FIG. 34 is a schematic diagram of a camera device according to a first modified embodiment.

In a first modified embodiment, the gyro sensor **50a** may be disposed adjacent to the second lens driving device 20. The gyro sensor **50a** may be disposed closer to the second lens driving device **20** than to the first lens driving device **10.** The gyro sensor **50a** may be disposed to be closest to the third lateral plate **2342-3** among the first to fourth lateral plates **2342-1, 2342-2, 2342-3,** and **2342-4** of the second cover **2340.** The gyro sensor **50a** may be disposed to be closer to the second lateral plate **2342-2** than to the first lateral plate **2342-1.**

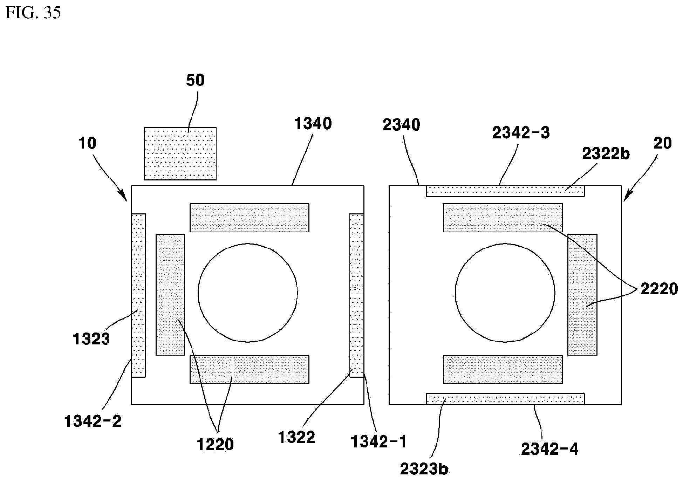

FIG. 35 is a schematic diagram of a camera device according to a second modified embodiment.

In a second modified embodiment, the second substrate **2320** may comprise a first terminal unit **2322b** being disposed at a position corresponding to the third lateral plate **2342-3** of the second cover **2340.** The first terminal unit **2322b** may be disposed to be closest to the third lateral plate **2342-3** among the first to fourth lateral plates **2342-1, 2342-2, 2342-3,** and **2342-4** of the second cover **2340.** The first terminal unit **2322b** may be disposed in a third side surface of the second base **2310.** The first terminal unit **2322b** may be extended from an edge of the third region of the body part **2321** of the second substrate **2320.**

The second substrate **2320** may comprise a second terminal unit **2323b** being disposed at a position corresponding to the fourth lateral plate **2342-4** of the second cover **2340.** The second terminal unit **2323b** may be disposed to be closest to the fourth lateral plate **2342-4** among the first to fourth lateral plates **2342-1, 2342-2, 2342-3,** and **2342-4** of the second cover **2340.** The second terminal unit **2323b** may be disposed on a fourth side surface of the second base **2310.** The second terminal unit **2323b** may be extended from an edge of a fourth region of the body part **2321** of the second substrate **2320.**

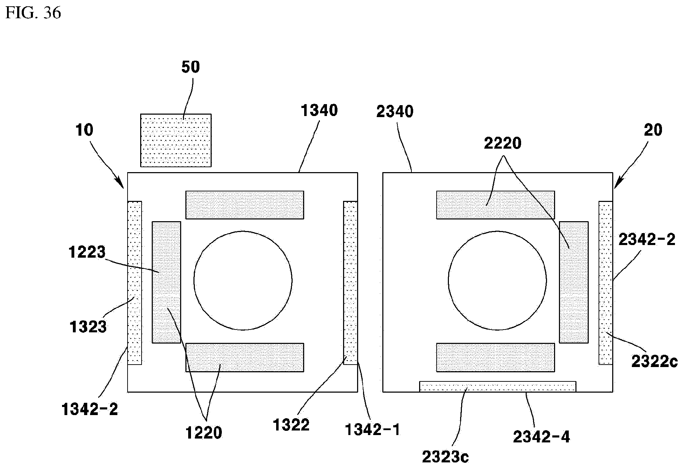

FIG. 36 is a schematic diagram of a camera device according to a third modified embodiment.

In a second modified embodiment, the second substrate **2320** may comprise a first terminal unit 2322c being disposed at a position corresponding to the second lateral plate **2342-2** of the second cover **2340.** The first terminal unit **2322c** may be disposed to be closest to the second lateral plate **2342-2** among the first to fourth lateral plates **2342-1, 2342-2, 2342-3,** and **2342-4** of the second cover **2340.** The first terminal unit **2322c** may be disposed on a second side surface of the second base **2310.** The first terminal unit **2322c** may be extended from an edge of a second region of the body part **2321** of the second substrate **2320.**

The second substrate **2320** may comprise a second terminal unit **2323c** being disposed at a position corresponding to the fourth lateral plate **2342-4** of the second cover **2340.** The second terminal unit **2323c** may be disposed to be closest to the fourth lateral plate **2342-4** among the first to fourth lateral plates **2342-1, 2342-2, 2342-3,** and **2342-4** of the second cover **2340.** The second terminal unit **2323c** may be disposed on the fourth side surface of the second base **2310.** The second terminal unit **2323c** may be extended from an edge of a fourth region of the body part **2321** of the second substrate **2320.**

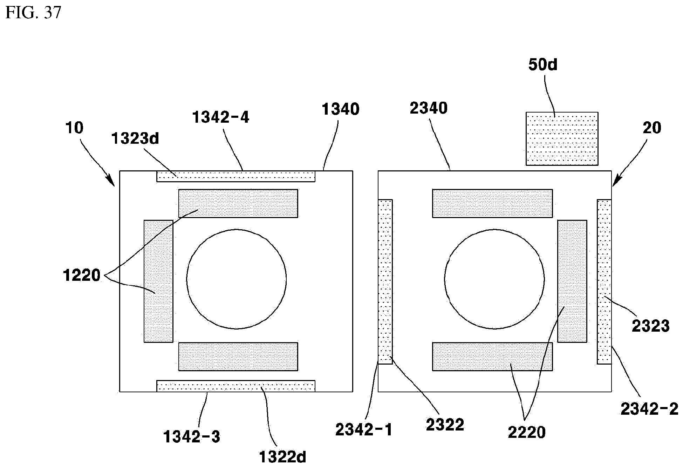

FIG. 37 is a schematic diagram of a camera device according to a fourth modified embodiment.

In a fourth modified embodiment, the gyro sensor **50d** may be disposed adjacent to the second lens driving device **20.** The gyro sensor **50d** may be disposed adjacent to the third lateral plate **2342-3** of the second cover **2340** of the second lens driving device **20.** The gyro sensor **50d** may be disposed to be closer to the second lens driving device **20** than to the first lens driving device **10.** The gyro sensor **50d** may be disposed to be closest to the third lateral plate **2342-3** among the first to fourth lateral plates **2342-1, 2342-2, 2342-3,** and **2342-4** of the second cover **2340.** The gyro sensor **50d** may be disposed to be closer to the second lateral plate **2342-2** than to the first lateral plate **2342-1.**

The first substrate **1320** may comprise a first terminal unit **1322d** being disposed at a position corresponding to the third lateral plate **1342-3** of the first cover **1340.** The first terminal unit **1322d** may be disposed closest to the third lateral plate **1342-3** among the first to fourth lateral plates **1342-1, 1342-2, 1342-3,** and **1342-4** of the first cover **1340.** The first terminal unit **1322d** may be disposed on a third side surface of the first base **1310.** The first terminal unit **1322d** may be extended from an edge of a third region of the body part **1321** of the first substrate **1320.**

The first substrate **1320** may comprise a second terminal unit **1323d** being disposed at a position corresponding to the fourth lateral plate **1342-4** of the first cover **1340.** The second terminal unit **1323d** may be disposed to be closest to the fourth lateral plate **1342-4** among the first to fourth lateral plates **1342-1, 1342-2, 1342-3,** and **1342-4** of the first cover **1340.** The second terminal unit **1323d** may be disposed on a fourth side surface of the first base **1310.** The second terminal unit **1323d** may be extended from an edge of a fourth region of the body part **1321** of the first substrate **1320.**

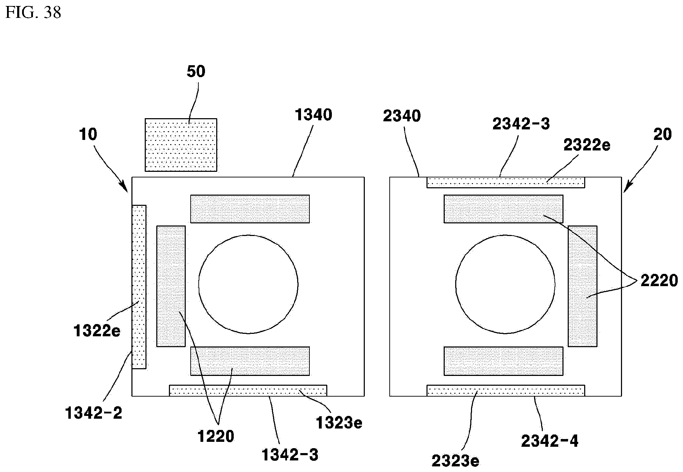

FIG. 38 is a schematic diagram of a camera device according to a fifth modified embodiment.

In a fifth modified embodiment, the first substrate **1320** may comprise a first terminal unit **1322e** being disposed at a position corresponding to the second lateral plate **1342-2** of the first cover **1340.** The first substrate **1320** may comprise a second terminal unit **1323e** being disposed at a position corresponding to the third lateral plate **1342-3** of the first cover **1340.** The second substrate **2320** may comprise a first terminal unit **2322e** being disposed at a position corresponding to the third lateral plate **2342-3** of the second cover **2340.** The second substrate **2320** may comprise a second terminal unit **2323e** being disposed at a position corresponding to the fourth lateral plate **2342-4** of the second cover **2340.**

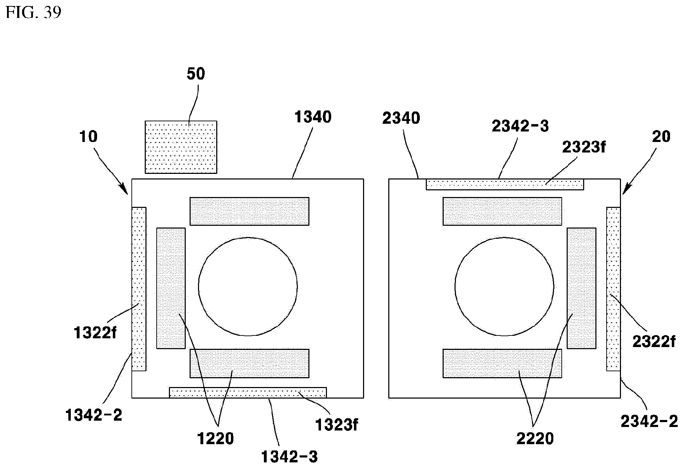

FIG. 39 is a schematic diagram of a camera device according to a sixth modified embodiment.

In a sixth modified embodiment, the first substrate **1320** may comprise a first terminal unit **1322f** being disposed at a position corresponding to the second lateral plate **1342-2** of the first cover **1340.** The first substrate **1320** may comprise a second terminal unit **1323f** being disposed at a position corresponding to the third lateral plate **1342-3** of the first cover **1340.** The second substrate **2320** may comprise a first terminal unit **2322f** being disposed at a position corresponding to the second lateral plate **2342-2** of the second cover **2340.** The second substrate **2320** may comprise a second terminal unit **2323f** being disposed at a position corresponding to the third lateral plate **2342-3** of the second cover **2340.**

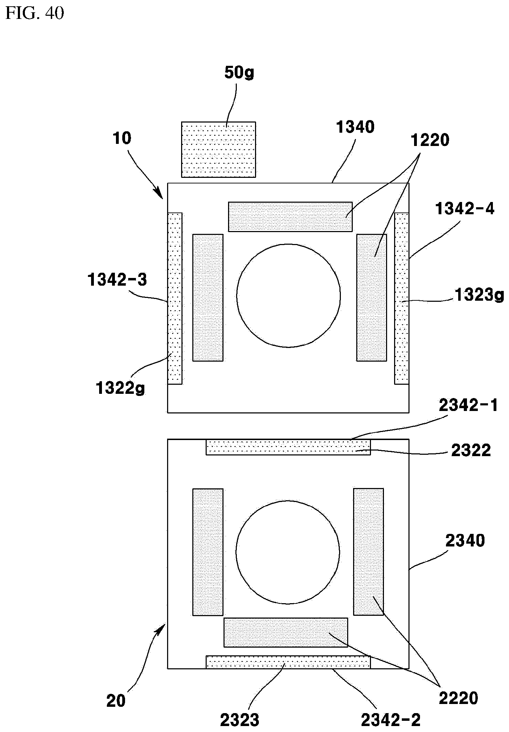

FIG. 40 is a schematic diagram of a camera device according to a seventh modified embodiment.

In a seventh modified embodiment, the gyro sensor **50g** may be disposed adjacent to the second lateral plate **2342-2** of the first cover **1340** of the first lens driving device **10.** The gyro sensor **50g** may be disposed to be closest to the second lateral plate **2342-2** among the first to fourth lateral plates **1342-1, 1342-2, 1342-3,** and **1342-4** of the first cover **1340.** The gyro sensor **50g** may be disposed to be closer to the third lateral plate **2342-3** than to the fourth lateral plate **2342-4.**

The first substrate **1320** may comprise a first terminal unit **1322g** being disposed at a position corresponding to the third lateral plate **1342-3** of the first cover **1340.** The first substrate **1320** may comprise a second terminal unit **1323g** being disposed at a position corresponding to the fourth lateral plate **1342-4** of the first cover **1340.** The second substrate **2320** may comprise a first terminal unit **2322g** being disposed at a position corresponding to the first lateral plate **2342-1** of the second cover **2340.** The second substrate **2320** may comprise a second terminal unit **2323g** being disposed at a position corresponding to the second lateral plate **2342-2** of the second cover **2340.**

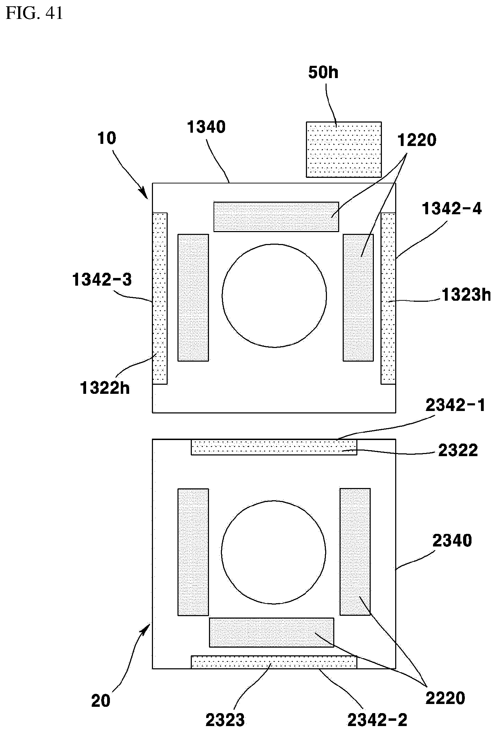

FIG. 41 is a schematic diagram of a camera device according to an eighth modified embodiment.

In an eighth modified embodiment, the gyro sensor **50h** may be disposed adjacent to the second lateral plate **2342-2** of the first cover **1340** of the first lens driving device **10.** The gyro sensor **50h** may be disposed to be closest to the second lateral plate **2342-2** among the first to fourth lateral plates **1342-1, 1342-2, 1342-3,** and **1342-4** of the first cover **1340.** The gyro sensor **50h** may be disposed to be closer to the fourth lateral plate **2342-4** than to the third lateral plate **2342-3.**

The first substrate **1320** may comprise a first terminal unit **1322h** being disposed at a position corresponding to the third lateral plate **1342-3** of the first cover **1340.** The first substrate **1320** may comprise a second terminal unit **1323h** being disposed at a position corresponding to the fourth lateral plate **1342-4** of the first cover **1340.** The second substrate **2320** may comprise a first terminal unit **2322h** being disposed at a position corresponding to the first lateral plate **2342-1** of the second cover **2340.** The second substrate **2320** may comprise a second terminal unit **2323h** being disposed at a position corresponding to the second lateral plate **2342-2** of the second cover **2340.**

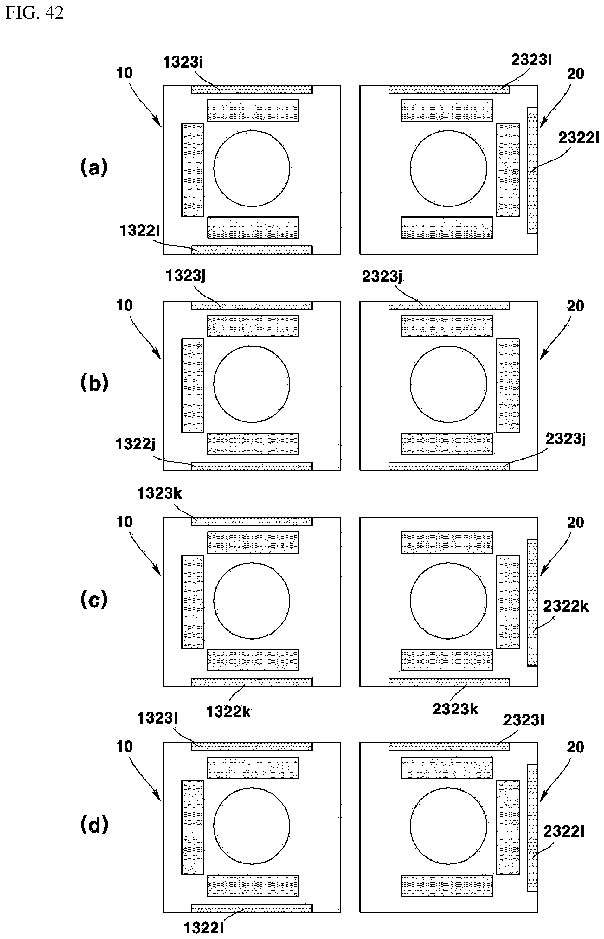

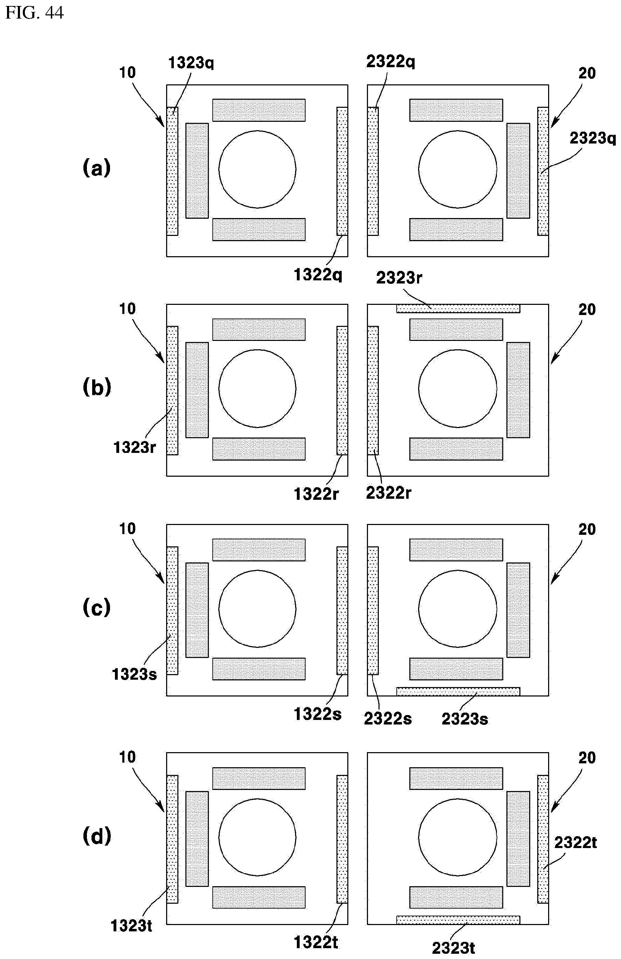

FIGS. 42, 43 and 44 are schematic diagrams of a camera device according to other modified embodiments. The embodiments illustrated in FIGS. 42 to 44 represent modified examples of the camera device, which do not necessarily comprise all features of independent Claim 1.

In FIG. 42 (a), in the first lens driving device **10,** the first terminal unit **1322i** is disposed at a position corresponding to the third lateral plate **1342-3** of the first cover **1340,** and the second terminal unit **1323i** may be disposed at a position corresponding to the fourth lateral plate **1342-4** of the first cover **1340.** In the second lens driving device **20,** the first terminal unit **2322i** is disposed at a position corresponding to the second lateral plate **2342-2** of the second cover **2340,** and the second terminal unit **2323i** may be disposed at a position corresponding to the third lateral plate **2342-3** of the second cover **2340.**

In FIG. 42 (b), in the first lens driving device **10,** the first terminal unit **1322j** is disposed at a position corresponding to the third lateral plate **1342-3** of the first cover **1340,** and the second terminal unit **1323j** may be disposed at a position corresponding to the fourth lateral plate **1342-4** of the first cover **1340.** In the second lens driving device **20,** the first terminal unit **2322j** is disposed at a position corresponding to the third lateral plate **2342-3** of the second cover **2340,** and the second terminal unit **2323j** may be disposed at a position corresponding to the fourth lateral plate **2342-4** of the second cover **2340.**

In FIG. 42 (c), in the first lens driving device **10,** the first terminal unit **1322k** is disposed at a position corresponding to the third lateral plate **1342-3** of the first cover **1340,** and the second terminal unit **1323k** may be disposed at a position corresponding to the fourth lateral plate **1342-4** of the first cover **1340.** In the second lens driving device **20,** the first terminal unit **2322k** is disposed at a position corresponding to the second lateral plate **2342-2** of the second cover **2340,** and the second terminal unit **2323k** may be disposed at a position corresponding to the fourth lateral plate **2342-4** of the second cover **2340.**

In FIG. 42 (d), in the first lens driving device **10,** the first terminal unit **13221** is disposed at a position corresponding to the third lateral plate **1342-3** of the first cover **1340,** and the second terminal unit **13231** may be disposed at a position corresponding to the fourth lateral plate **1342-4** of the first cover **1340.** In the second lens driving device 20, the first terminal unit **23221** is disposed at a position corresponding to the second lateral plate **2342-2** of the second cover **2340,** and the second terminal unit **23231** may be disposed at a position corresponding to the third lateral plate **2342-3** of the second cover **2340.**

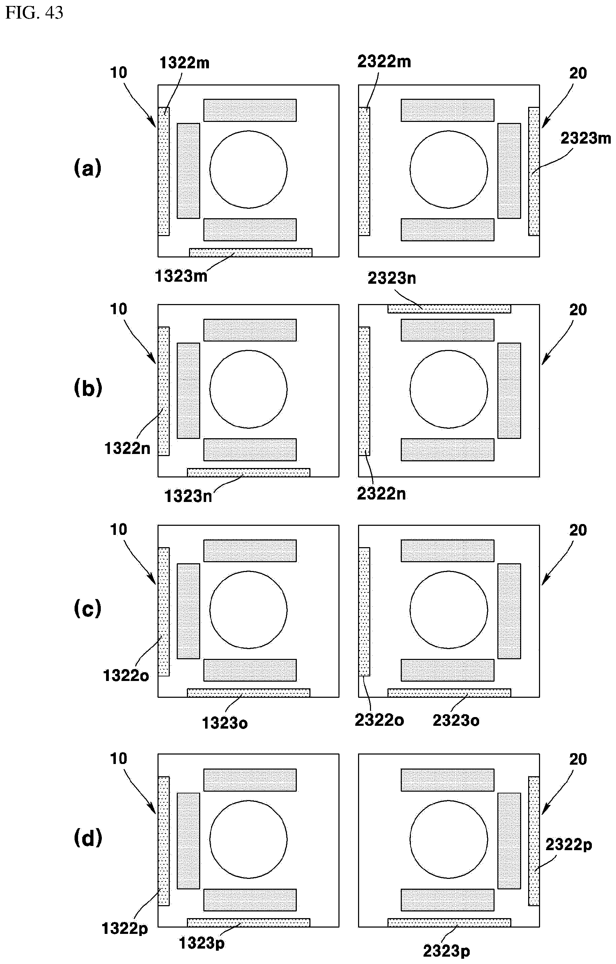

In FIG. 43 (a), in the first lens driving device **10,** the first terminal unit **1322m** is disposed at a position corresponding to the second lateral plate **1342-2** of the first cover **1340,** and the second terminal unit **1323m** may be disposed at a position corresponding to the third lateral plate **1342-3** of the first cover **1340.** In the second lens driving device **20,** the first terminal unit **2322m** is disposed at a position corresponding to the first lateral plate **2342-1** of the second cover **2340,** and the second terminal unit **2323m** may be disposed at a position corresponding to the second lateral plate **2342-2** of the second cover **2340.**

In FIG. 43 (b), in the first lens driving device **10,** the first terminal unit **1322n** is disposed at a position corresponding to the second lateral plate **1342-2** of the first cover **1340,** and the second terminal unit **1323n** may be disposed at a position corresponding to the third lateral plate **1342-3** of the first cover **1340.** In the second lens driving device **20,** the first terminal unit **2322n** is disposed at a position corresponding to the first lateral plate **2342-1** of the second cover **2340,** and the second terminal unit **2323n** may be disposed at a position corresponding to the third lateral plate **2342-3** of the second cover **2340.**

In FIG. 43 (c), in the first lens driving device **10,** the first terminal unit **1322o** is disposed at a position corresponding to the second lateral plate **1342-2** of the first cover **1340,** and the second terminal unit **1323o** may be disposed at a position corresponding to the third lateral plate **1342-3** of the first cover **1340.** In the second lens driving device **20,** the first terminal unit **2322o** is disposed at a position corresponding to the first lateral plate **2342-1** of the second cover **2340,** and the second terminal unit **2323o** may be disposed at a position corresponding to the fourth lateral plate **2342-4** of the second cover **2340.**

In FIG. 43 (d), in the first lens driving device **10,** the first terminal unit **1322p** is disposed at a position corresponding to the second lateral plate **1342-2** of the first cover **1340,** and the second terminal unit **1323p** may be disposed at a position corresponding to the third lateral plate **1342-3** of the first cover **1340.** In the second lens driving device **20,** the first terminal unit **2322p** is disposed at a position corresponding to the second lateral plate **2342-2** of the second cover **2340,** and the second terminal unit **2323p** may be disposed at a position corresponding to the fourth lateral plate **2342-4** of the second cover **2340.**

In FIG. 29 (a), in the first lens driving device 10, the first terminal unit **1322q** is disposed at a position corresponding to the first lateral plate **1342-1** of the first cover **1340,** and the second terminal unit **1323q** may be disposed at a position corresponding to the second lateral plate **1342-2** of the first cover **1340.** In the second lens driving device **20,** the first terminal unit **2322q** is disposed at a position corresponding to the first lateral plate **2342-1** of the second cover **2340,** and the second terminal unit **2323q** may be disposed at a position corresponding to the second lateral plate **2342-2** of the second cover **2340.**

In FIG. 29 (b), in the first lens driving device **10,** the first terminal unit **1322r** is disposed at a position corresponding to the first lateral plate **1342-1** of the first cover **1340,** and the second terminal unit **1323r** may be disposed at a position corresponding to the second lateral plate **1342-2** of the first cover **1340.** In the second lens driving device **20,** the first terminal unit **2322r** is disposed at a position corresponding to the first lateral plate **2342-1** of the second cover **2340,** and the second terminal unit **2323r** may be disposed at a position corresponding to the third lateral plate **2342-3** of the second cover **2340.**

In FIG. 29 (c), in the first lens driving device **10,** the first terminal unit **1322s** is disposed at a position corresponding to the first lateral plate **1342-1** of the first cover **1340,** and the second terminal unit **1323s** may be disposed at a position corresponding to the second lateral plate **1342-2** of the first cover **1340.** In the second lens driving device **20,** the first terminal unit **2322s** is disposed at a position corresponding to the first lateral plate **2342-1** of the second cover **2340,** and the second terminal unit **2323s** may be disposed at a position corresponding to the fourth lateral plate **2342-4** of the second cover **2340.**

In FIG. 29 (d), in the first lens driving device **10,** the first terminal unit **1322t** is disposed at a position corresponding to the first lateral plate **1342-1** of the first cover **1340,** and the second terminal unit **1323t** may be disposed at a position corresponding to the second lateral plate **1342-2** of the first cover **1340.** In the second lens driving device 20, the first terminal unit **2322t** is disposed at a position corresponding to the second lateral plate **2342-2** of the second cover **2340,** and the second terminal unit **2323t** may be disposed at a position corresponding to the fourth lateral plate **2342-4** of the second cover **2340.**

Hereinafter, an optical device according to a second embodiment of the present invention will be described with reference to the drawings

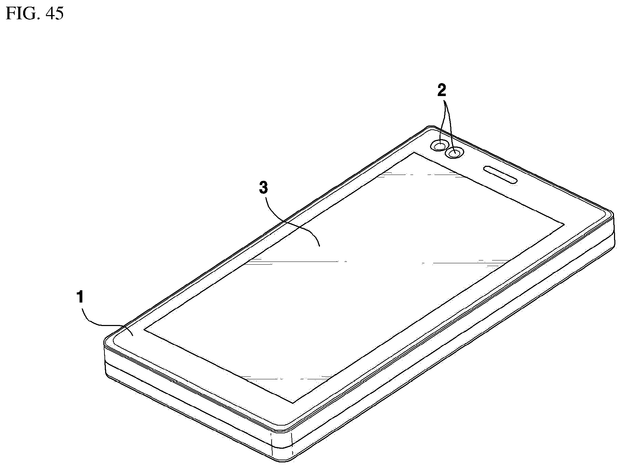

FIG. 45 is a perspective view of an optical device according to a second embodiment of the present embodiment.

Optical devices comprise cell phones, portable phones, smart phones, portable communication devices, portable smart devices, portable terminals, digital cameras, computers, laptop computers, digital broadcasting terminals, personal digital assistants (PDAs), portable multimedia players (PMPs) and navigation. However, the type of optical device is not limited thereto, and any device for photographing a video or photo may be comprised in the optical device.

The optical device may comprise a main body 1. The main body 1 may form the outer appearance of an optical device. The main body 1 can accommodate the camera device 2. A display 3 may be disposed at a first surface of the main body 1. For example, the display 3 and the camera device 2 are disposed at a first surface of the main body 1, and a camera device 2 may be additionally disposed at a second surface at an opposite side of the first surface of the main body 1.

The optical device may comprise a camera device 2. The camera device 2 may be disposed in the main body 1. At least a portion of the camera device 2 may be accommodated inside the main body 1. The camera device 2 may be provided in plurality. The camera device 2 may comprise dual, triple or more camera devices. The camera device 2 may be disposed at each of the first surface of the main body 1 and the second surface at an opposite side of the first surface of the main body 1. The camera device 2 may photograph an image and/or video of a subject.

The optical device may comprise a display 3. The display 3 may be disposed in the main body 1. The display 3 may be disposed at a first surface of the main body 1. The display 3 may output images and/or videos photographed by the camera device 2.

The third embodiment of the present embodiment may comprise some configurations of the first embodiment of the present embodiment and some configurations of the second embodiment of the present embodiment. That is, the third embodiment of the present embodiment may be an embodiment in which some configurations of the first embodiment are replaced with corresponding configurations of the second embodiment. Or, the third embodiment of the present embodiment may be an embodiment in which some configurations of the second embodiment are replaced with corresponding configurations of the first embodiment.

Although the embodiment of the present invention has been described above with reference to the accompanying drawings, those of ordinary skill in the art to which the present invention belongs will understand that the present invention may be embodied in other specific forms without changing the essential features thereof. Therefore, it should be understood that the embodiments described above are illustrative in all respects and not restrictive.

## Claims

1. A camera device, **characterized by**:
a printed circuit board (3030);
a gyro sensor (3050) disposed on a first surface of the printed circuit board (3030); and
a first lens driving device (3010) disposed on the first surface of the printed circuit board (3030),
wherein the first lens driving device (3010) comprises:
a cover member (3340) comprising an upper plate (3341) and a lateral plate (3342) extending from the upper plate (3341);
a bobbin (3110) disposed in the cover member (3340);
a magnet (3220) disposed in the cover member (3340);
a coil configured to move the bobbin (3110); and
a substrate (3320) electrically connected with the coil,
wherein the lateral plate (3342) of the cover member (3340) comprises a first lateral plate (3342-1) and a second lateral plate (3342-2) disposed opposite to each other, and a third lateral plate (3342-3) and a fourth lateral plate (3342-4) disposed opposite to each other,
wherein the gyro sensor (3050) is disposed closest to the first lateral plate (3342-1) among the first to fourth lateral plates (3342-1, 3342-2, 3342-3, 3342-4),
wherein the substrate (3320) comprises a first terminal unit (3322) comprising a plurality of terminals electrically connected with the printed circuit board (3030),
wherein the first terminal unit (3322) of the substrate (3320) is disposed at a position corresponding with the first lateral plate (3342-1) of the cover member (3340),
wherein the plurality of terminals of the first terminal unit (3322) are overlapped with each other in a direction parallel to the first lateral plate (3342-1) of the cover member (3340).

2. The camera device of claim 1, wherein the first lens driving device (3010) comprises a base (3310) coupled with the lateral plate (3342) of the cover member (3340) and a housing (3210) disposed between the bobbin (3110) and the cover member (3340), and
wherein the substrate (3320) is disposed on the base (3310).

3. The camera device of claim 1 or 2, wherein the first terminal unit (3322) is not overlapped with the gyro sensor (3050) in a direction in which the second lateral plate (3342-2) faces the first lateral plate (3342-1), and
wherein when viewed from above, the first terminal unit (3322) is hidden by the cover member (3340) and is not visible.

4. The camera device of any one of claims 1 to 3, wherein the substrate (3320) comprises a second terminal unit (3323) disposed at an opposite side of the first terminal unit (3322), and
wherein the second terminal unit (3323) of the substrate (3320) is disposed at a position corresponding with the second lateral plate (3342-2) of the cover member (3340).

5. The camera device of claim 4, wherein a length of the first terminal unit (3322) is shorter than a length of the second terminal unit (3323) in a direction in which the third lateral plate (3342-3) faces the fourth lateral plate (3342-4).

6. The camera device of claim 5, wherein seven or less terminals are disposed on the first terminal unit (3322), and
wherein ten or more terminals are disposed on the second terminal unit (3323).

7. The camera device of any one of claims 1 to 6, wherein the first lateral plate (3342-1) of the cover member (3340) comprises a first region close to one corner among both side corners, and a second region close to the other corner among the both side corners,
wherein the first terminal unit (3322) is disposed at a position corresponding to the first region of the first lateral plate (3342-1), and
wherein the gyro sensor (3050) is disposed at a position corresponding to the second region of the first lateral plate (3342-1).

8. The camera device of any one of claims 1 to 7, wherein the first terminal unit (3322) of the substrate (3320) is omitted at a position corresponding to the gyro sensor (3050).

9. The camera device of claim 2, wherein the gyro sensor (3050) is spaced apart from the cover member (3340), the base (3310), and the substrate (3320).

10. The camera device of any one of claims 1 to 9, wherein the first terminal unit (3322) of the substrate (3320) is disposed closest to the first lateral plate (3342-1) among the first to fourth lateral plates (3342-1, 3342-2, 3342-3, 3342-4).

11. The camera device of any one of claims 1 to 10, wherein the coil comprises a first coil (3120) configured to move the bobbin (3110) in an optical axis direction and a second coil (3330) configured to move the bobbin (3110) in a direction perpendicular to the optical axis direction.

12. The camera device of any one of claims 1 to 11, comprising a second lens driving device (3020) disposed on the first surface of the printed circuit board (3030),
wherein the second lens driving device (3020) is disposed closest to the third lateral plate (3342-3) among the first to fourth lateral plates (3342-1, 3342-2, 3342-3, 3342-4).

13. The camera device of claim 12, wherein the first lens driving device (3010) comprises a dummy member (3230) disposed at a position corresponding to the third lateral plate (3342-3),
wherein the magnet (3220) comprises a first magnet (3221) disposed at a position corresponding to the first lateral plate (3342-1), a second magnet (3222) disposed at a position corresponding to the second lateral plate (3342-2), and a third magnet (3223) disposed at a position corresponding to the fourth lateral plate (3342-4), and
wherein the dummy member (3230) has a weight corresponding with the third magnet (3223) and has a magnetic force weaker than the third magnet (3223) or no magnetic force.

14. The camera device of any one of claims 1 to 13, comprising:
an image sensor disposed on the printed circuit board (3030); and
a lens (3041) coupled to the bobbin (3110).

15. An optical device comprising:
a main body (3001);
the camera device (3002) of any one of claims 1 to 14 disposed on the main body (3001); and
a display (3003) disposed on the main body (3001) and configured to output an image by the camera device (3002).

## Patentansprüche

1. Kameravorrichtung, **gekennzeichnet durch**:
eine Leiterplatte (3030);
einen Gyrosensor (3050), der auf einer ersten Oberfläche der Leiterplatte (3030) angeordnet ist; und
eine erste Linsenantriebsvorrichtung (3010), die auf der ersten Oberfläche der
Leiterplatte (3030) angeordnet ist,
wobei die erste Linsenantriebsvorrichtung (3010) umfasst:
ein Abdeckelement (3340), das eine obere Platte (3341) und eine Seitenplatte (3342) umfasst, die sich von der oberen Platte (3341) erstreckt;
einen Spulenträger (3110), der in dem Abdeckelement (3340) angeordnet ist;
einen Magneten (3220), der in dem Abdeckelement (3340) angeordnet ist;
eine Spule, die konfiguriert ist, um den Spulenträger (3110) zu bewegen; und
ein Substrat (3320), das mit der Spule elektrisch verbunden ist,
wobei die Seitenplatte (3342) des Abdeckelements (3340) eine erste Seitenplatte (3342-1) und eine zweite Seitenplatte (3342-2) umfasst, die einander gegenüberliegend angeordnet sind, und eine dritte Seitenplatte (3342-3) und eine vierte Seitenplatte (3342-4) umfasst, die einander gegenüberliegend angeordnet sind,
wobei der Gyrosensor (3050) am nächsten an der ersten Seitenplatte (3342-1) unter den ersten bis vierten Seitenplatten (3342-1, 3342-2, 3342-3, 3342-4) angeordnet ist,
wobei das Substrat (3320) eine erste Anschlusseinheit (3322) umfasst, die eine Vielzahl von Anschlüssen umfasst, die mit der Leiterplatte (3030) elektrisch verbunden sind, wobei die erste Anschlusseinheit (3322) des Substrats (3320) an einer Position angeordnet ist, die der ersten Seitenplatte (3342-1) des Abdeckelements (3340) entspricht,
wobei die Vielzahl von Anschlüssen der ersten Anschlusseinheit (3322) einander in einer Richtung parallel zur ersten Seitenplatte (3342-1) des Abdeckelements (3340) überlappen.

2. Kameravorrichtung nach Anspruch 1, wobei die erste Linsenantriebsvorrichtung (3010) eine Basis (3310), die mit der Seitenplatte (3342) des Abdeckelements (3340) gekoppelt ist, und ein Gehäuse (3210) umfasst, das zwischen dem Spulenträger (3110) und dem Abdeckelement (3340) angeordnet ist, und
wobei das Substrat (3320) auf der Basis (3310) angeordnet ist.

3. Kameravorrichtung nach Anspruch 1 oder 2, wobei die erste Anschlusseinheit (3322) den Gyrosensor (3050) in einer Richtung, in der die zweite Seitenplatte (3342-2) der ersten Seitenplatte (3342-1) zugewandt ist, nicht überlappt, und
wobei in der Draufsicht die erste Anschlusseinheit (3322) durch das Abdeckelement (3340) verdeckt ist und nicht sichtbar ist.

4. Kameravorrichtung nach einem der Ansprüche 1 bis 3, wobei das Substrat (3320) eine zweite Anschlusseinheit (3323) umfasst, die an einer entgegengesetzten Seite der ersten Anschlusseinheit (3322) angeordnet ist, und
wobei die zweite Anschlusseinheit (3323) des Substrats (3320) an einer Position angeordnet ist, die der zweiten Seitenplatte (3342-2) des Abdeckelements (3340) entspricht.

5. Kameravorrichtung nach Anspruch 4, wobei eine Länge der ersten Anschlusseinheit (3322) in einer Richtung, in der die dritte Seitenplatte (3342-3) der vierten Seitenplatte (3342-4) zugewandt ist, kürzer ist als eine Länge der zweiten Anschlusseinheit (3323).

6. Kameravorrichtung nach Anspruch 5, wobei sieben oder weniger Anschlüsse auf der ersten Anschlusseinheit (3322) angeordnet sind, und
wobei zehn oder mehr Anschlüsse auf der zweiten Anschlusseinheit (3323) angeordnet sind.

7. Kameravorrichtung nach einem der Ansprüche 1 bis 6, wobei die erste Seitenplatte (3342-1) des Abdeckelements (3340) einen ersten Bereich nahe an einer Ecke von beiden Seitenecken und einen zweiten Bereich nahe an der anderen Ecke von den beiden Seitenecken umfasst,
wobei die erste Anschlusseinheit (3322) an einer Position angeordnet ist, die dem ersten Bereich der ersten Seitenplatte (3342-1) entspricht, und
wobei der Gyrosensor (3050) an einer Position angeordnet ist, die dem zweiten Bereich der ersten Seitenplatte (3342-1) entspricht.

8. Kameravorrichtung nach einem der Ansprüche 1 bis 7, wobei die erste Anschlusseinheit (3322) des Substrats (3320) an einer dem Gyrosensor (3050) entsprechenden Position weggelassen ist.

9. Kameravorrichtung nach Anspruch 2, wobei der Gyrosensor (3050) von dem Abdeckelement (3340), der Basis (3310) und dem Substrat (3320) beabstandet ist.

10. Kameravorrichtung nach einem der Ansprüche 1 bis 9, wobei die erste Anschlusseinheit (3322) des Substrats (3320) am nächsten an der ersten Seitenplatte (3342-1) unter den ersten bis vierten Seitenplatten (3342-1, 3342-2, 3342-3, 3342-4) angeordnet ist.

11. Kameravorrichtung nach einem der Ansprüche 1 bis 10, wobei die Spule eine erste Spule (3120), die konfiguriert ist, um den Spulenträger (3110) in einer optischen Achsenrichtung zu bewegen, und eine zweite Spule (3330) umfasst, die konfiguriert ist, um den Spulenträger (3110) in einer Richtung senkrecht zur optischen Achsenrichtung zu bewegen.

12. Kameravorrichtung nach einem der Ansprüche 1 bis 11, umfassend eine zweite Linsenantriebsvorrichtung (3020), die auf der ersten Oberfläche der Leiterplatte (3030) angeordnet ist,
wobei die zweite Linsenantriebsvorrichtung (3020) am nächsten an der dritten Seitenplatte (3342-3) unter den ersten bis vierten Seitenplatten (3342-1, 3342-2, 3342-3, 3342-4) angeordnet ist.

13. Kameravorrichtung nach Anspruch 12, wobei die erste Linsenantriebsvorrichtung (3010) ein Dummy-Element (3230) umfasst, das an einer Position angeordnet ist, die der dritten Seitenplatte (3342-3) entspricht,
wobei der Magnet (3220) einen ersten Magneten (3221), der an einer Position angeordnet ist, die der ersten Seitenplatte (3342-1) entspricht, einen zweiten Magneten (3222), der an einer Position angeordnet ist, die der zweiten Seitenplatte (3342-2) entspricht, und einen dritten Magneten (3223) umfasst, der an einer Position angeordnet ist, die der vierten Seitenplatte (3342-4) entspricht, und
wobei das Dummy-Element (3230) ein dem dritten Magneten (3223) entsprechendes Gewicht aufweist und eine Magnetkraft aufweist, die schwächer ist als die des dritten Magneten (3223), oder keine Magnetkraft aufweist.

14. Kameravorrichtung nach einem der Ansprüche 1 bis 13, umfassend:
einen Bildsensor, der auf der Leiterplatte (3030) angeordnet ist; und
eine Linse (3041), die mit dem Spulenträger (3110) gekoppelt ist.

15. Optische Vorrichtung, umfassend:
einen Hauptkörper (3001);
die Kameravorrichtung (3002) nach einem der Ansprüche 1 bis 14, die auf dem Hauptkörper (3001) angeordnet ist; und
eine Anzeige (3003), die auf dem Hauptkörper (3001) angeordnet und konfiguriert ist, um ein Bild von der Kameravorrichtung (3002) auszugeben.

## Revendications

1. Dispositif de caméra, **caractérisé par** :
une carte de circuit imprimé (3030) ;
un capteur gyroscopique (3050) disposé sur une première surface de la carte de circuit imprimé (3030) ; et
un premier dispositif d'entraînement de lentille (3010) disposé sur la première surface de la carte de circuit imprimé (3030),
dans lequel le premier dispositif d'entraînement de lentille (3010) comprend :
un élément de couvercle (3340) comprenant une plaque supérieure (3341) et une plaque latérale (3342) s'étendant depuis la plaque supérieure (3341) ;
un corps de bobine (3110) disposé dans l'élément de couvercle (3340) ;
un aimant (3220) disposé dans l'élément de couvercle (3340) ;
une bobine configurée pour déplacer le corps de bobine (3110) ; et
un substrat (3320) connecté électriquement à la bobine,
dans lequel la plaque latérale (3342) de l'élément de couvercle (3340) comprend une première plaque latérale (3342-1) et une deuxième plaque latérale (3342-2) disposées à l'opposé l'une de l'autre, et une troisième plaque latérale (3342-3) et une quatrième plaque latérale (3342-4) disposées à l'opposé l'une de l'autre,
dans lequel le capteur gyroscopique (3050) est disposé le plus près de la première plaque latérale (3342-1) parmi les première à quatrième plaques latérales (3342-1, 3342-2, 3342-3, 3342-4),
dans lequel le substrat (3320) comprend une première unité de bornes (3322) comprenant une pluralité de bornes connectées électriquement à la carte de circuit imprimé (3030),
dans lequel la première unité de bornes (3322) du substrat (3320) est disposée à une position correspondant à la première plaque latérale (3342-1) de l'élément de couvercle (3340),
dans lequel la pluralité de bornes de la première unité de bornes (3322) se chevauchent mutuellement dans une direction parallèle à la première plaque latérale (3342-1) de l'élément de couvercle (3340).

2. Dispositif de caméra selon la revendication 1, dans lequel le premier dispositif d'entraînement de lentille (3010) comprend une base (3310) couplée à la plaque latérale (3342) de l'élément de couvercle (3340) et un boîtier (3210) disposé entre le corps de bobine (3110) et l'élément de couvercle (3340), et
dans lequel le substrat (3320) est disposé sur la base (3310).

3. Dispositif de caméra selon la revendication 1 ou 2, dans lequel la première unité de bornes (3322) ne chevauche pas le capteur gyroscopique (3050) dans une direction dans laquelle la deuxième plaque latérale (3342-2) fait face à la première plaque latérale (3342-1), et
dans lequel, lorsqu'elle est vue d'en haut, la première unité de bornes (3322) est masquée par l'élément de couvercle (3340) et n'est pas visible.

4. Dispositif de caméra selon l'une quelconque des revendications 1 à 3, dans lequel le substrat (3320) comprend une seconde unité de bornes (3323) disposée au niveau d'un côté opposé de la première unité de bornes (3322), et
dans lequel la seconde unité de bornes (3323) du substrat (3320) est disposée à une position correspondant à la deuxième plaque latérale (3342-2) de l'élément de couvercle (3340).

5. Dispositif de caméra selon la revendication 4, dans lequel une longueur de la première unité de bornes (3322) est plus courte qu'une longueur de la seconde unité de bornes (3323) dans une direction dans laquelle la troisième plaque latérale (3342-3) fait face à la quatrième plaque latérale (3342-4).

6. Dispositif de caméra selon la revendication 5, dans lequel sept bornes ou moins sont disposées sur la première unité de bornes (3322), et
dans lequel dix bornes ou plus sont disposées sur la seconde unité de bornes (3323).

7. Dispositif de caméra selon l'une quelconque des revendications 1 à 6, dans lequel la première plaque latérale (3342-1) de l'élément de couvercle (3340) comprend une première région proche d'un coin parmi les deux coins latéraux, et une seconde région proche de l'autre coin parmi les deux coins latéraux,
dans lequel la première unité de bornes (3322) est disposée à une position correspondant à la première région de la première plaque latérale (3342-1), et
dans lequel le capteur gyroscopique (3050) est disposé à une position correspondant à la seconde région de la première plaque latérale (3342-1).

8. Dispositif de caméra selon l'une quelconque des revendications 1 à 7, dans lequel la première unité de bornes (3322) du substrat (3320) est omise à une position correspondant au capteur gyroscopique (3050).

9. Dispositif de caméra selon la revendication 2, dans lequel le capteur gyroscopique (3050) est espacé de l'élément de couvercle (3340), de la base (3310) et du substrat (3320).

10. Dispositif de caméra selon l'une quelconque des revendications 1 à 9, dans lequel la première unité de bornes (3322) du substrat (3320) est disposée le plus près de la première plaque latérale (3342-1) parmi les première à quatrième plaques latérales (3342-1, 3342-2, 3342-3, 3342-4).

11. Dispositif de caméra selon l'une quelconque des revendications 1 à 10, dans lequel la bobine comprend une première bobine (3120) configurée pour déplacer le corps de bobine (3110) dans une direction d'axe optique et une seconde bobine (3330) configurée pour déplacer le corps de bobine (3110) dans une direction perpendiculaire à la direction d'axe optique.

12. Dispositif de caméra selon l'une quelconque des revendications 1 à 11, comprenant un second dispositif d'entraînement de lentille (3020) disposé sur la première surface de la carte de circuit imprimé (3030),
dans lequel le second dispositif d'entraînement de lentille (3020) est disposé le plus près de la troisième plaque latérale (3342-3) parmi les première à quatrième plaques latérales (3342-1, 3342-2, 3342-3, 3342-4).

13. Dispositif de caméra selon la revendication 12, dans lequel le premier dispositif d'entraînement de lentille (3010) comprend un élément factice (3230) disposé à une position correspondant à la troisième plaque latérale (3342-3),
dans lequel l'aimant (3220) comprend un premier aimant (3221) disposé à une position correspondant à la première plaque latérale (3342-1), un deuxième aimant (3222) disposé à une position correspondant à la deuxième plaque latérale (3342-2), et un troisième aimant (3223) disposé à une position correspondant à la quatrième plaque latérale (3342-4), et
dans lequel l'élément factice (3230) a un poids correspondant au troisième aimant (3223) et a une force magnétique plus faible que le troisième aimant (3223) ou n'a aucune force magnétique.

14. Dispositif de caméra selon l'une quelconque des revendications 1 à 13, comprenant :
un capteur d'image disposé sur la carte de circuit imprimé (3030) ; et
une lentille (3041) couplée au corps de bobine (3110).

15. Dispositif optique comprenant :
un corps principal (3001) ;
le dispositif de caméra (3002) selon l'une quelconque des revendications 1 à 14 disposé sur le corps principal (3001) ; et
un dispositif d'affichage (3003) disposé sur le corps principal (3001) et configuré pour fournir en sortie une image par le dispositif de caméra (3002).
